# EUROPÄISCHE PATENTSCHRIFT

(11) **EP 0 716 671 B1**
(45) Veröffentlichungstag und Bekanntmachung des Hinweises auf die Patenterteilung: **12.02.1997**
(21) Anmeldenummer: 94926889.0
(22) Anmeldetag: 25.08.1994
(51) Int. Cl.: C09B 67/22, D06P 1/00

(54) **FARBSTOFFMISCHUNGEN, ENTHALTEND GLEICHFARBIGE AZOFARBSTOFFE MIT EINER KUPPLUNGSKOMPONENTE AUS DER DIAMINOPYRIDINREIHE**
DYE MIXTURES CONTAINING AZO DYES HAVING THE SAME COLOUR AND A COUPLING COMPONENT FROM THE DIAMINOPYRIDINE SERIES
MELANGES DE COLORANTS CONTENANT DES COLORANTS AZOIQUES DE MEME COULEUR ET UN COMPOSANT COPULANT DE LA SERIE DES DIAMINOPYRIDINES

(30) Priorität: 04.09.1993 DE 4329915
(43) Veröffentlichungstag der Anmeldung: 19.06.1996
(73) Patentinhaber: BASF AKTIENGESELLSCHAFT, 67056 Ludwigshafen (DE)
(72) Erfinder: LAMM, Gunther, D-67454 Hassloch (DE); LOEFFLER, Hermann, D-67346 Speyer (DE); REICHELT, Helmut, D-67435 Neustadt (DE)
(86) Internationale Anmeldenummer: EP9402823
(87) Internationale Veröffentlichungsnummer: WO9507318

(56) Entgegenhaltungen:
- EP-A- 0 548 715
- EP-A- 0 569 785
- PATENT ABSTRACTS OF JAPAN, unexamined applications, C Field, Band 17, Nr. 327, ver!ffentlicht 1993, 22. Juni THE PATENT OFFICE JAPANESE GOVERNMENT Seite 123 C 1073; & JP-A-05 32 913 (MITSUBISHI KASEI HOECHST)
- PATENT ABSTRACTS OF JAPAN, Unexamined Applications, C Field, Band 17, Nr. 327, 22. Juni 1993, Seite 123 C 1073

## Beschreibung

Die vorliegende Erfindung betrifft neue Farbstoffmischungen, enthaltend mindestens 4 gleichfarbige Farbstoffe der Formeln Ia und Ib 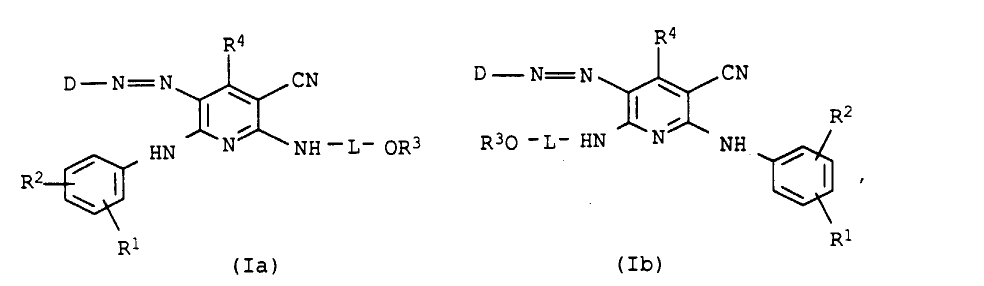 worin
- D: für den Rest einer Diazokomponente aus der Aminoanthrachinon-, Anilin-, Aminothiophen-, Aminothiazol-, Aminoisothiazol-, Aminothiadiazol- oder Aminobenzisothiazolreihe,
- L: für C₂-C₈-Alkylen, das gegebenenfalls durch 1 oder 2 Sauerstoffatome in Etherfunktion unterbrochen ist,
- R¹ und R²: unabhängig voneinander jeweils für Wasserstoff, C₁-C₄-Alkyl, C₁-C₄-Alkoxy oder Halogen,
- R³: für Wasserstoff, C₁-C₄-Alkyl oder C₁-C₃-Alkanoyl und
- R⁴: für Wasserstoff oder C₁-C₄-Alkyl
stehen,
sowie deren Verwendung zum Färben oder Bedrucken von textilen Materialien.

Aus der EP-A-548 715 sowie der JP-A-32913/1993 sind Farbstoffmischungen bekannt, die ähnliche Mischungspartner aufweisen.

Es hat sich jedoch gezeigt, daß die Farbstoffe des Standes der Technik noch Mangel in ihren anwendungstechnischen Eigenschaften aufweisen. Dabei sind insbesondere eine starke Temperaturabhängigkeit des Aufziehverhaltens der Farbstoffe sowie ein ungenügender Aufziehgrad zu nennen.

Aufgabe der vorliegenden Erfindung war es nur, neue Farbstoffgemische bereitzustellen, die frei von den obengenannten Mangeln sind.

Demgemäß wurden die eingangs naher bezeichneten Farbstoffmischungen gefunden.

Alle in den Farbstoffkomponenten der obengenannten Farbstoffmischungen auftretenden Alkyl- und Alkylengruppen können sowohl geradkettig als auch verzweigt sein.

Wenn in den Farbstoffkomponenten substituierte Alkylgruppen auftreten, so weisen diese in der Regel 1 oder 2 Substituenten auf.

Wenn in den Farbstoffkomponenten substituierte Phenylgruppen auftreten, so weisen diese, sofern nichts anderes vermerkt, in der Regel 1 bis 3, vorzugsweise 1 oder 2, Substituenten auf.

Bevorzugt sind erfindungsgemäße Farbstoffmischungen, in denen D für Anthrachinon-1-yl oder einen Rest der Formel 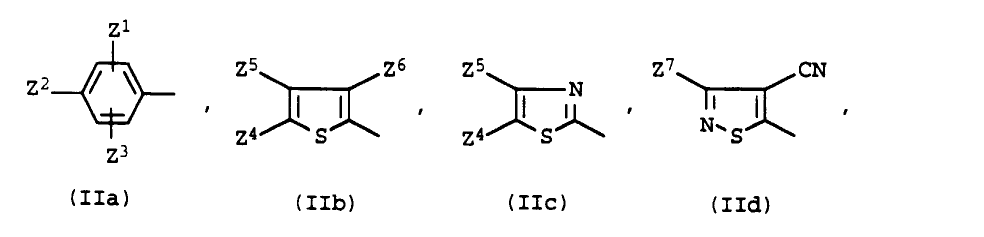 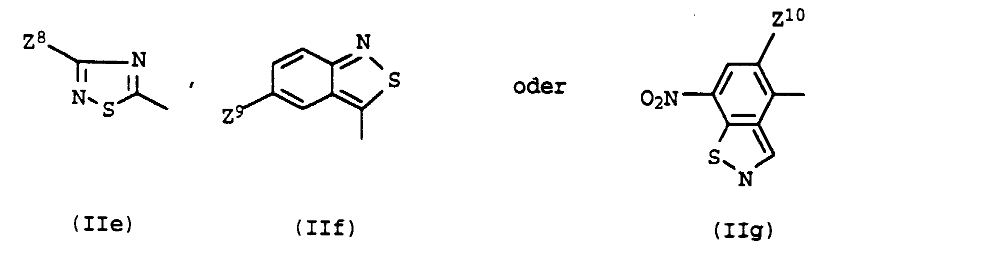 steht, worin
- Z¹: Wasserstoff, Nitro, Cyano, Chlor, Brom, C₁-C₄-Alkoxycarbonyl, Phenylsulfonyl, Phenoxysulfonyl oder C₁-C₄-Dialkylsulfamoyl,
- Z²: Wasserstoff, Nitro oder gegebenenfalls durch C₁-C₄-Alkyl, C₁-C₄-Alkoxy oder Chlor substituiertes Phenylazo,
- Z³: Wasserstoff, Cyano, Chlor, Brom, C₁-C₄-Alkoxycarbonyl, Phenylsulfonyl, Phenoxysulfonyl oder C₁-C₄-Dialkylsulfamoyl,
- Z⁴: Cyano, Formyl, C₁-C₄-Alkoxycarbonyl, Phenylcarbamoyl, gegebenenfalls durch C₁-C₄-Alkyl substituiertes Phenylazo oder einen Rest der Formel 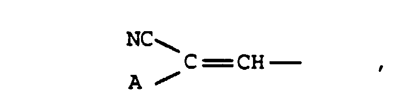 worin A die Bedeutung
von Cyano oder C₁-C₄-Alkoxycarbonyl besitzt,
- Z⁵: Wasserstoff, C₁-C₄-Alkyl, C₁-C₄-Alkoxy, Phenyl, das gegebenenfalls durch Methyl, Methoxy, Chlor oder C₁-C₄-Alkoxycarbonyl substituiert ist, Chlor, Brom, C₁-C₄-Alkoxycarbonyl oder Z⁴ und Z⁵ zusammen einen gegebenenfalls durch Methoxy, Thiocyanato oder C₁-C₄-Alkylsulfonyl substituierten Benzorest,
- Z⁶: Cyano oder C₁-C₄-Alkoxycarbonyl,
- Z⁷: C₁-C₄-Alkyl, das gegebenenfalls durch C₁-C₄-Alkoxy oder Phenoxy substituiert ist, Phenyl, das gegebenenfalls durch Methyl, Methoxy oder Chlor substituiert ist, Benzyl, das gegebenenfalls durch Methyl, Methoxy oder Chlor substituiert ist, Thienyl oder Cyano,
- Z⁸: Phenyl oder durch Cyano oder C₁-C₄-Alkoxycarbonyl substituiertes Ethylthio,
- Z⁹: Wasserstoff, Nitro oder Cyano und
- Z¹⁰: Wasserstoff, Chlor, Brom, Nitro oder Cyano bedeuten.
Wenn D einen Rest der Formel IIa bedeutet, sind solche Farbstoffe bevorzugt, in denen mindestens einer der Reste Z¹, Z² und Z³ von Wasserstoff verschieden ist.

Reste R¹, R², R³, R⁴, Z⁵ und Z⁷ sind z.B. Methyl, Ethyl, Propyl, Isopropyl, Butyl, Isobutyl oder sec-Butyl.

Reste Z¹, Z³, Z⁴, Z⁶, Z⁸ und A sind, wie weiterhin auch der Rest Z⁵, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste Z¹ und Z³ sind weiterhin z.B. Dimethylsulfamoyl, Diethylsulfamoyl, Dipropylsulfamoyl, Diisopropylsulfamoyl oder Dibutylsulfamoyl.

Reste R³ sind weiterhin z.B. Formyl, Acetyl oder Propionyl.

Reste R¹, R² und Z⁵ sind weiterhin z.B. Methoxy, Ethoxy, Propoxy, Isopropoxy, Butoxy, Isobutoxy oder sec-Butoxy.

Reste R¹ und R² sind weiterhin z.B. Fluor, Chlor oder Brom.

Reste Z⁵ und Z⁷ sind weiterhin z.B. Phenyl, 2-, 3- oder 4-Methylphenyl, 2,4-Dimethylphenyl, 2-, 3- oder 4-Methoxyphenyl, 2,4-Dimethoxyphenyl, 2-, 3- oder 4-Chlorphenyl, 2,4-Dichlorphenyl, 2-Methyl-4-chlorphenyl, 2-Methyl-4-methoxyphenyl.

Reste Z⁷ sind weiterhin z.B. Benzyl, 2-, 3- oder 4-Methylbenzyl, 2-, 3- oder 4-Methoxybenzyl, 2-, 3- oder 4-Chlorbenzyl, Methoxymethyl, Ethoxymethyl, Phenoxymethyl, 2-Methoxyethyl, 2-Ethoxyethyl oder 2-Phenoxyethyl.

Reste Z⁴ sind weiterhin z.B. Phenylazo oder 2-, 3- oder 4-Methylphenylazo.

Reste Z⁸ sind z.B. 2-Cyanoethylthio, 2-Methoxycarbonylethylthio oder 2-Ethoxycarbonylethylthio.

Reste L sind z.B. (CH₂)₂, (CH₂)₃, (CH₂)₄, (CH₂)₅, (CH₂)₆, (CH₂)₇, (CH₂)₈, CH(CH₃)CH₂, CH(CH₃)CH(CH)₃, (CH₂)₂O(CH₂)₂, (CH₂)₂O(CH₂)₃, (CH₂)₃O(CH₂)₃, (CH₂)₃O(CH₂)₄, (CH₂)₄O(CH₂)₄, CH(CH₃)CH₂OCH₂CH(CH₃) oder (CH₂)₂O(CH₂)₂O(CH₂)₂.

Bevorzugt sind weiterhin erfindungsgemaße Farbstoffmischungen, enthaltend 4 bis 8 gleichfarbige Farbstoffe der Formeln Ia und Ib.

Bevorzugt sind weiterhin erfindungsgemlße Farbstoffmischungen, enthaltend stets Farbstoffe der Formeln Ia und Ib, worin R³ in beiden Formeln gleichzeitig Wasserstoff und C₁-C₃-Alkanoyl bedeutet.

Bevorzugt sind weiterhin erfindungsgemäße Farbstoffmischungen, in denen R⁴ für Methyl steht.

Besonders bevorzugt sind erfindungsgemäße Farbstoffmischungen, in denen D für Anthrachinon-1-yl oder einen Rest der Formel IIa, IIb, IIc oder IId steht.

Besonders bevorzugt sind weiterhin erfindungsgemäße Farbstoffmischungen, in denen R³ Wasserstoff, C₁-C₄-Alkyl oder C₁-C₂-Alkanoyl und L C₃-C₈-Alkylen, das durch 1 oder 2 Sauerstoffatome in Etherfunktion unterbrochen ist, bedeuten.

Ganz besonders bevorzugt sind erfindungsgemäße Farbstoffmischungen, wobei L einen Rest der Formel (CH₂)₂, (CH₂)₃, (CH₂)₂O(CH₂)₂, (CH₂)₂O(CH₂)₃, (CH₂)₃O(CH₂)₃, (CH₂)₃O(CH₂)₄ oder (CH₂)₃O(CH₂)₂O(CH₂)₂ bedeutet.

Ganz besonders bevorzugt sind weiterhin erfindungsgemäße Farbstoffmischungen, wobei R³ Wasserstoff, C₁-C₂-Alkyl oder Formyl bedeutet.

Ganz besonders bevorzugt sind weiterhin erfindungsgemäße Farbstoffmischungen, wobei R³ für Formyl oder ein Gemisch aus Formyl und Acetyl im Molverhältnis 1:9 bis 9:1 steht.

Bevorzugt sind Farbstoffmischungen, die, jeweils bezogen auf das Gewicht der Farbstoffe, 10 bis 35 Gew.-%, vorzugsweise 15 bis 30 Gew.-%, eines oder mehrerer Farbstoffe der Formel Ia und 65 bis 90 Gew.-%, vorzugsweise 70 bis 85 Gew.-%, eines oder mehrerer Farbstoffe der Formel Ib aufweisen.

Wenn R³ in beiden Formeln Ia und Ib gleichzeitig Wasserstoff und C₁-C₃-Alkanoyl bedeutet, so sind solche Mischungen bevorzugt, die jeweils bezogen auf das Gewicht der Farbstoffe, 50 bis 96 Gew.-%, vorzugsweise 75 bis 85 Gew.-%, Farbstoffe der Formeln Ia und Ib, worin R³ jeweils C₁-C₃-Alkanoyl bedeutet, und 4 bis 50 Gew.-%, vorzugsweise 15 bis 25 Gew.-%, Farbstoffe der Formeln Ia und Ib, worin R³ jeweils Wasserstoff bedeutet, aufweisen.

Die neuen Farbstoffmischungen können vorteilhaft erhalten werden, wenn man eine Mischung der Kupplungskomponenten der Formel IIIa und IIIb 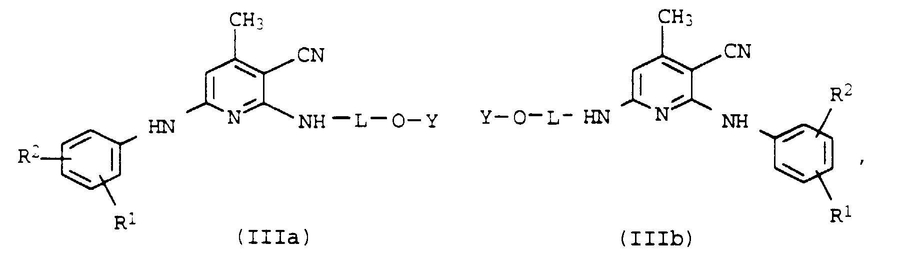 worin L, R¹ und R² jeweils die obengenannte Bedeutung besitzen und Y jeweils Wasserstoff oder C₁-C₄-Alkyl, vorzugsweise jeweils Wasserstoff oder in beiden Formeln gleichzeitig Wasserstoff und C₁-C₄-Alkyl bedeutet, in gegebenenfalls jeweils Wasser enthaltender Ameisensäure, Essigsäure, Propionsäure oder deren Mischungen löst und dieses Gemisch mit einem Diazoniumsalz behandelt, das sich von einem Amin der Formel IV

D - NH₂ (IV)

ableitet, worin D die obengenannte Bedeutung besitzt.

Bei der Lösung der Kupplungskomponenten in den genannten Carbonsäuren findet eine Teilveresterung der freien Hydroxygruppen statt.

Abhängig von der Empfindlichkeit des Diazoniumsalzes kann einerseits die Lösung der Komponenten IIIa und IIIb in den genannten Carbonsäuren in die (auf Eis und Wasser ausgerührte) Diazoniumsalzlösung gegeben werden, wobei die Kupplungsreaktion durch Zusatz von Basen, z.B. Natronlauge oder Natriumacetat oder -formiat, beschleunigt werden kann, oder es kann andererseits die Diazoniumsalzlösung zum gekühlten Gemisch der Kupplungskomponenten gegeben werden, wobei durch Zusatz von Basen ein pH-Wert von ca. 0 bis 2 einzustellen ist.

Bevorzugt werden die Kupplungskomponenten in Ameisensäure, Essigsäure oder deren Gemisch gelöst.

Besonders bevorzugt werden die Kupplungskomponenten in Ameisensäure, insbesondere in 50 bis 99 gew.-%iger Ameisensäure, gelöst.

Bei den Gemischen der Kupplungskomponenten IIIa und IIIb handelt es sich in der Regel um an sich bekannte Verbindungen. Sie können beispielsweise gemäß dem in der DE-A-4 142 192 beschriebenen Methoden erhalten werden.

Die neuen Farbstoffmischungen eignen sich in vorteilhafter Weise zum Färben oder Bedrucken von textilen Materialien. Dies sind z.B. Fasern oder Gewebe, insbesondere aus Polyestern, daneben auch aus Celluloseestern oder Polyamiden, oder Mischgewebe aus Polyestern und Cellulosefasern oder Wolle.

Die erfindungsgemäßen Farbstoffmischungen zeigen praktisch keine Temperaturabhängigkeit des Aufziehverhaltens der Farbstoffe. Außerdem weisen sie einen hohen Aufziehgrad auf.

Die folgenden Beispiele sollen die Erfindung naher erlautern. Die Prozentangaben bezüglich der Zusammensetzung der Farbstoffmischungen sind Gewichtsprozente.

### Beispiel 1

163 g 2-Amino-5-nitrobenzonitril wurden mit 305 g Nitrosylschwefelsäure auf an sich bekannte Weise schwefelsauer diazotiert. Das Reaktionsgemisch wurde in 2500 g Eis gegeben und überschüssige salpetrige Säure mittels Amidosulfonsaure zerstört. Die resultierende Lösung ließ man unter Rühren in eine gekühlte Mischung aus 265,2 g der Kupplungskomponente der Formel 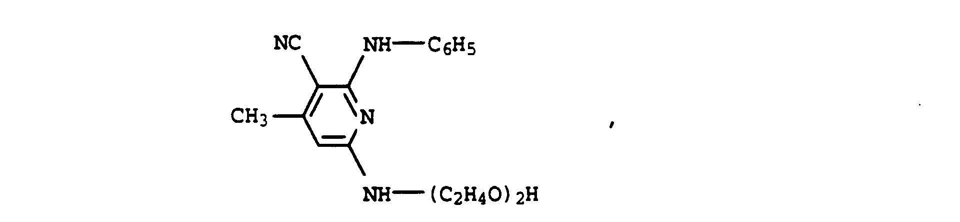 46,8 g der Kupplungskomponente der Formel 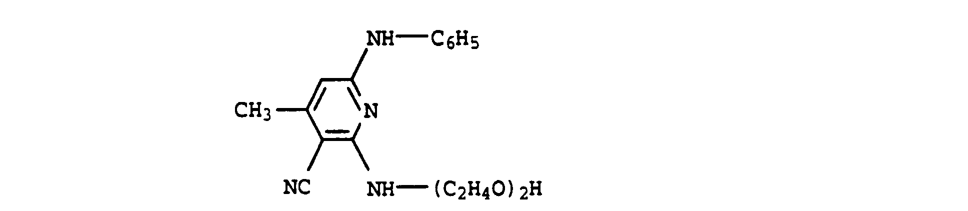 sowie 700 ml 85 gew.-%ige Ameisensäure einlaufen, wobei die Mischung vorher über Nacht gerührt wurde. Anschließend gab man in der Kalte 200 ml Essigsäure hinzu. Während der Zugabe der Diazoniumlösung zu den Kupplungskomponenten hielt man die Temperatur des Reaktionsgemisches durch Zugabe von Eis bei < 8°C und hielt außerdem den Ansatz durch Zugabe von kaltem Wasser rührbar. Man rührte 30 min bei 0 bis 8°C nach, gab dann Natronlauge hinzu und stellte so einen pH-Wert von 1,5 ein. Man erwarmte auf 80 bis 90°C und isolierte das Farbstoffgemisch. Man erhielt (nach Trocknen) 503 g eines dunkelroten Pulvers, das die vier Farbstoffe in den angegebenen Mengenverhältnissen enthält: 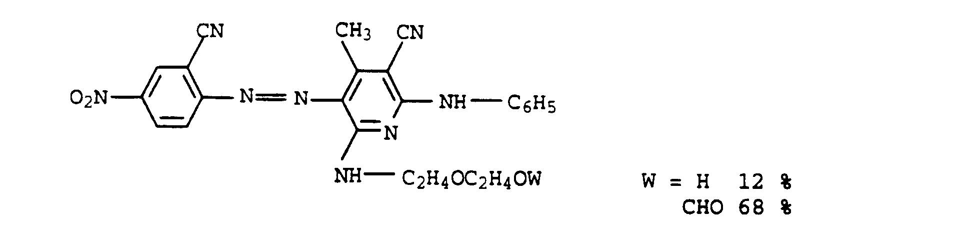 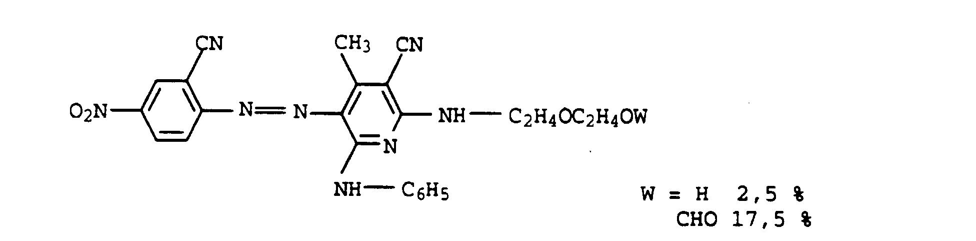 Je 0,35 g des Farbstoffgemisches wurden 60 min bei 120 und 130°C auf Polyestergewebe nach dem HT-Verfahren gefärbt. Der Aufziehgrad des Farbstoffgemisches betrug bei 120°C ca. 90 % und bei 130°C ca. 95 %. Man erhielt Färbungen in klarem, blaustichig roten Ton.

### Beispiel 2

188 g einer Mischung der Verbindungen der Formeln 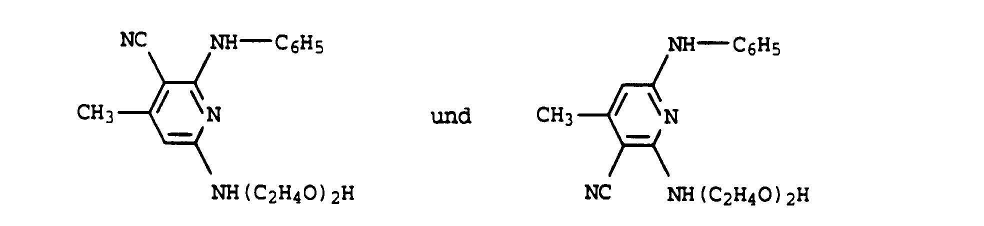 (Mischungsverhältnis 85:15)
und 107,5 g einer Mischung der Verbindungen der Formeln 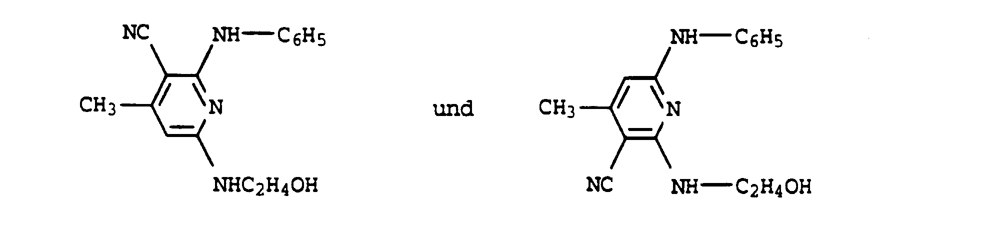 (Mischungsverhältnis 85:15)
wurden in 700 ml 85 gew.-%iger Ameisensäure gelöst und 12 h gerührt. Danach gab man das erhaltene Gemisch auf eine Diazoniumsalzlösung von 2- Amino-5-nitrobenzonitril (1 mol), die analog Beispiel 1 zubereitet wurde und kuppelte analog Beispiel 1. Man erhielt ein Farbstoffgemisch mit folgenden Komponenten: 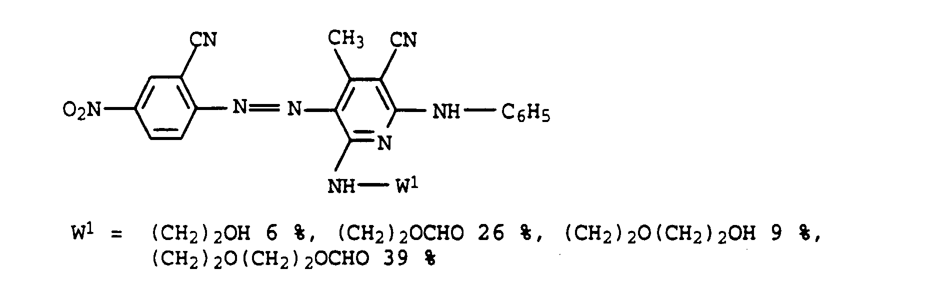 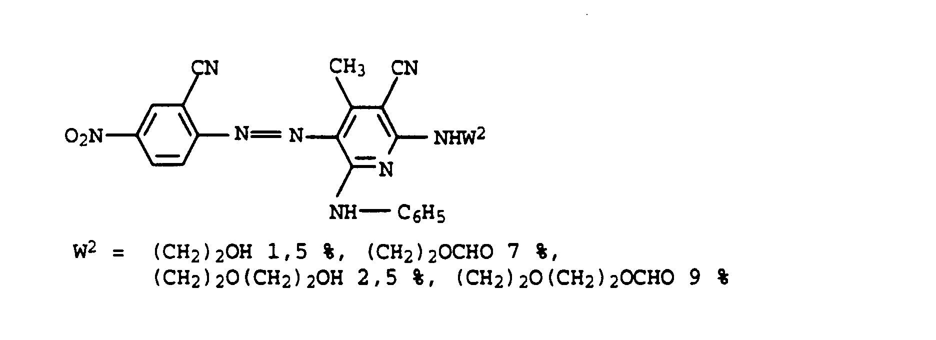 Auf Polyestergewebe erhielt man Färbungen in klarem blaustichig roten Ton.

### Beispiel 3

312 g des in Beispiel 1 genannten Gemisches der Kupplungskomponenten wurden in 800 ml Eisessig und 10 g Toluolsulfonsäure 8 h bei 115°C erhitzt. Danach ließ man erkalten und kuppelte das erhaltene Reaktionsgemisch gemäß Beispiel 1.

Nach dem Isolieren des Farbstoffgemisches erhielt man 520 g eines dunkelroten Pulvers. Das Farbstoffgemisch weist folgende Komponenten auf: 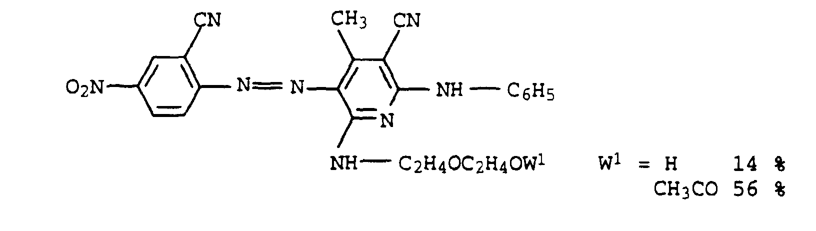 und

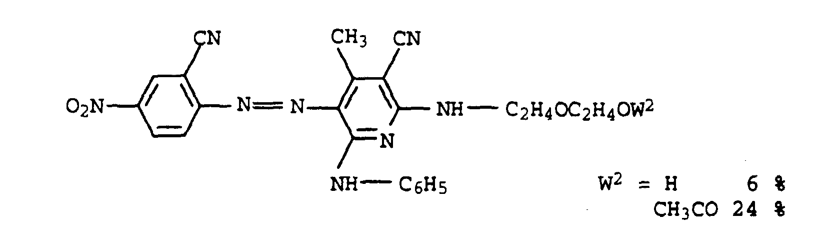

Die erhaltene Farbstoffmischung weist auf Polyestergewebe bei 130°C ein sehr gutes Ziehvermögen auf. Man erhält Farbungen in klarem, blaustichig roten Ton.

### Beispiel 4

Analog Beispiel 1 wurde folgendes Farbstoffgemisch hergestellt: 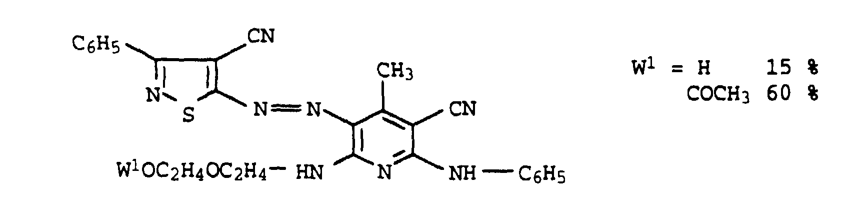 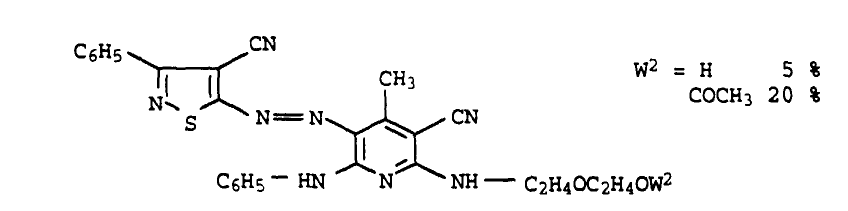 0,35 g dieses Gemisches wurden jeweils 60 min bei 120 und 130°C nach dem HT-Verfahren auf Polyestergewebe gefärbt. Man erhielt nahe gleich farbstarke rote Färbungen. Die Färbebäder waren nahezu ausgezogen.

### Beispiel 5

Analog Beispiel 1 wurde folgendes Farbstoffgemisch hergestellt: 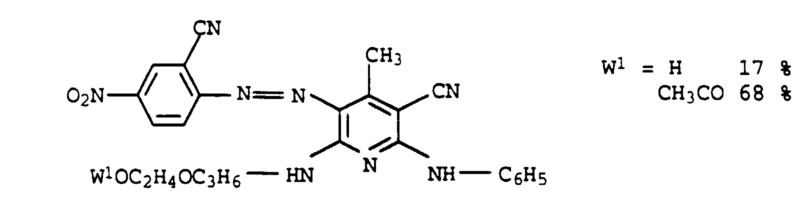 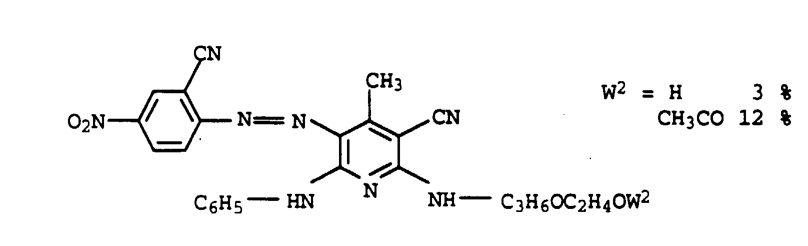 0,35 g dieses Gemisches wurden jeweils 60 min bei 120 und 130°C nach dem HT-Verfahren auf Polyestergewebe gefärbt. Man erhielt nahezu gleich farbstarke blaustichig rote Farbungen. Die Farbebäden waren praktisch ausgezogen.

In analoger Weise werden die in den folgenden Tabellen aufgeführten Farbstoffe erhalten. Sie zeigen ahnlich günstige Färbeergebnisse.

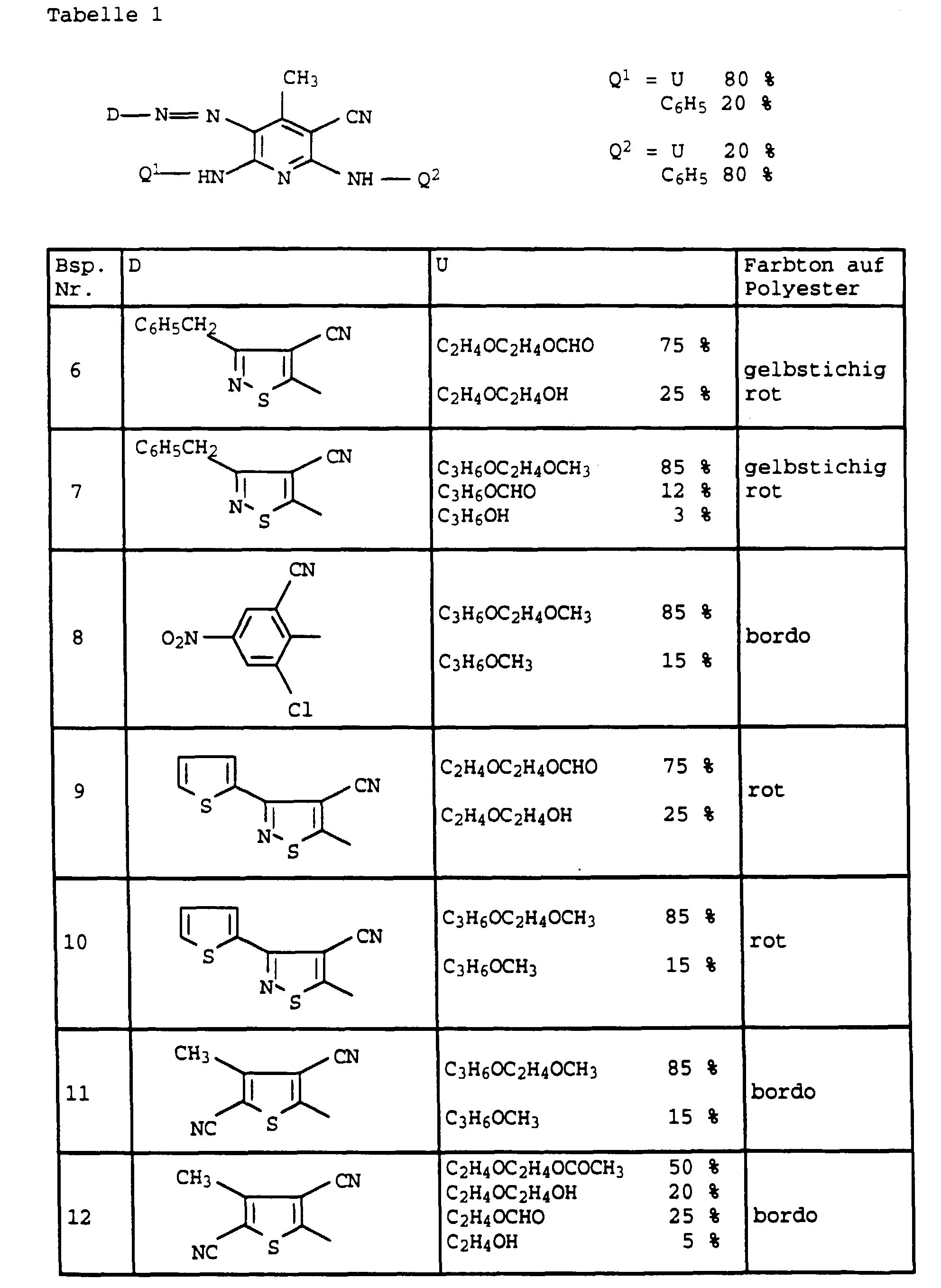

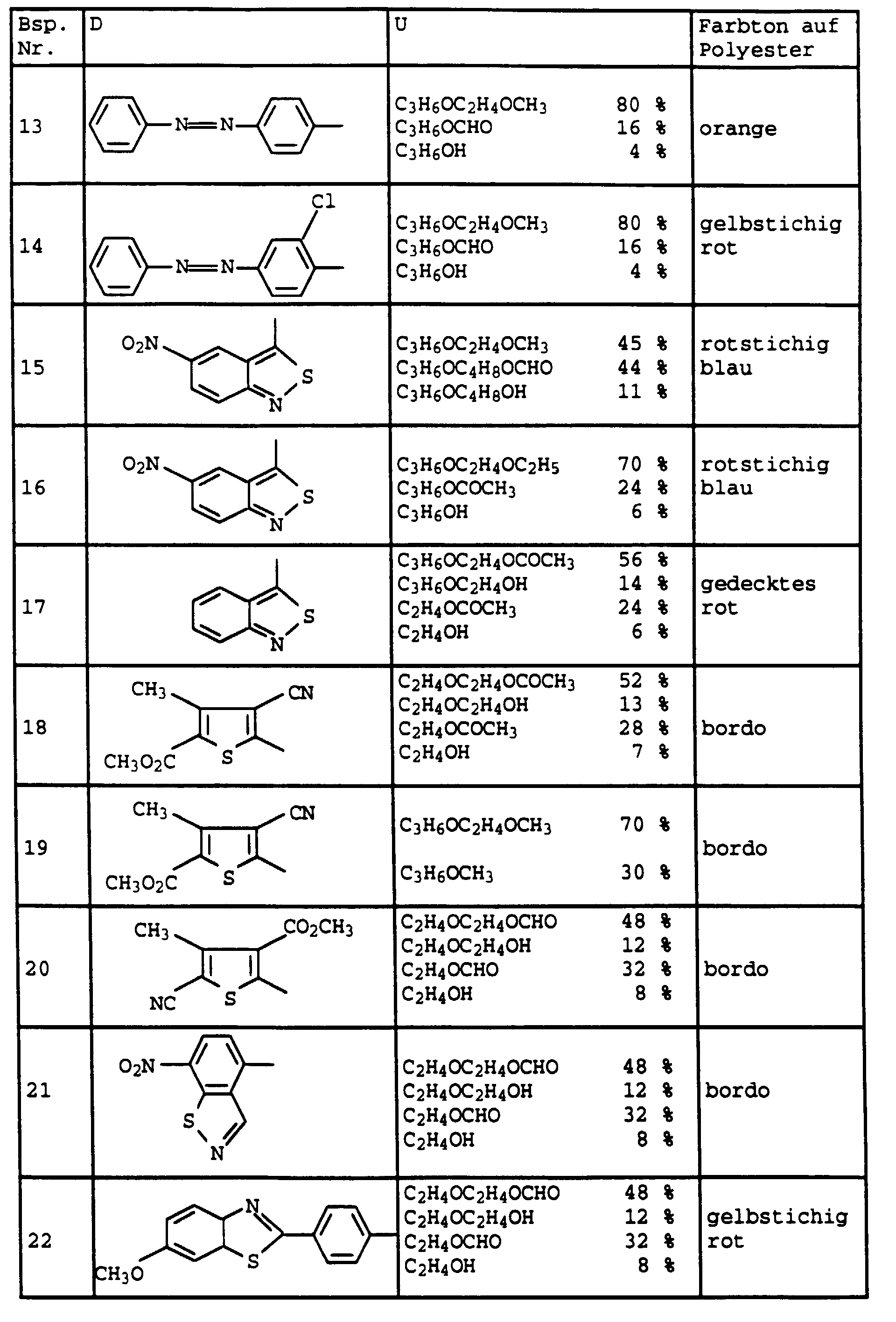

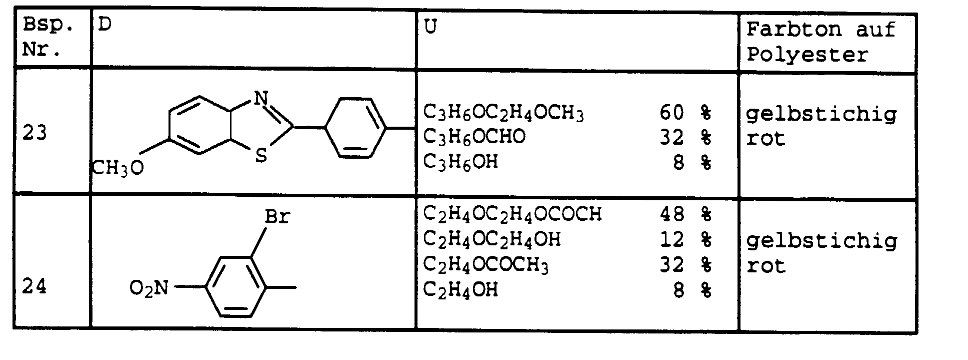

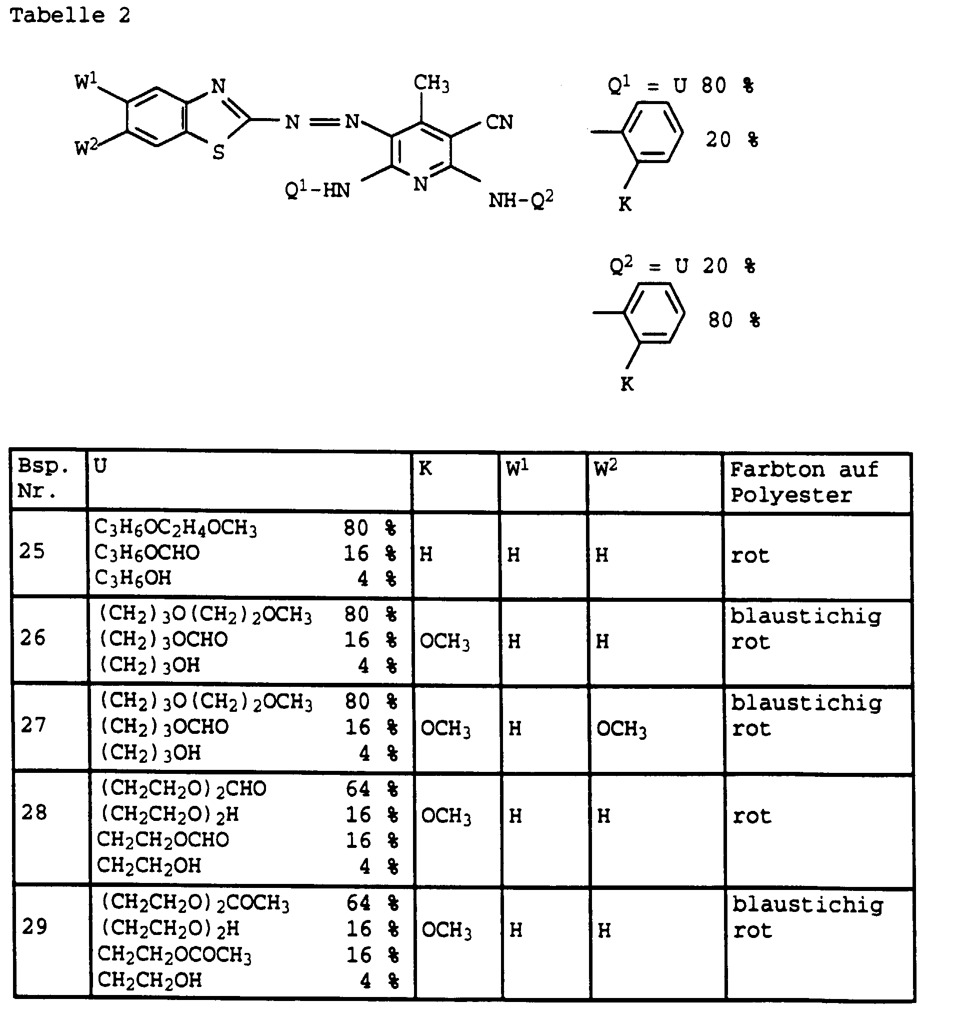

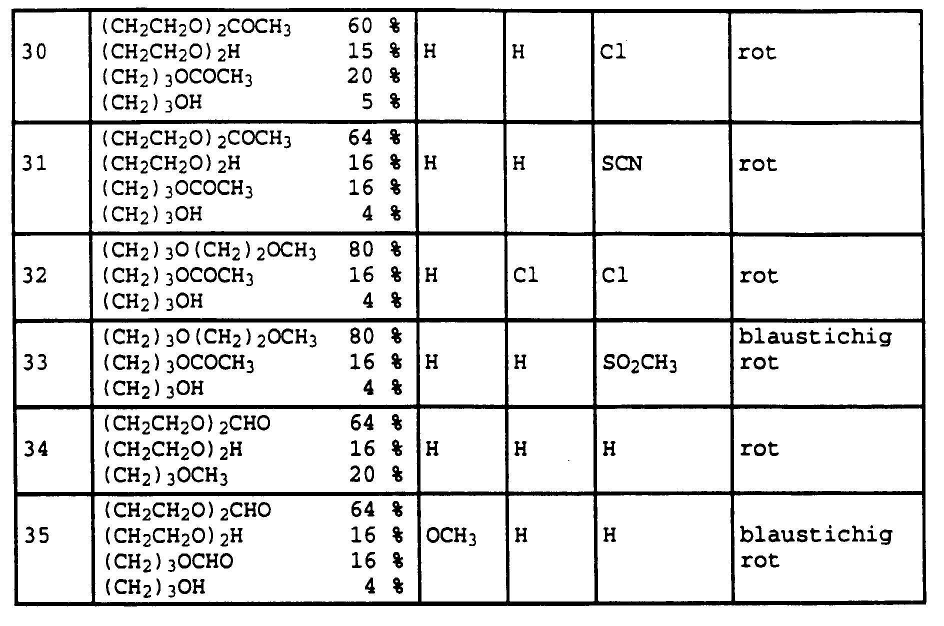

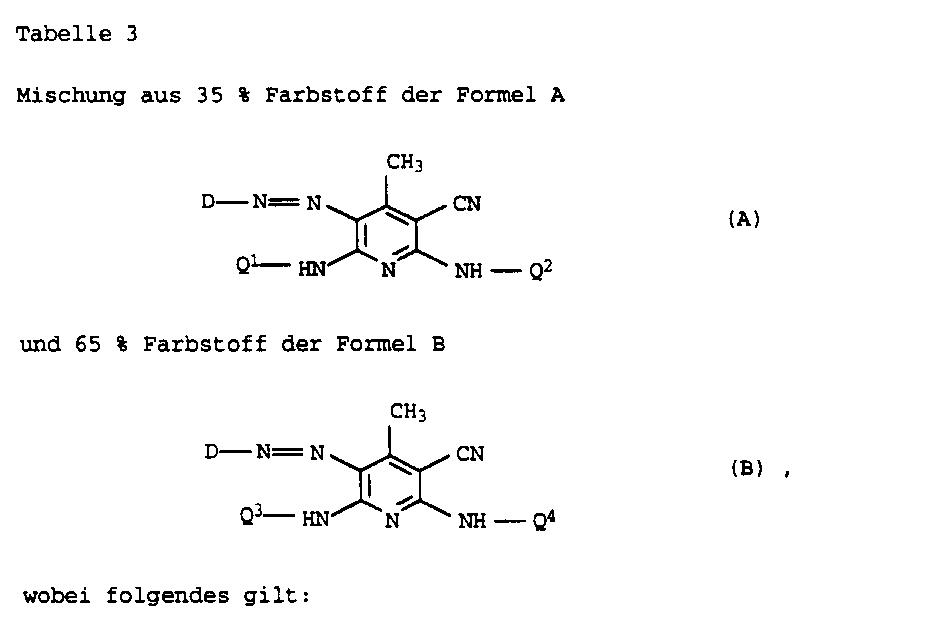

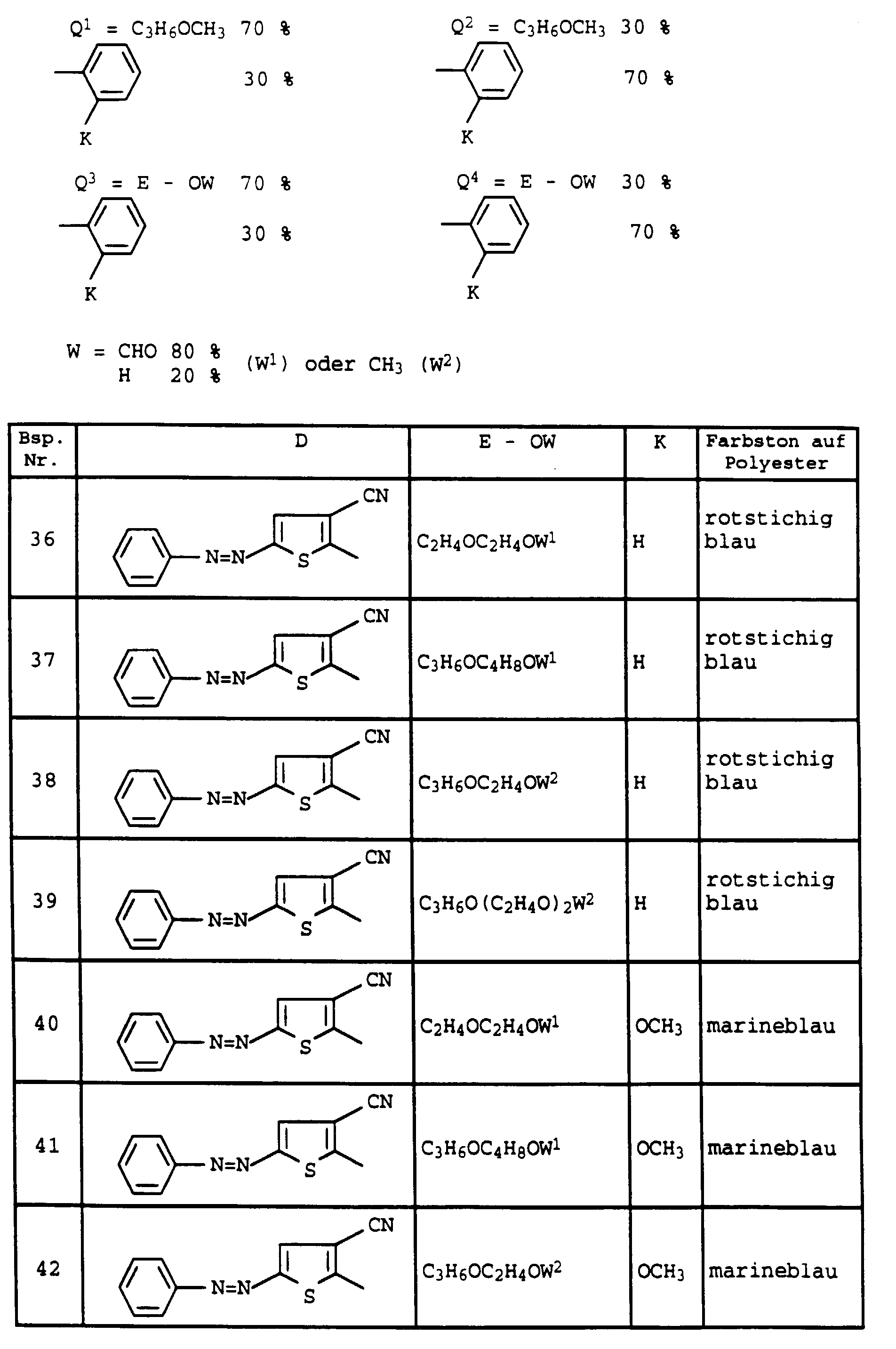

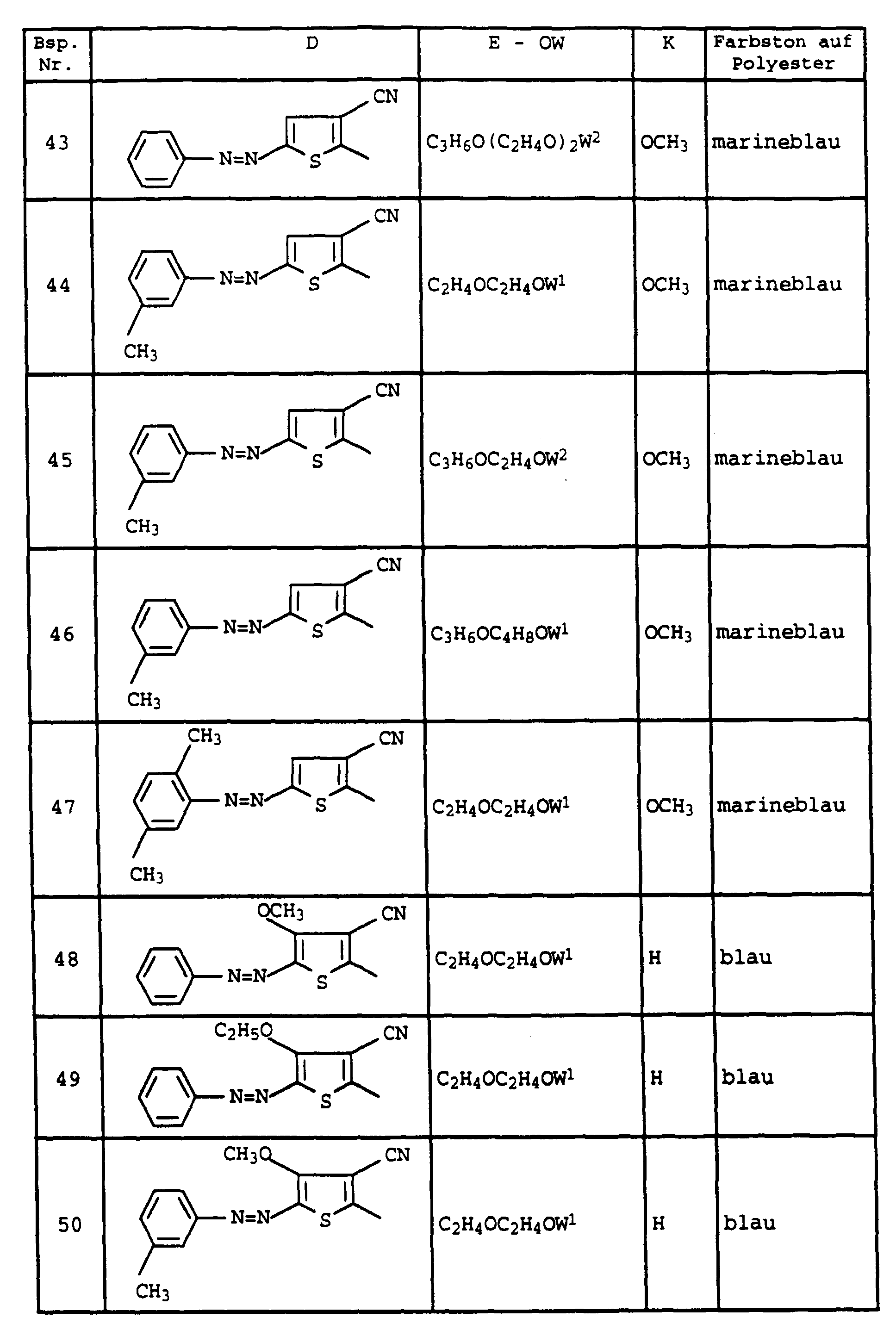

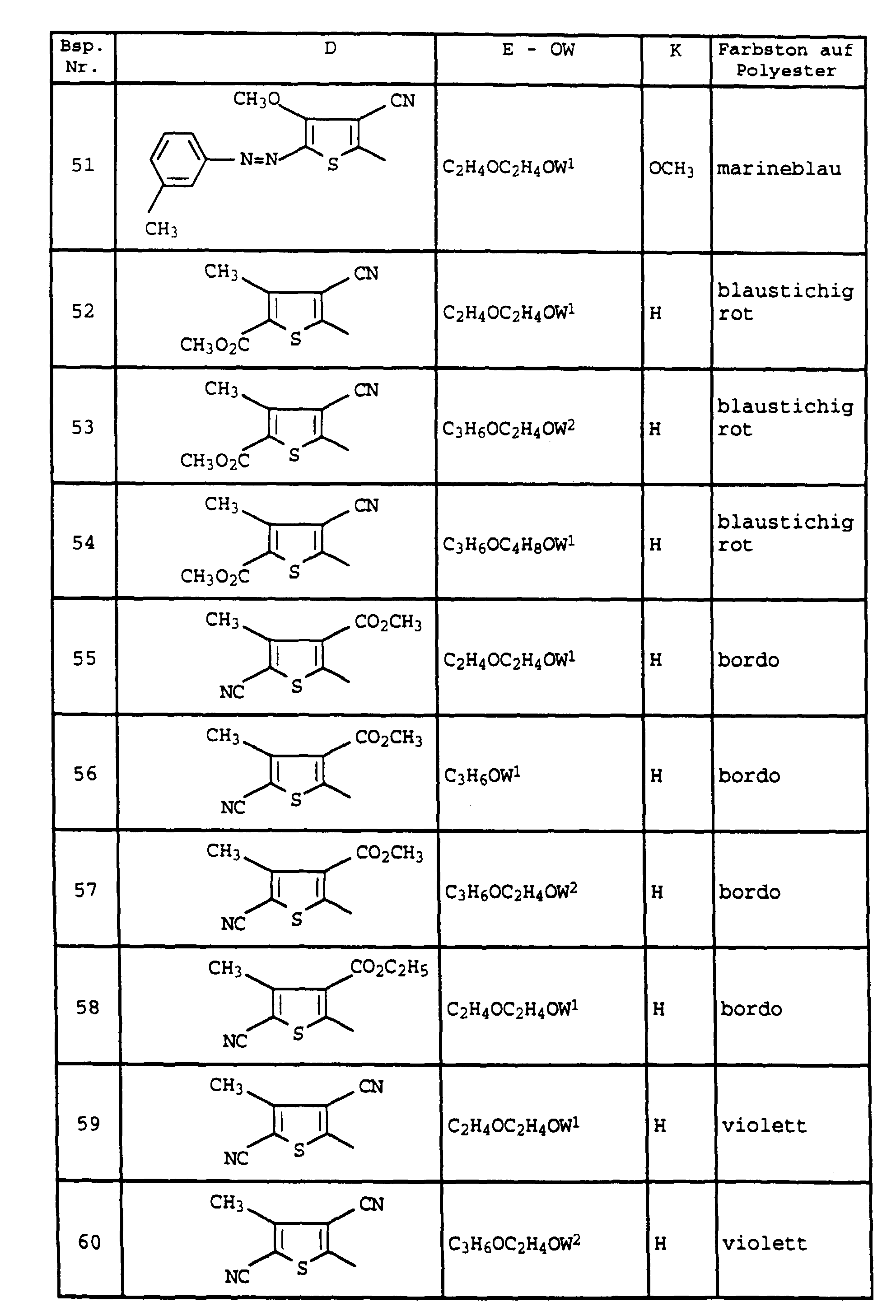

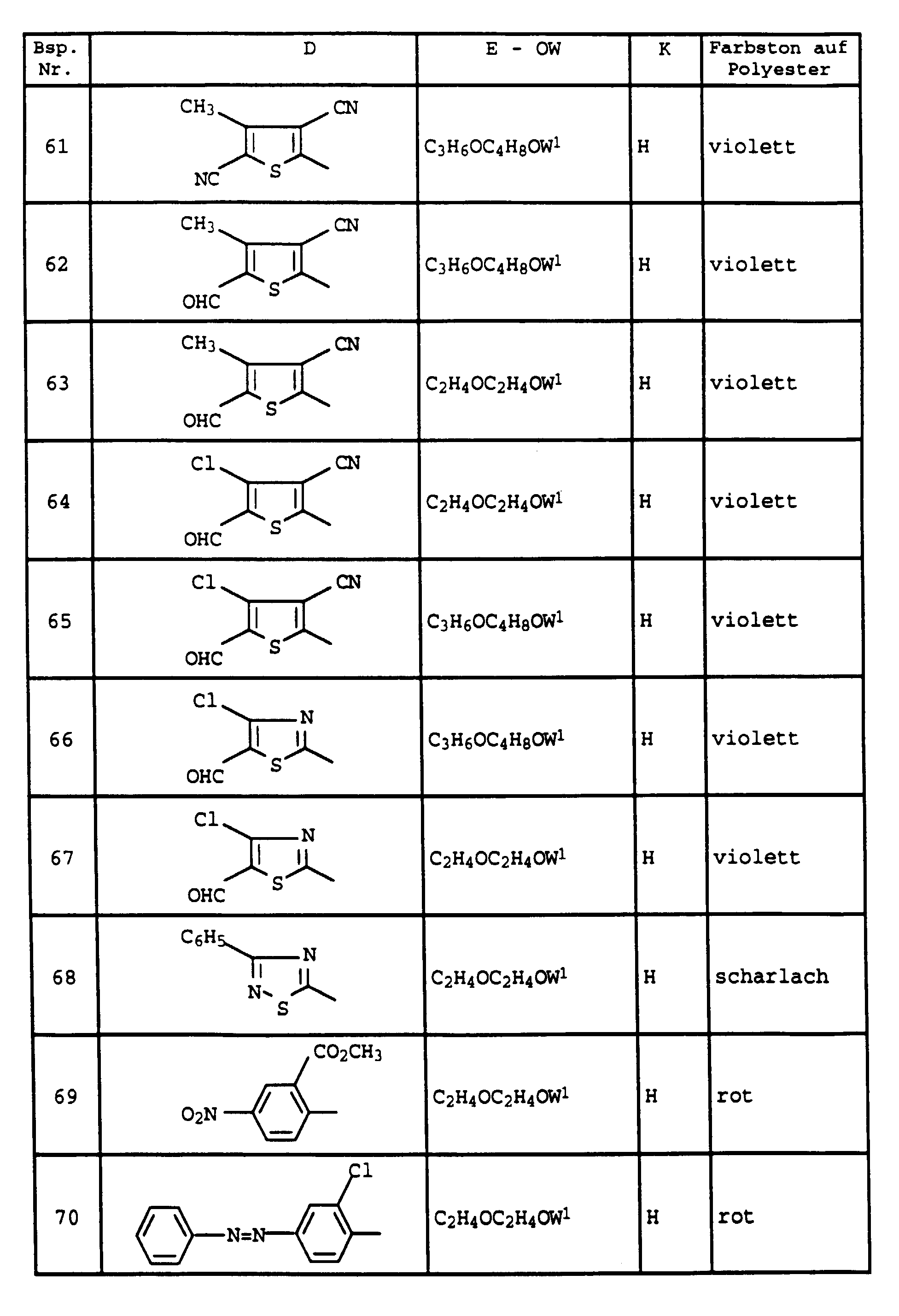

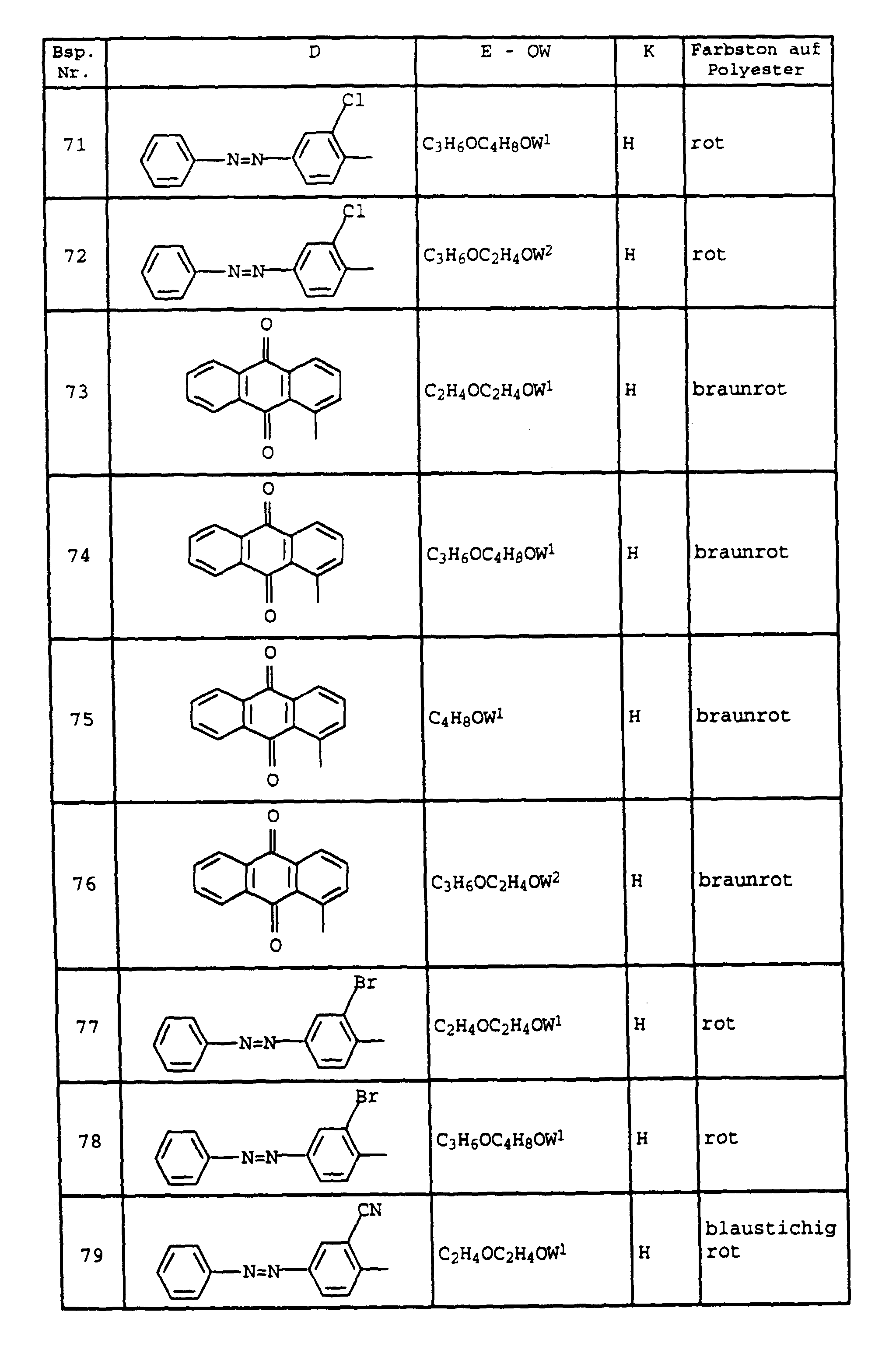

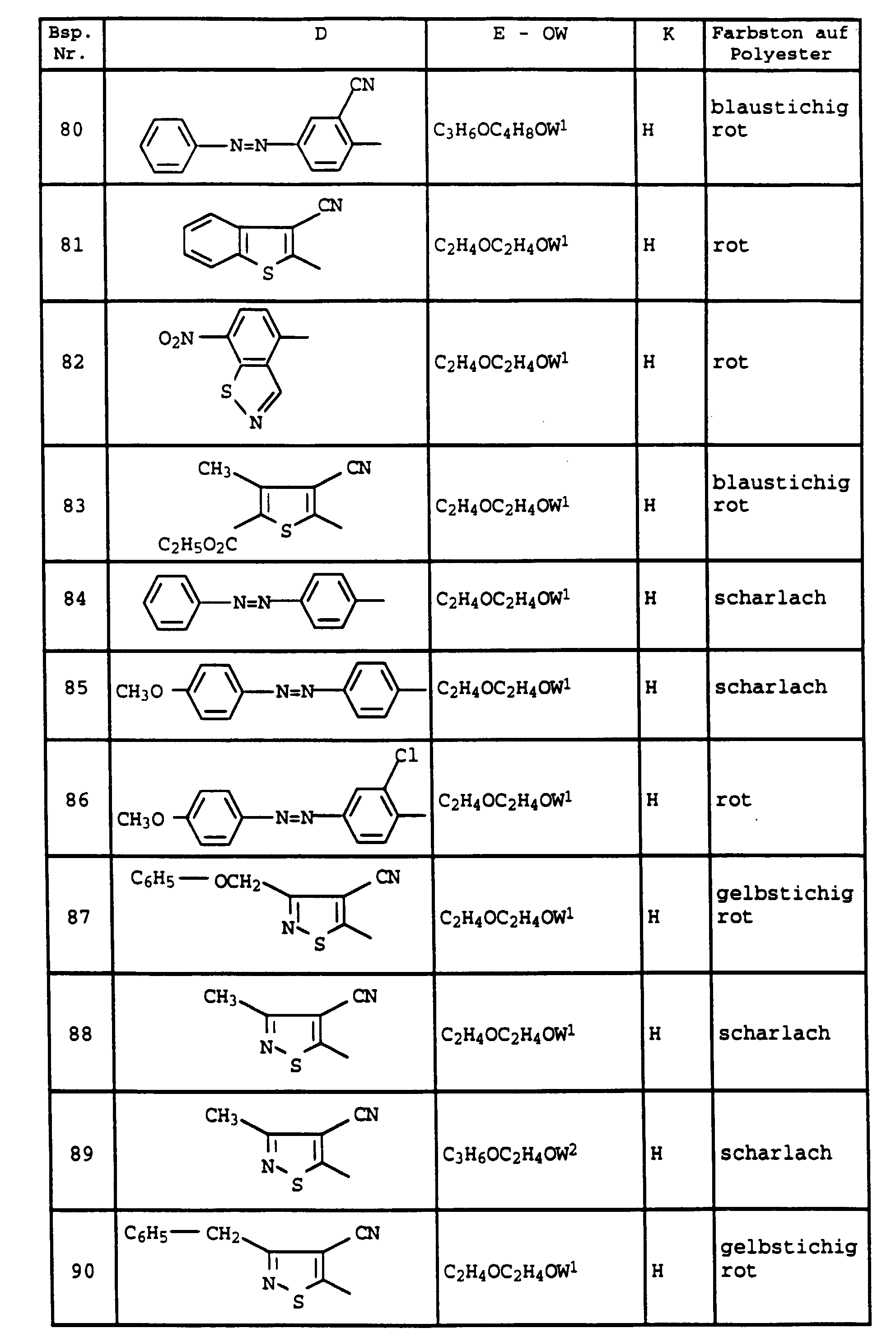

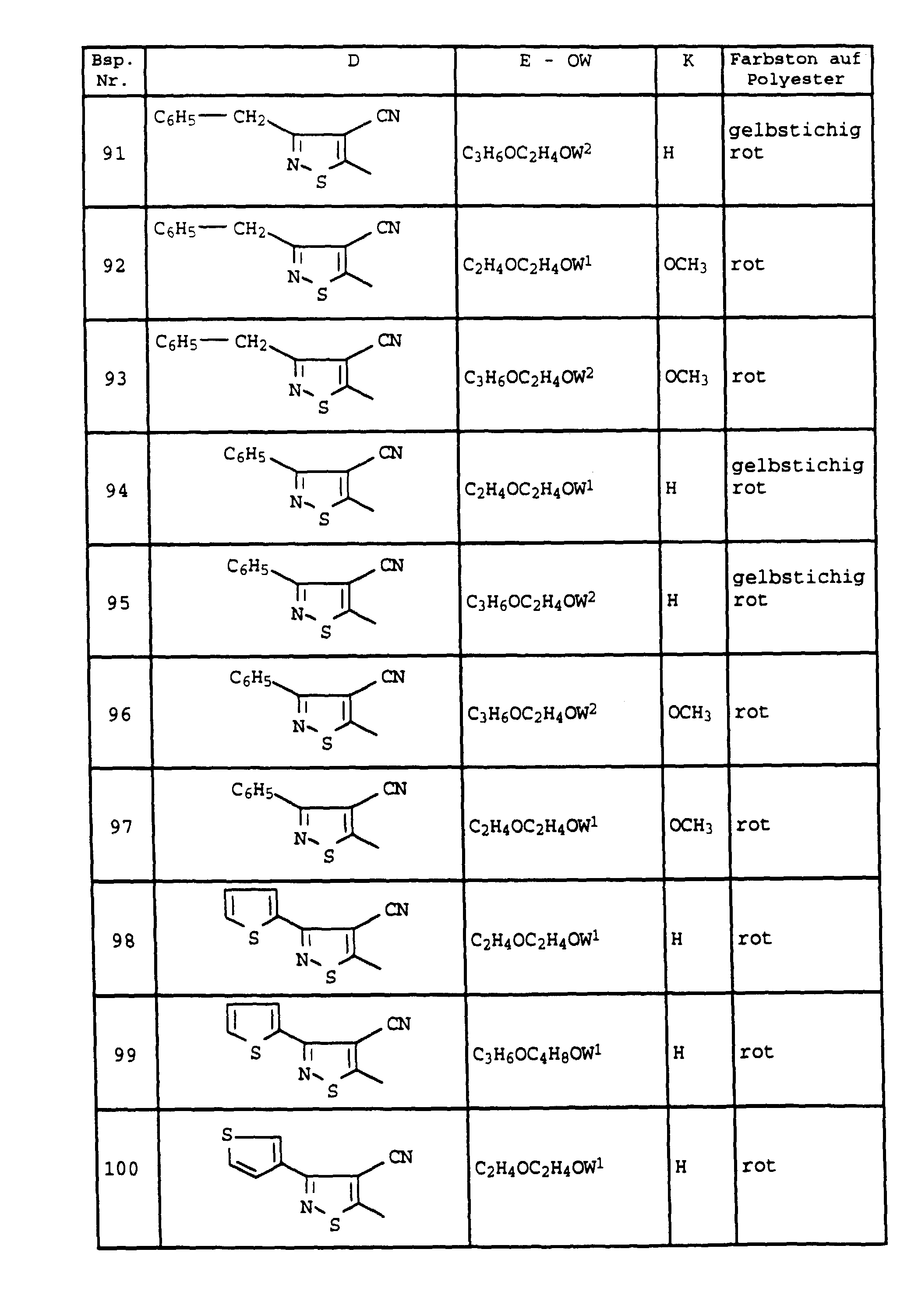

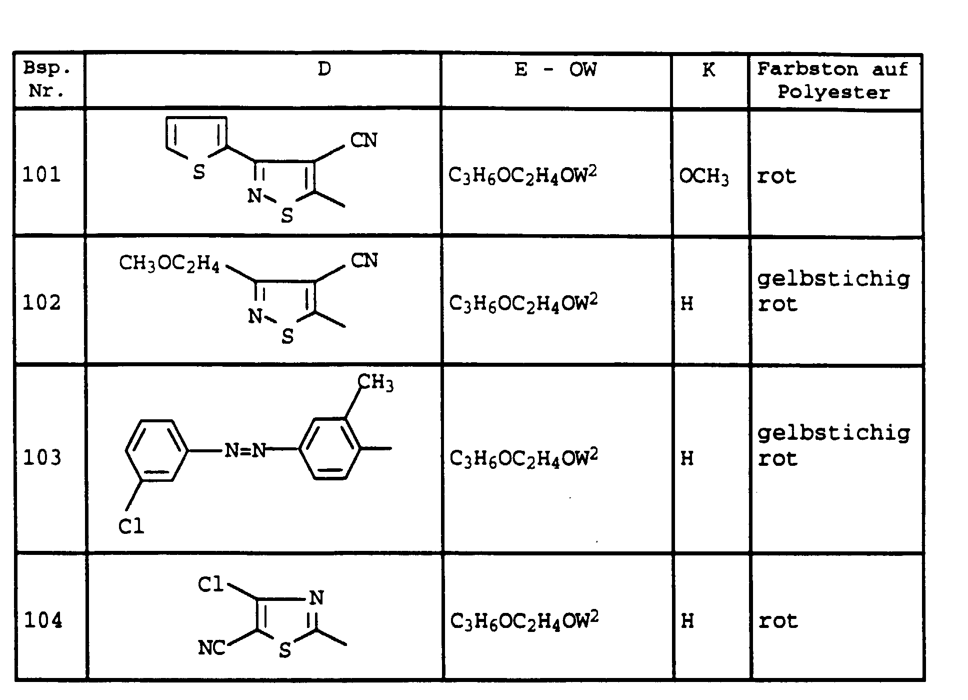

Ähnlich günstige Ergebnisse werden erzielt, wenn man die in Tabelle 3 aufgeführten Mischungen verwendet, die die Farbsotffe A und B im Gewichtsverhältnis von 30:70 und 40:60 aufweisen.

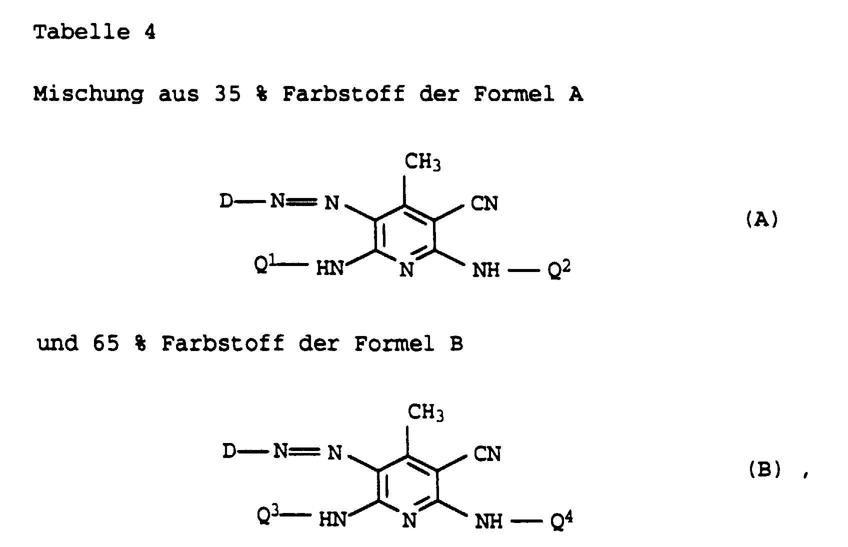

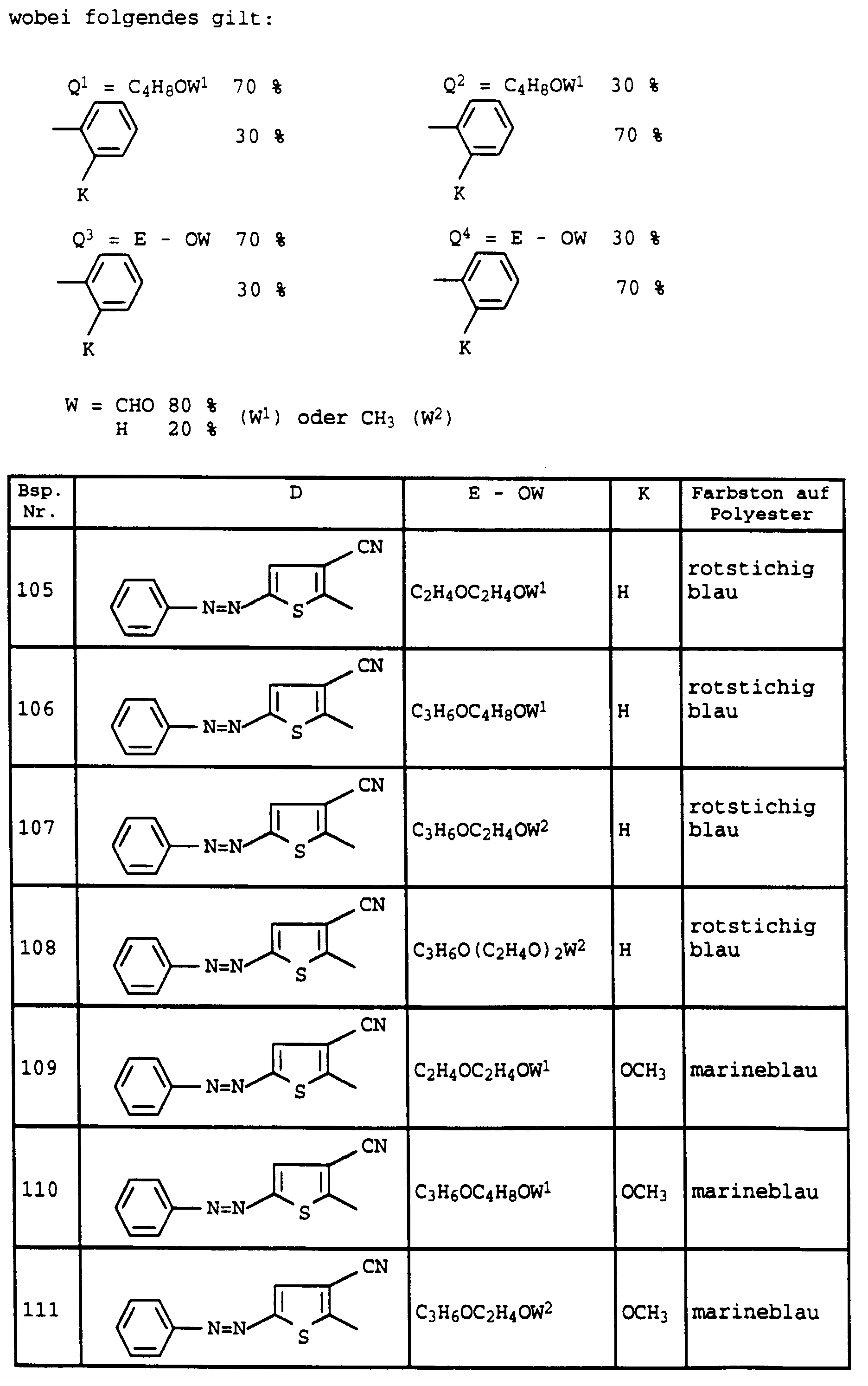

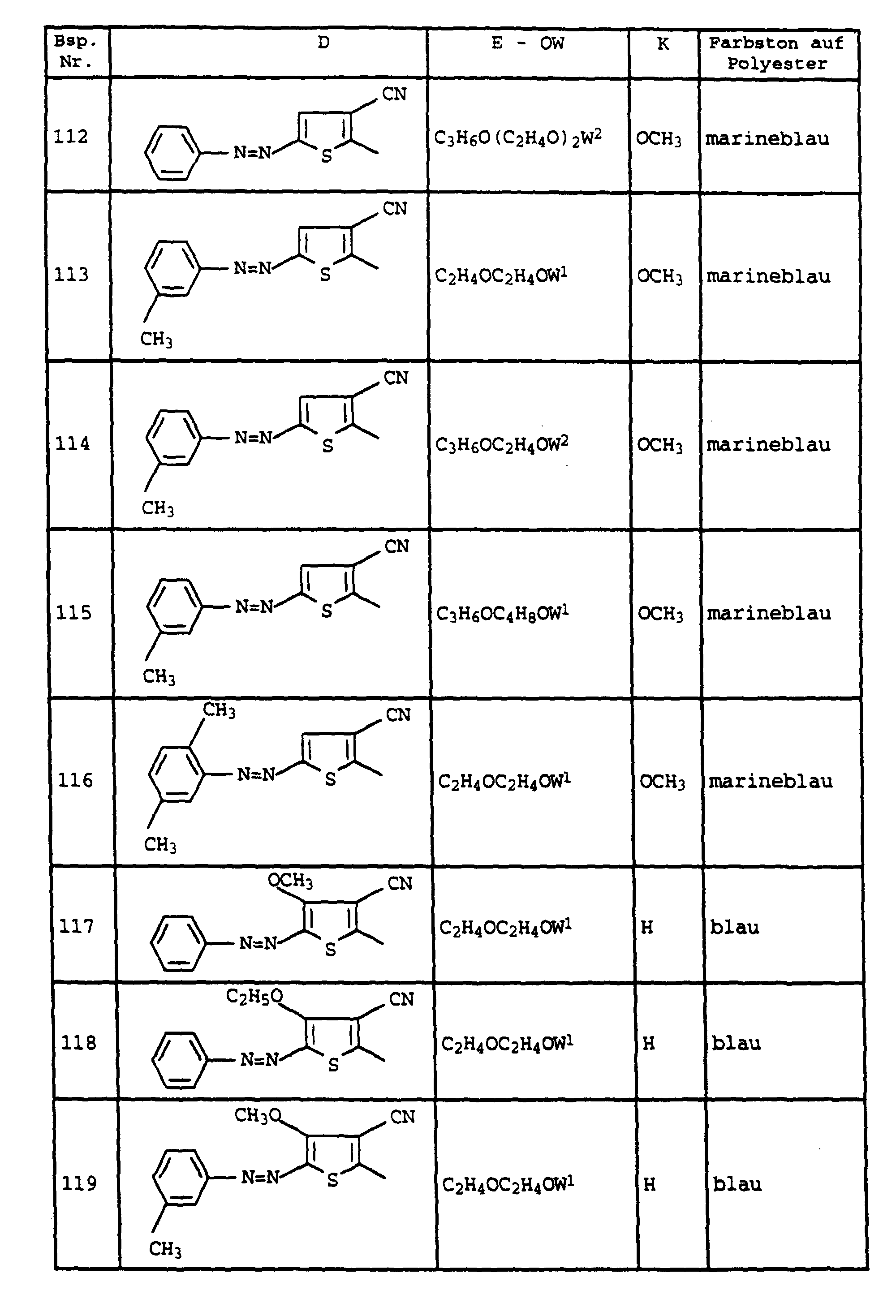

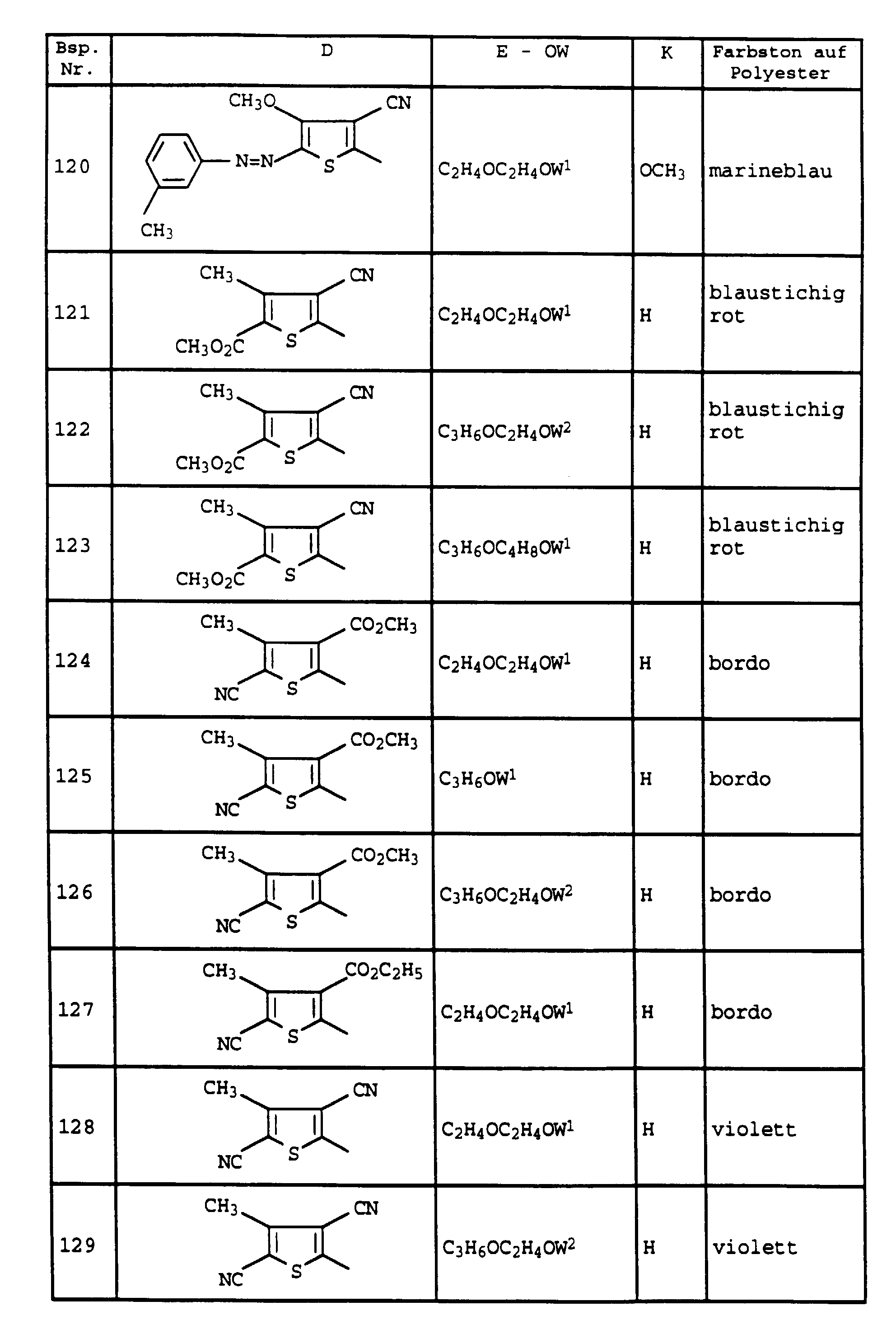

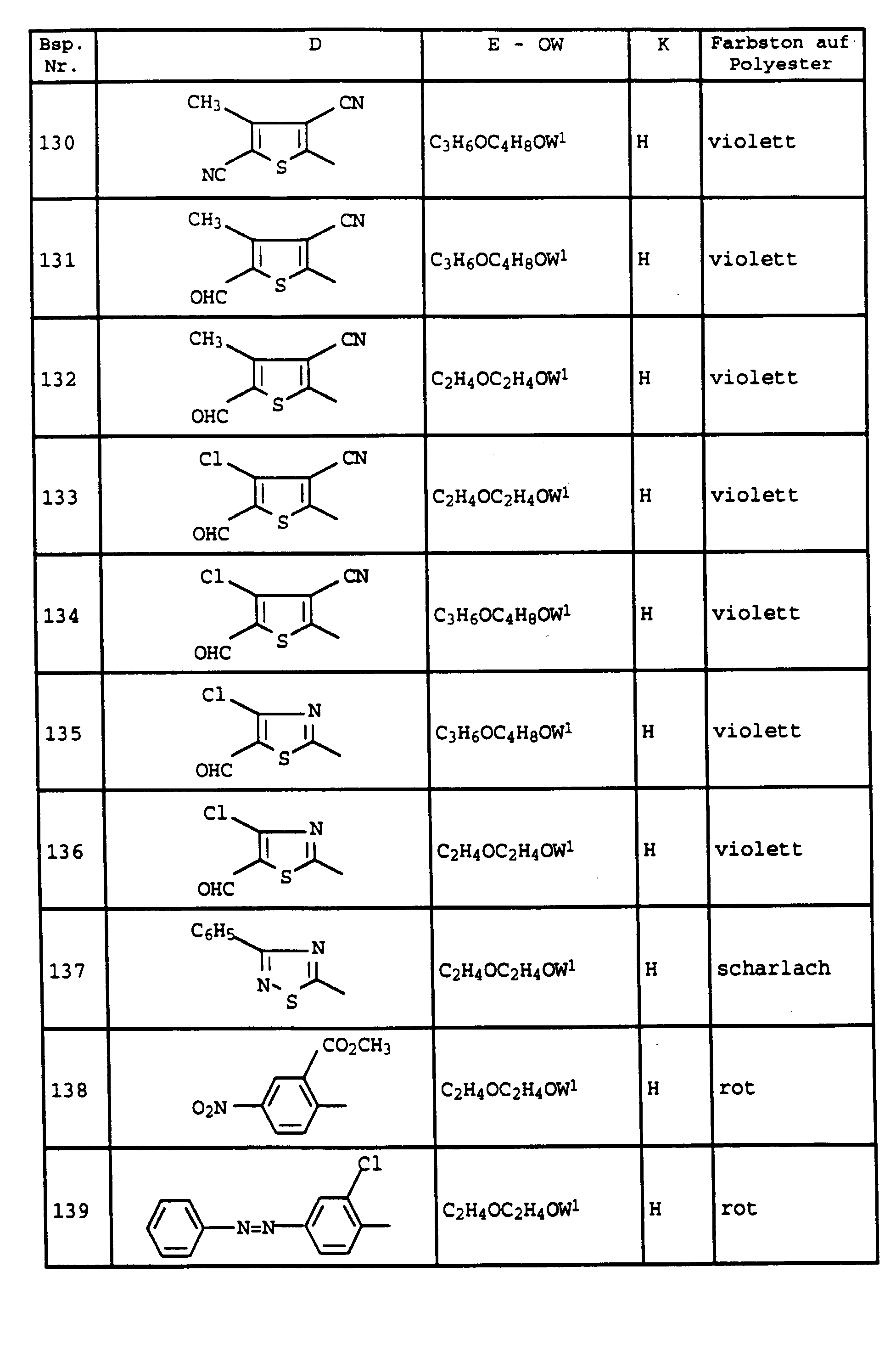

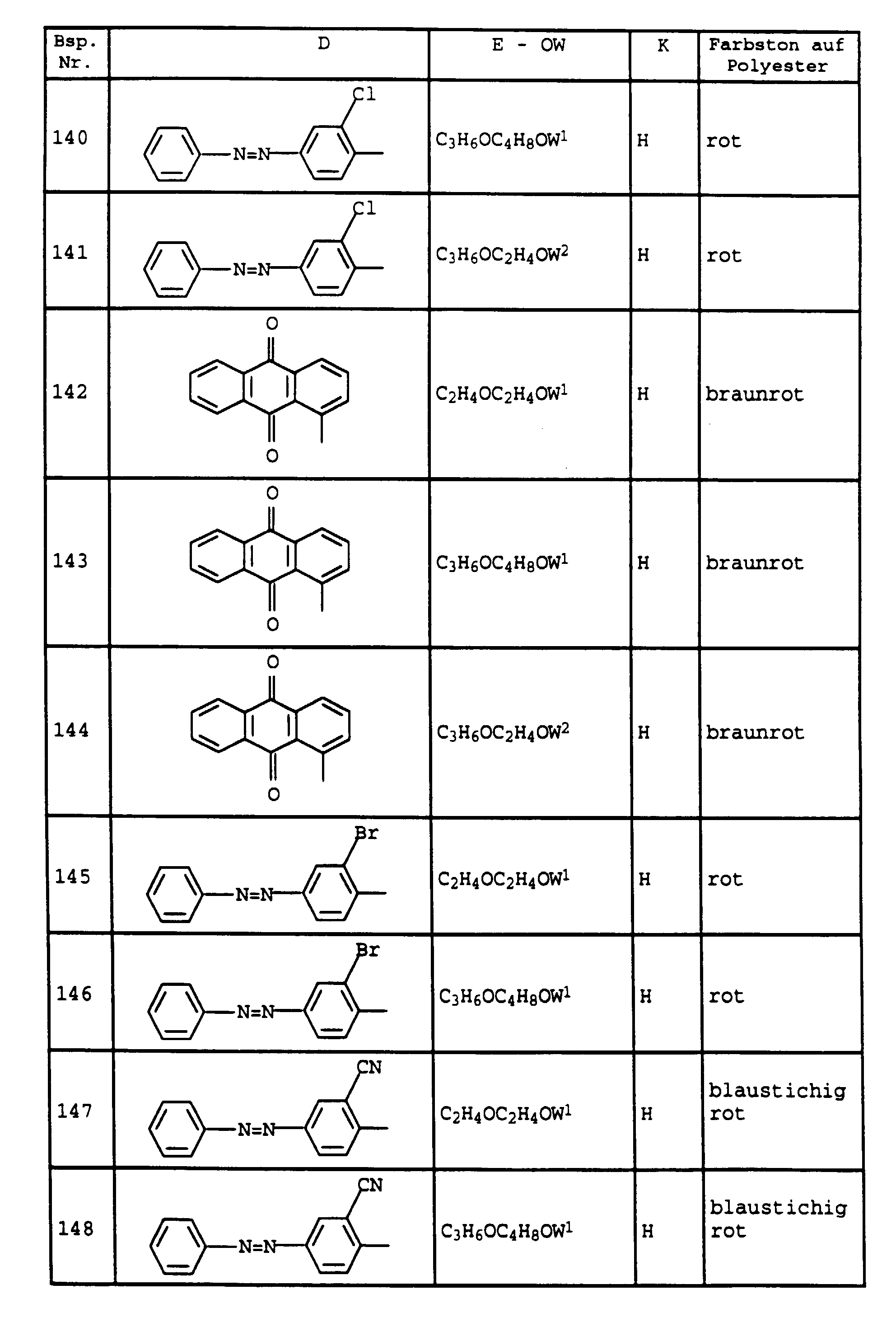

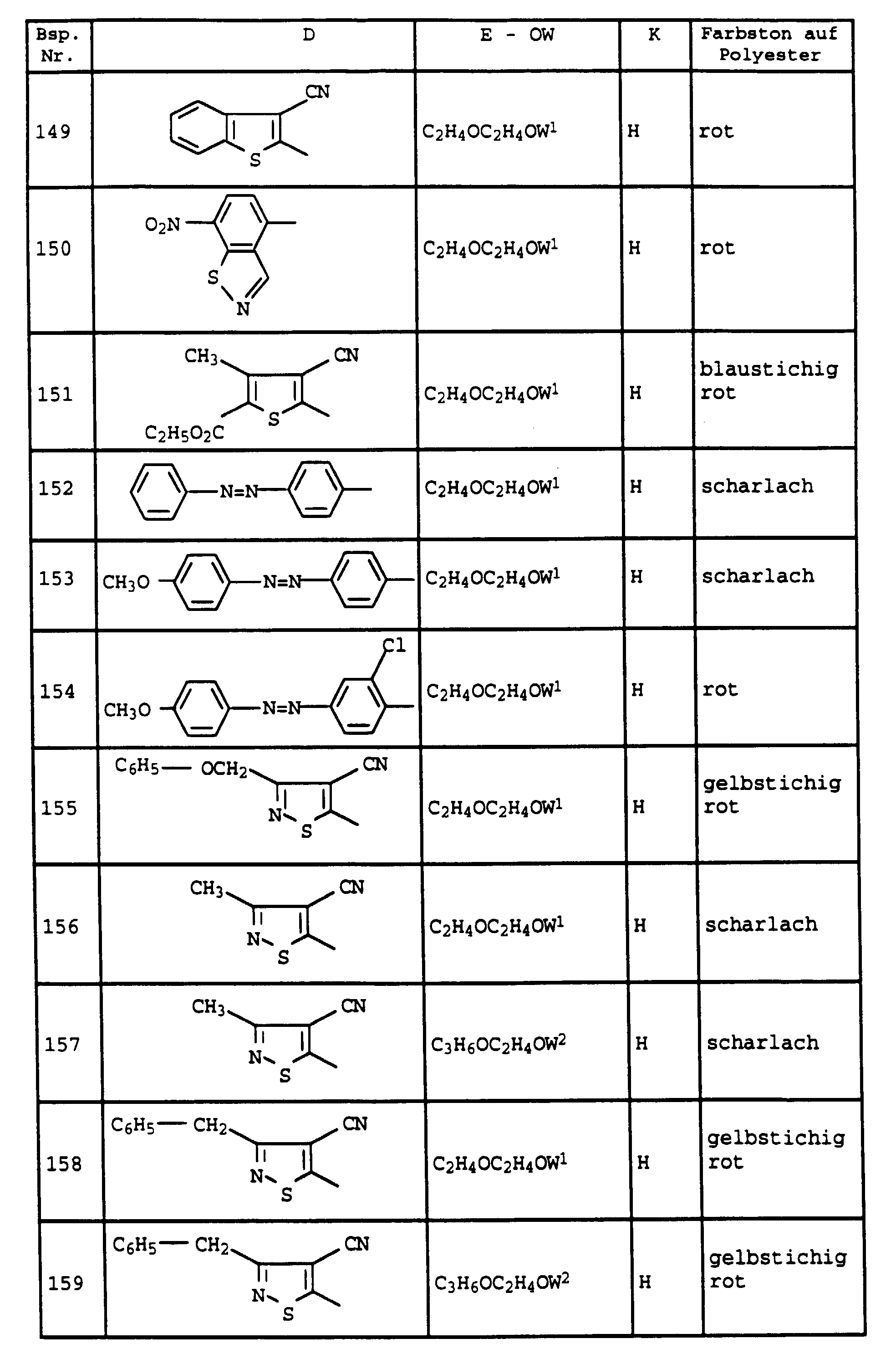

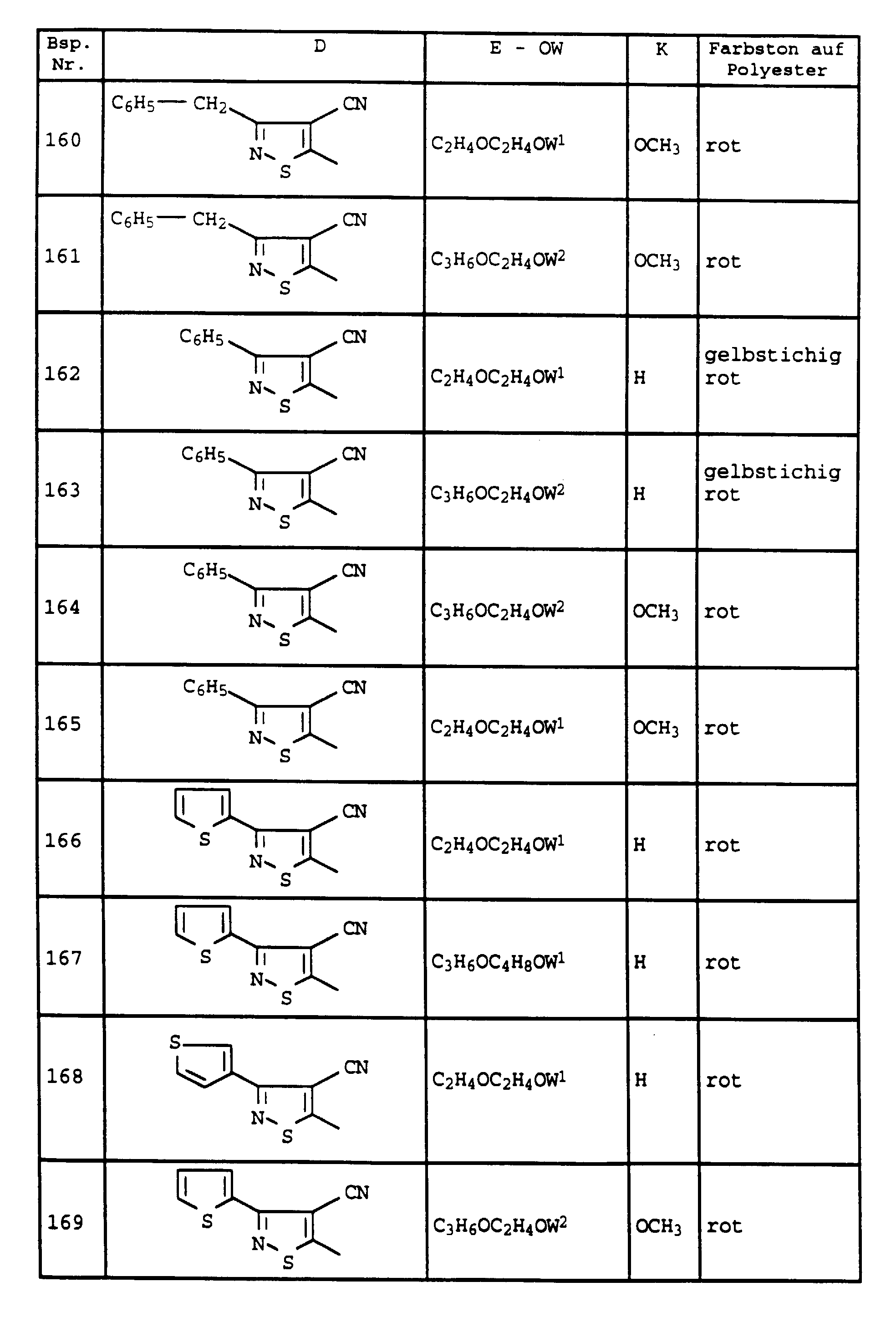

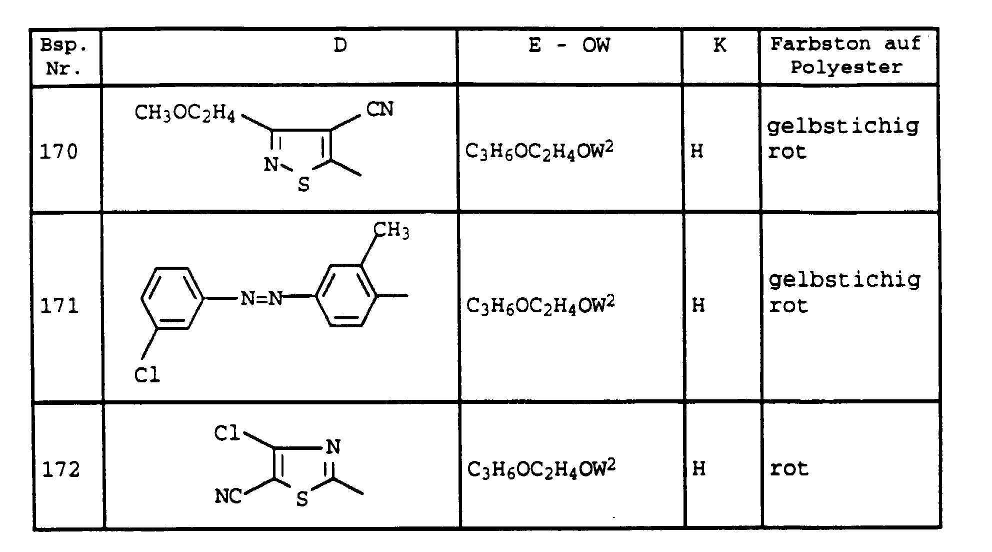

Ähnlich günstige Ergebnisse werden erzielt, wenn man die in Tabelle 4 aufgeführten Mischungen verwendet, die die Farbsotffe A und B im Gewichtsverhältnis von 30:70 und 40:60 aufweisen.

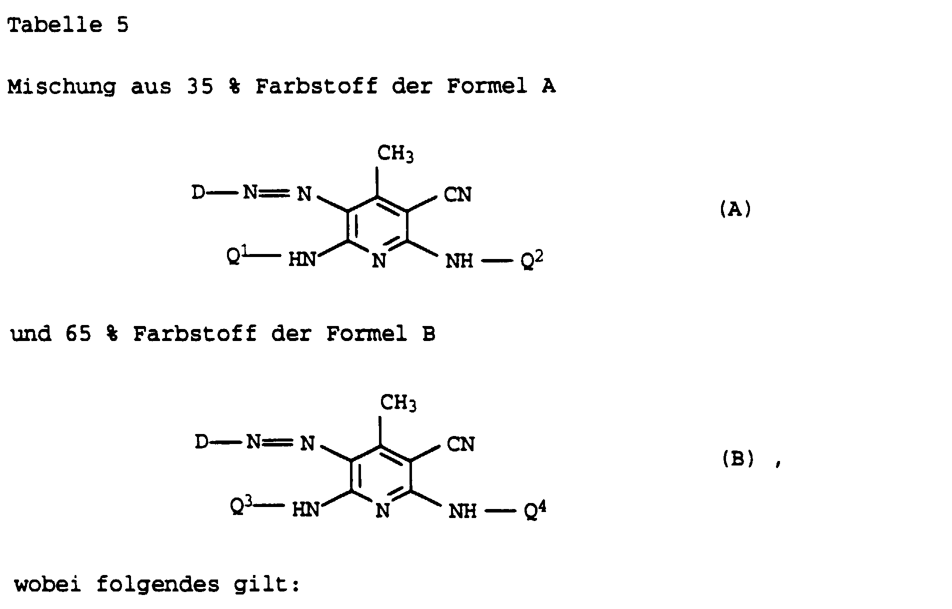

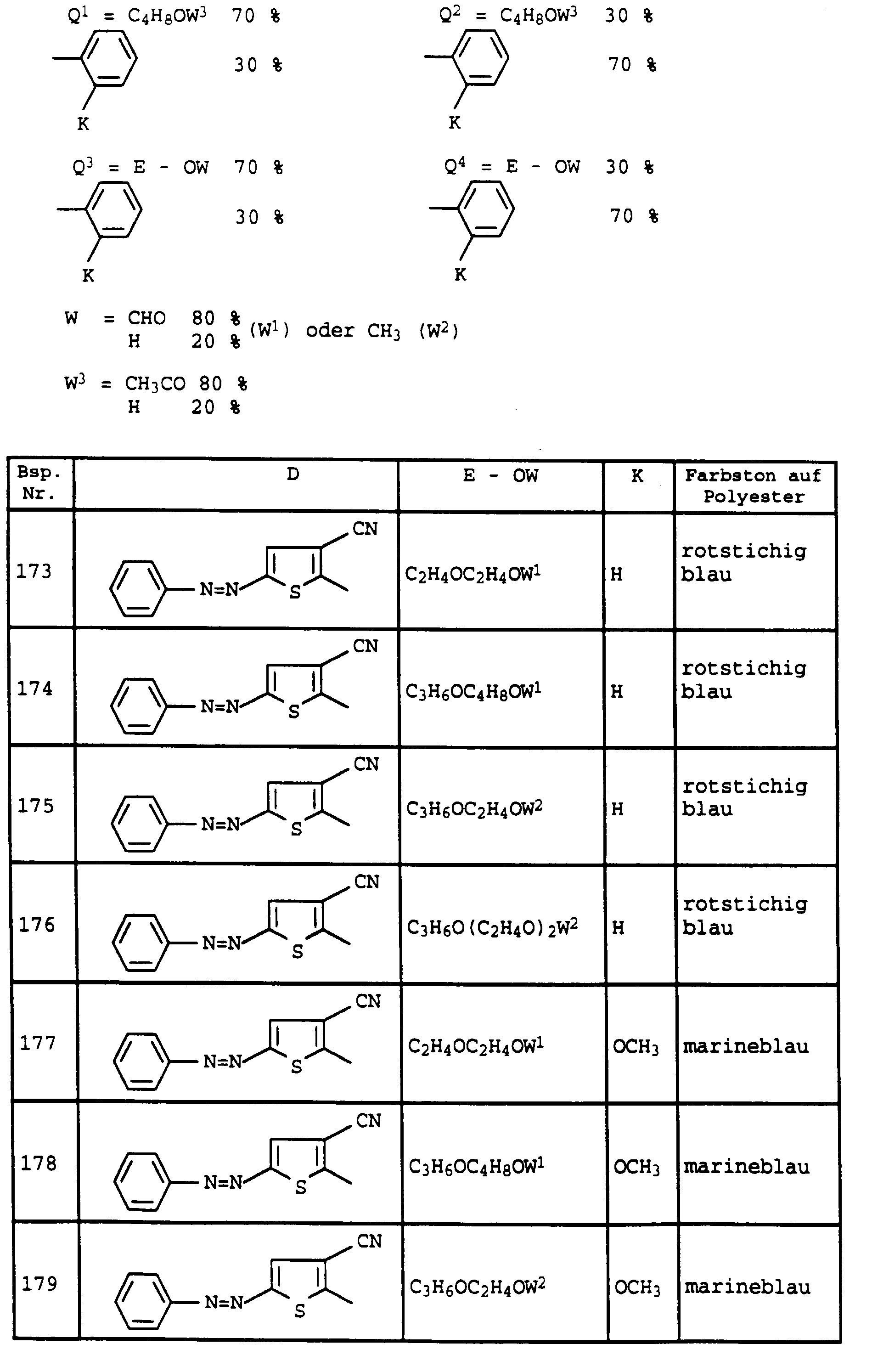

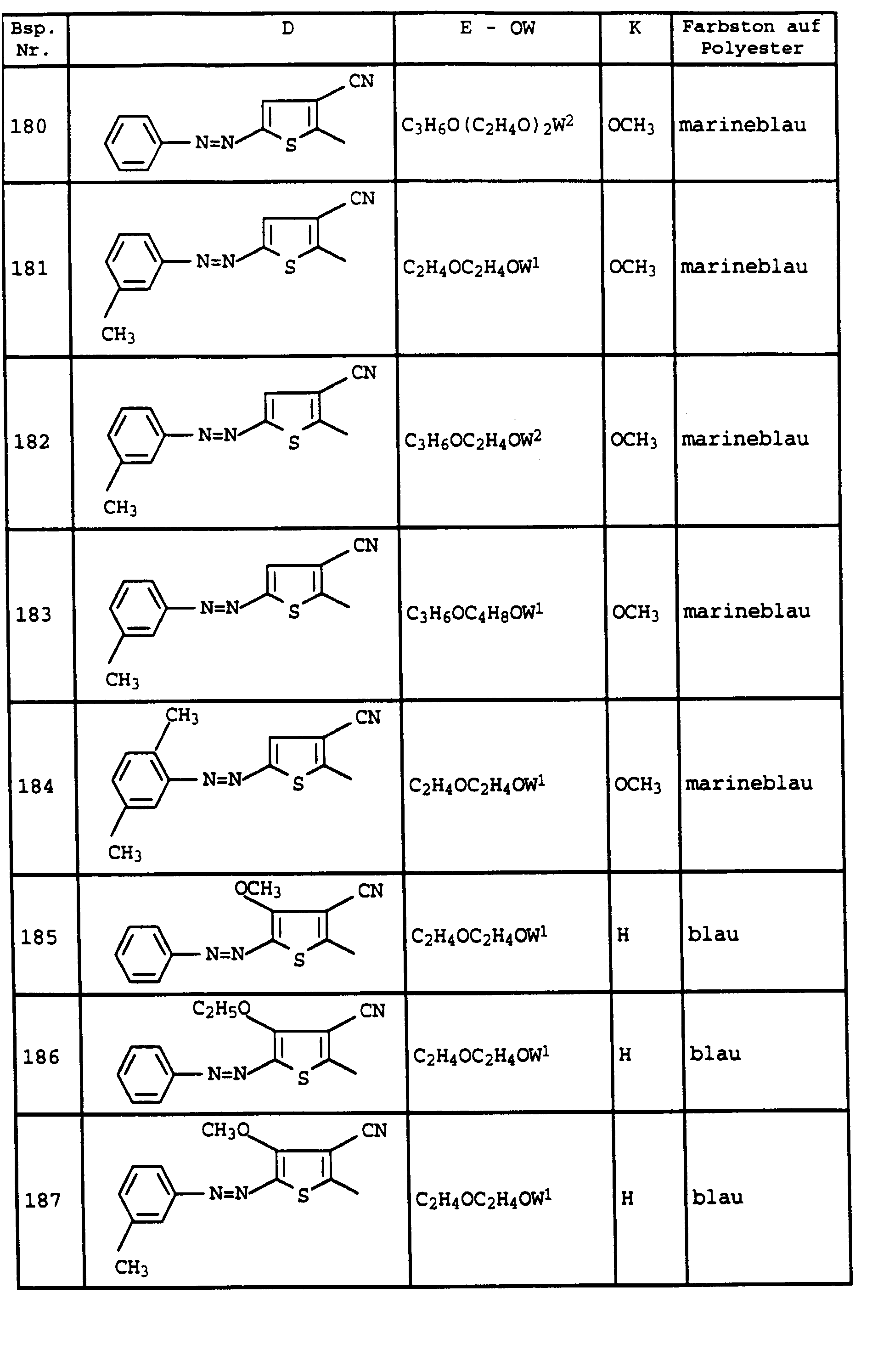

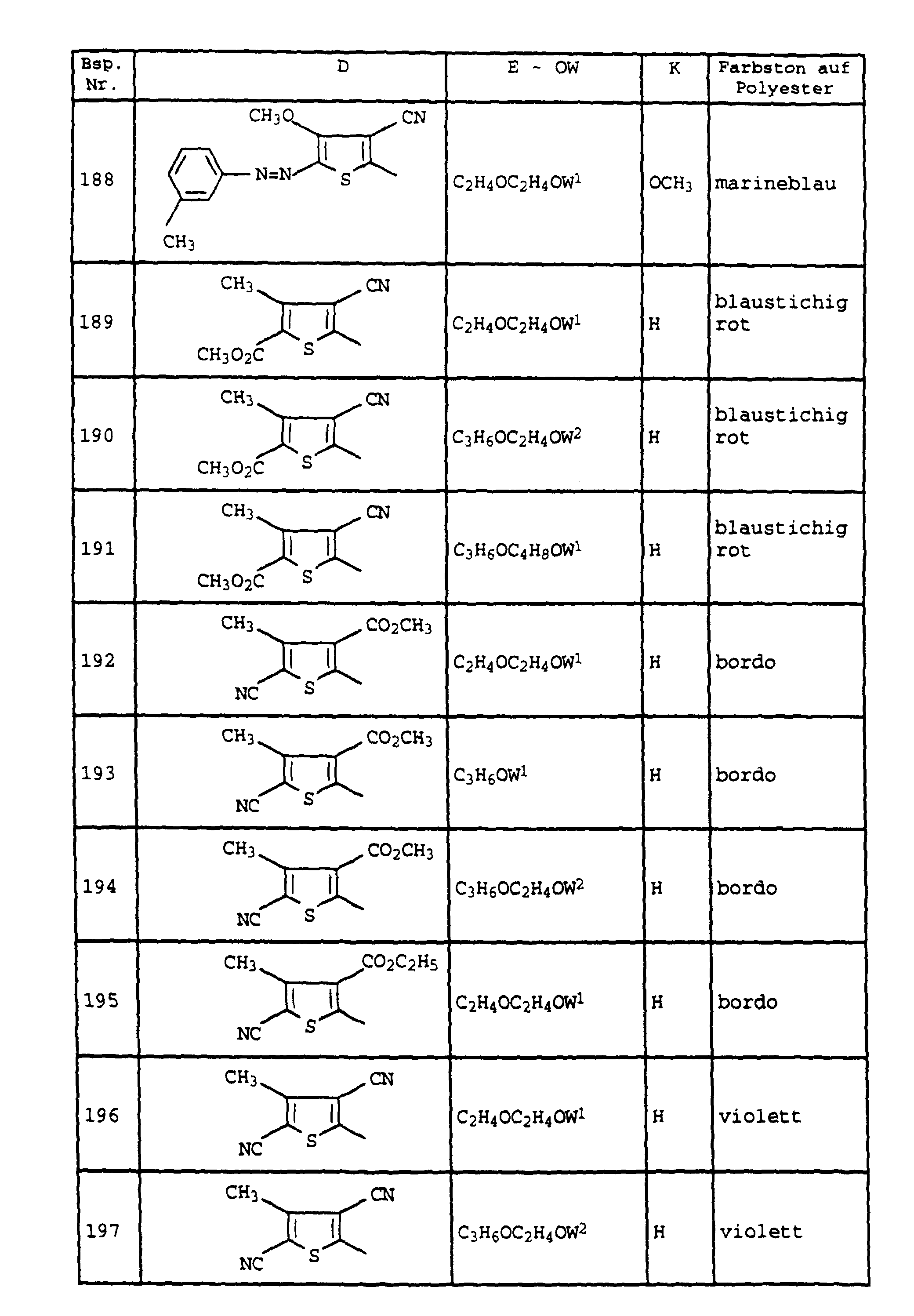

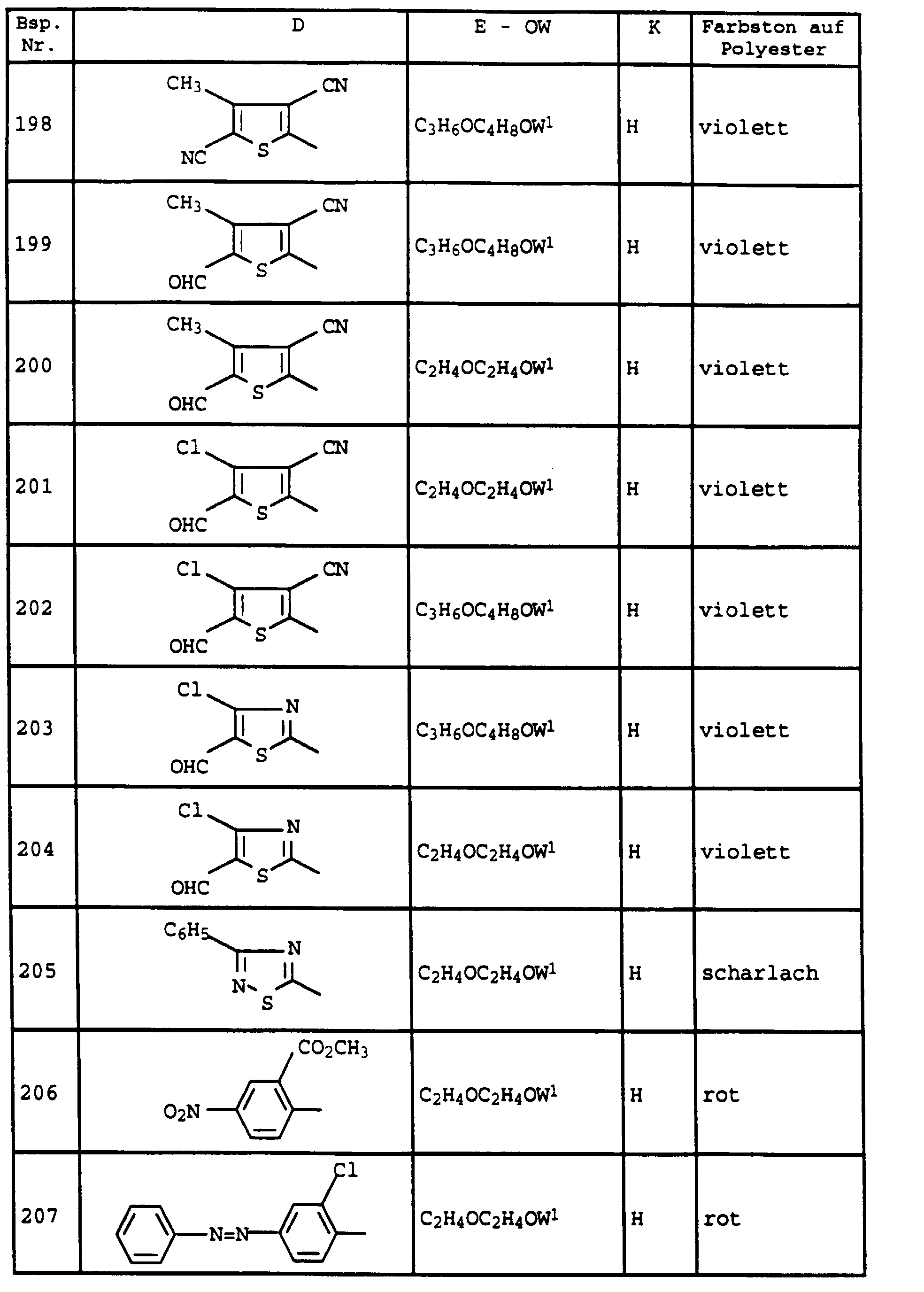

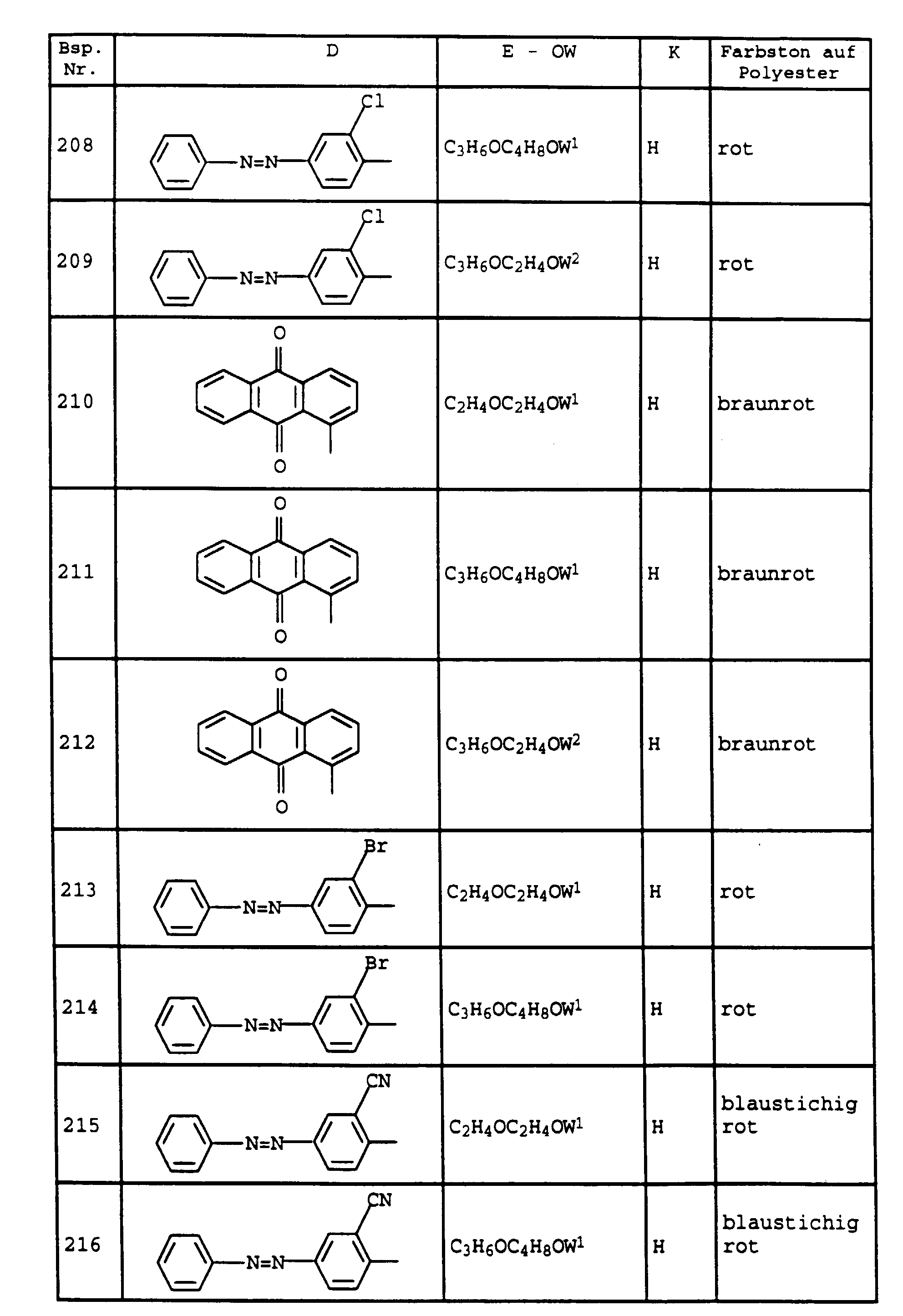

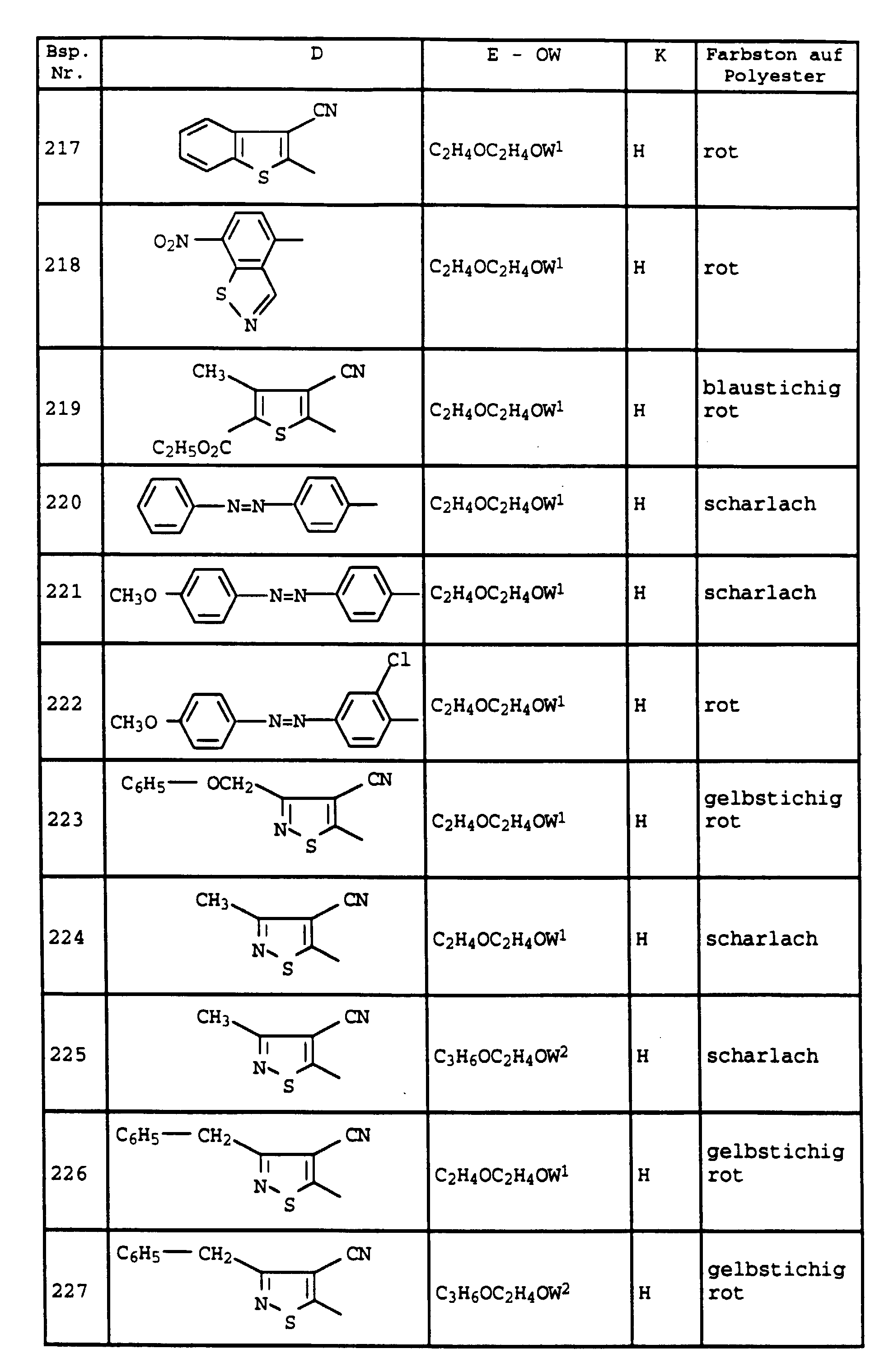

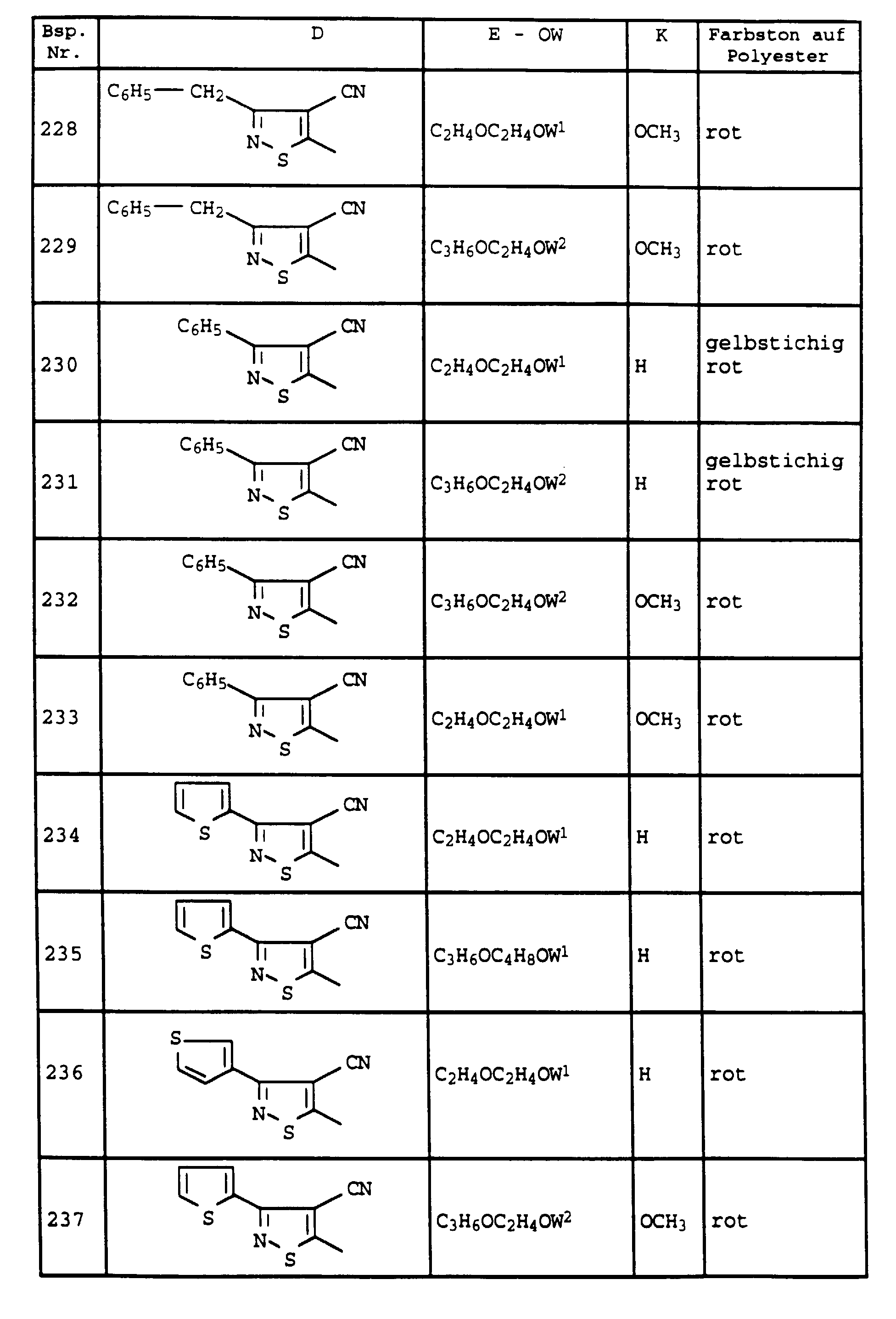

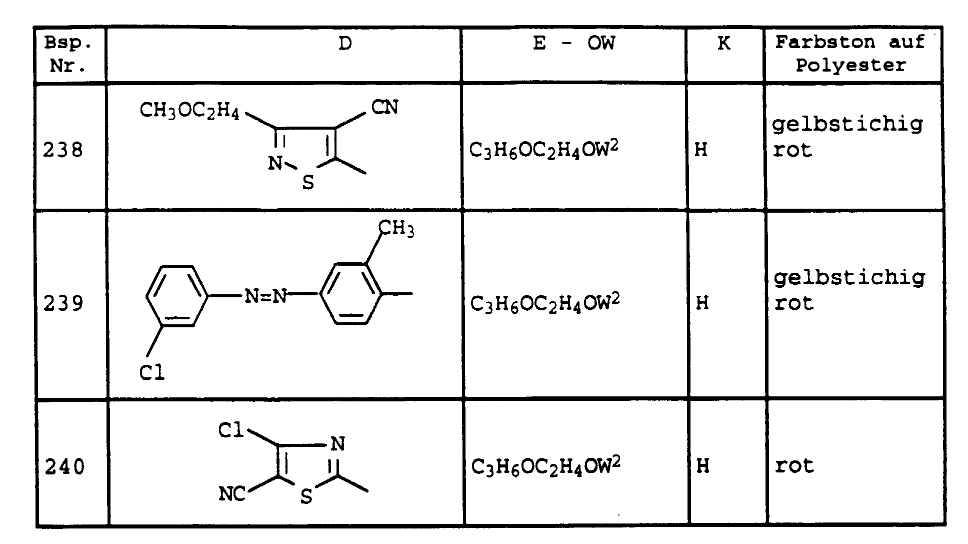

Ähnlich günstige Ergebnisse werden erzielt, wenn man die in Tabelle 5 aufgeführten Mischungen verwendet, die die Farbstoffe A und B im Gewichtsverhaltnis von 30:70 und 40:60 aufweisen.

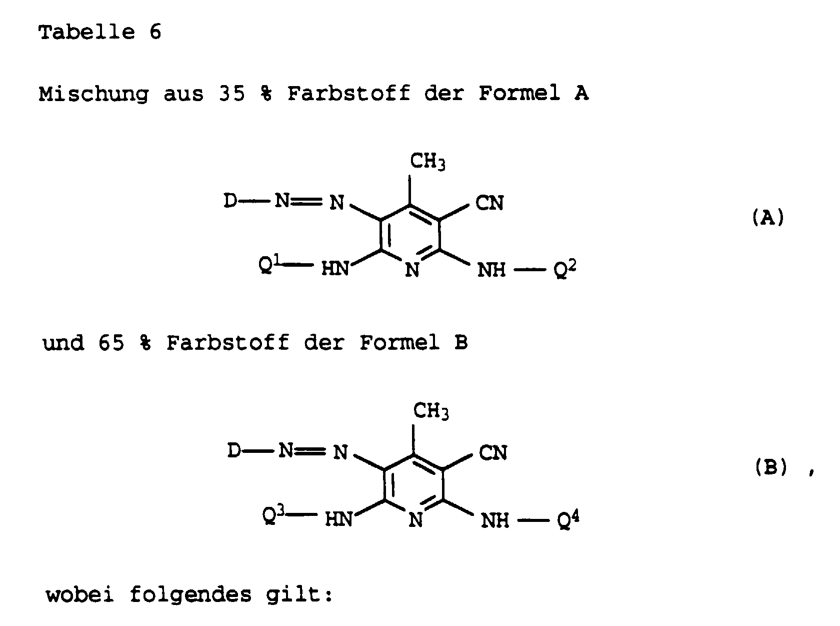

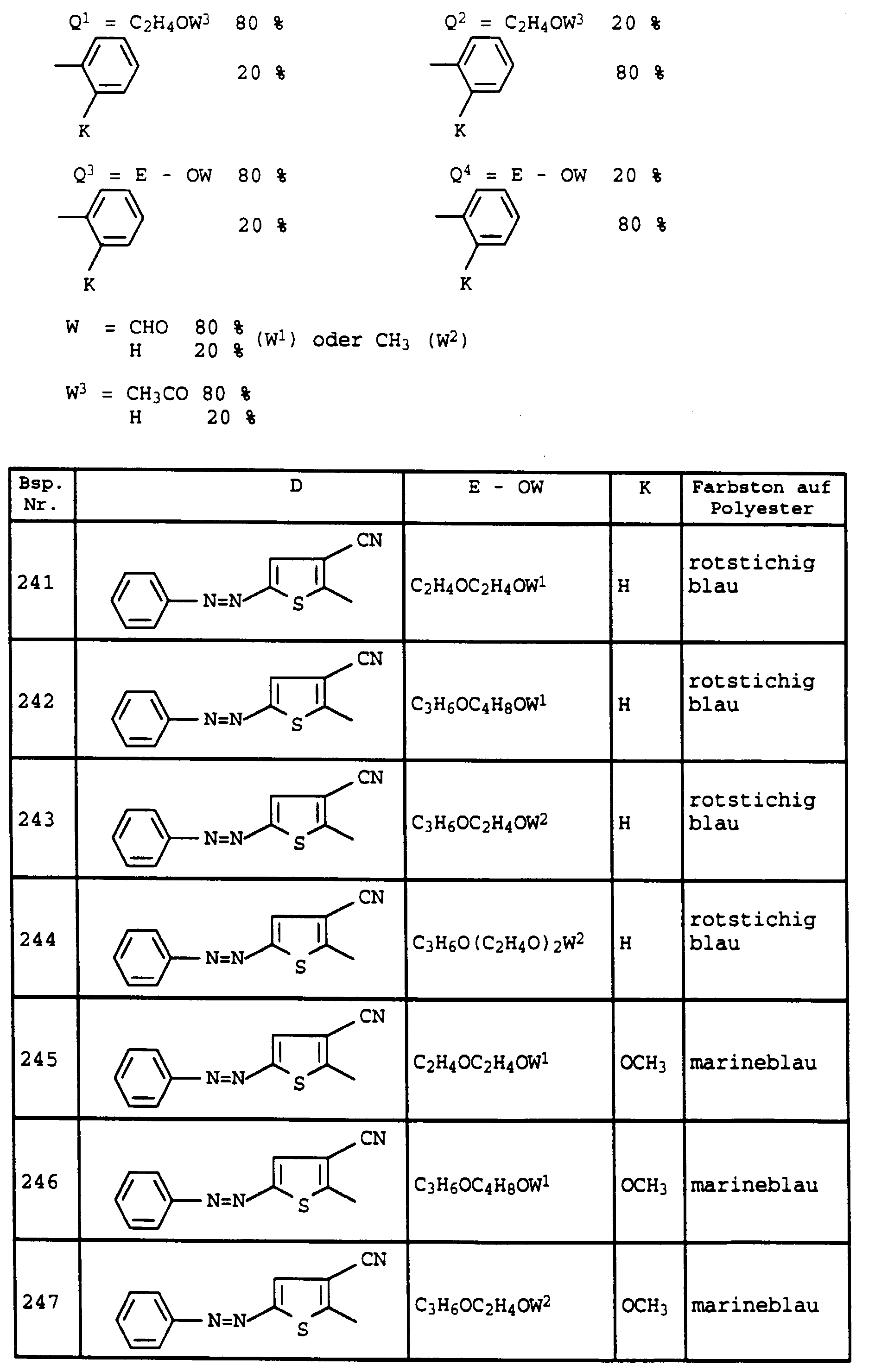

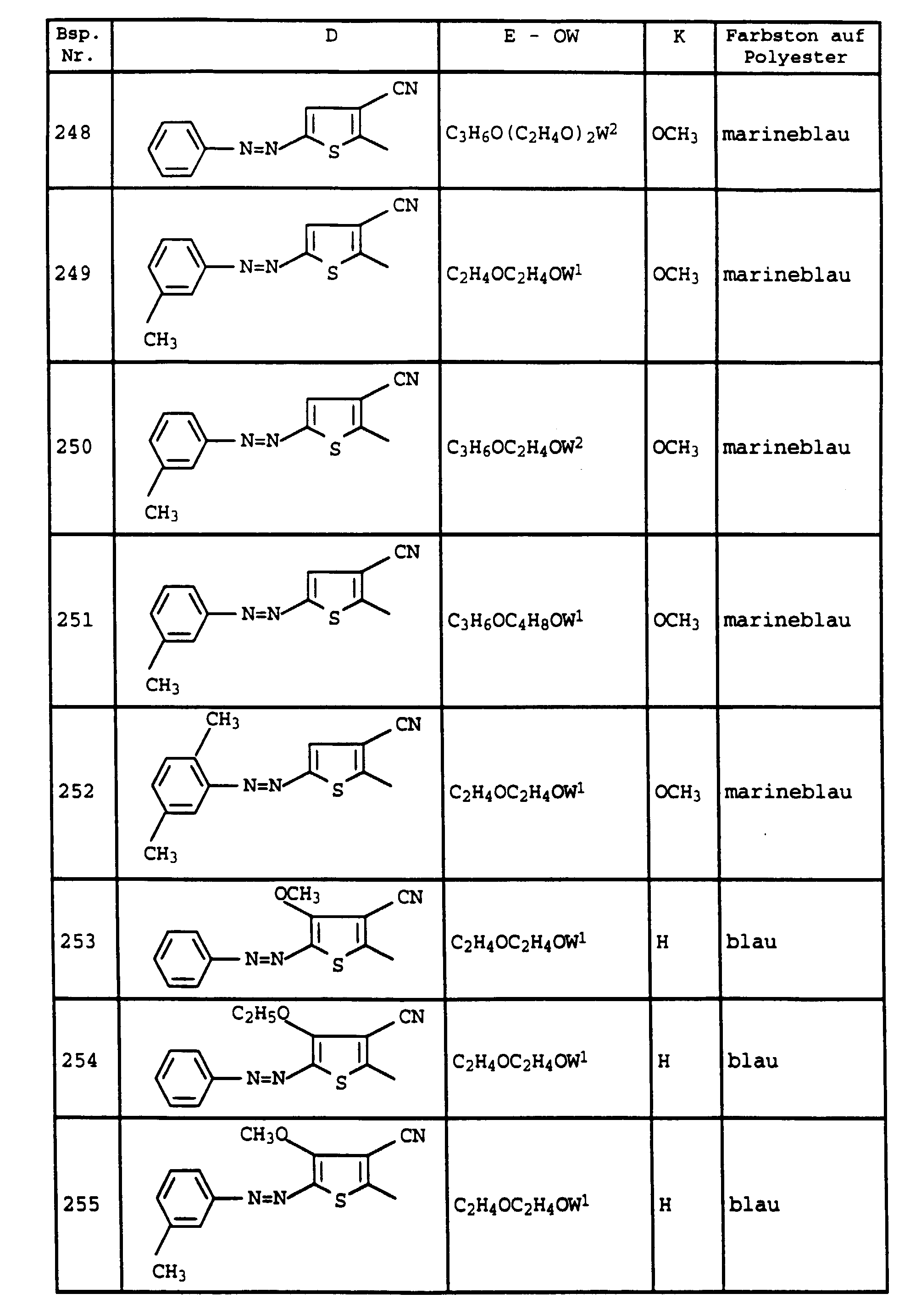

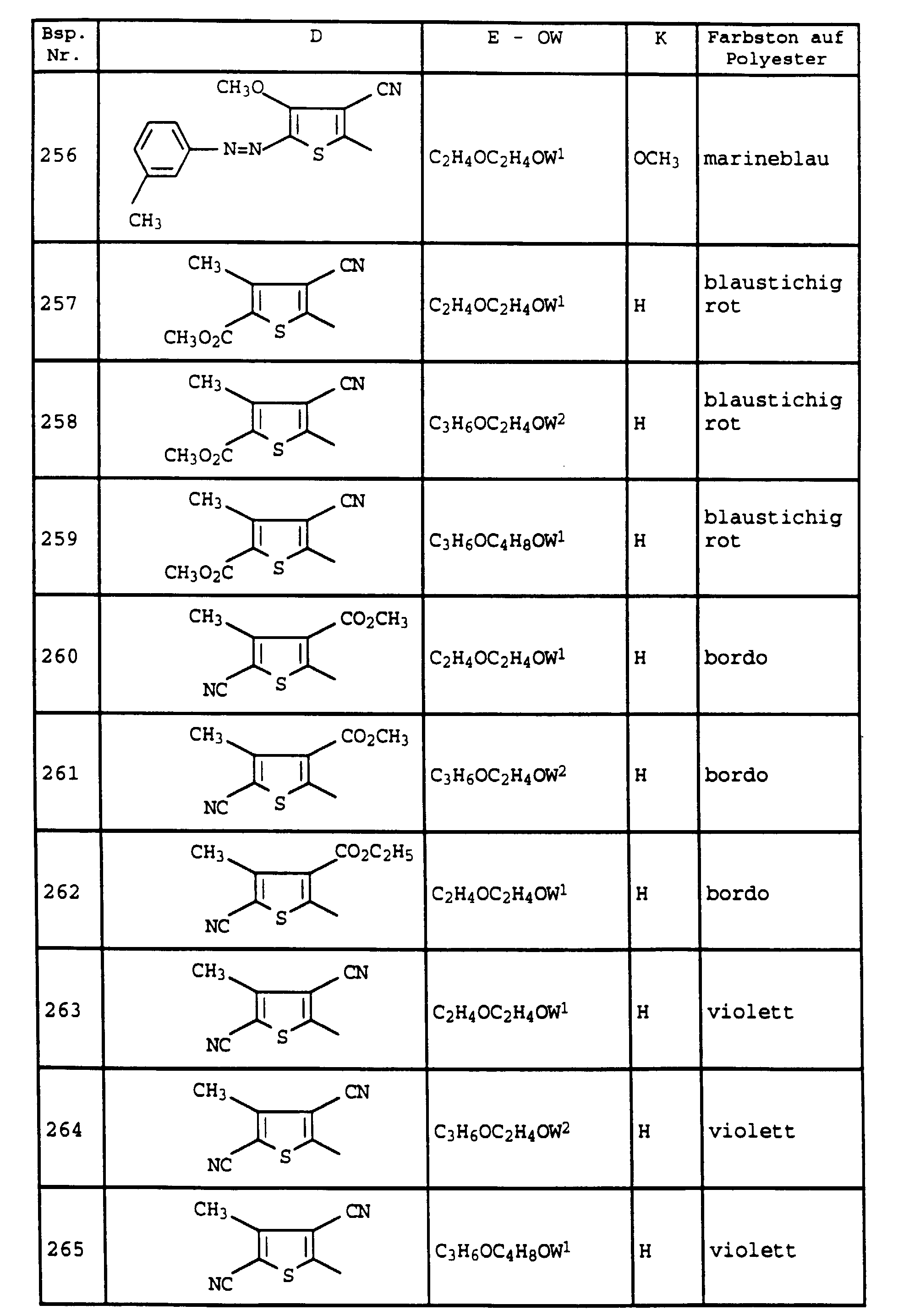

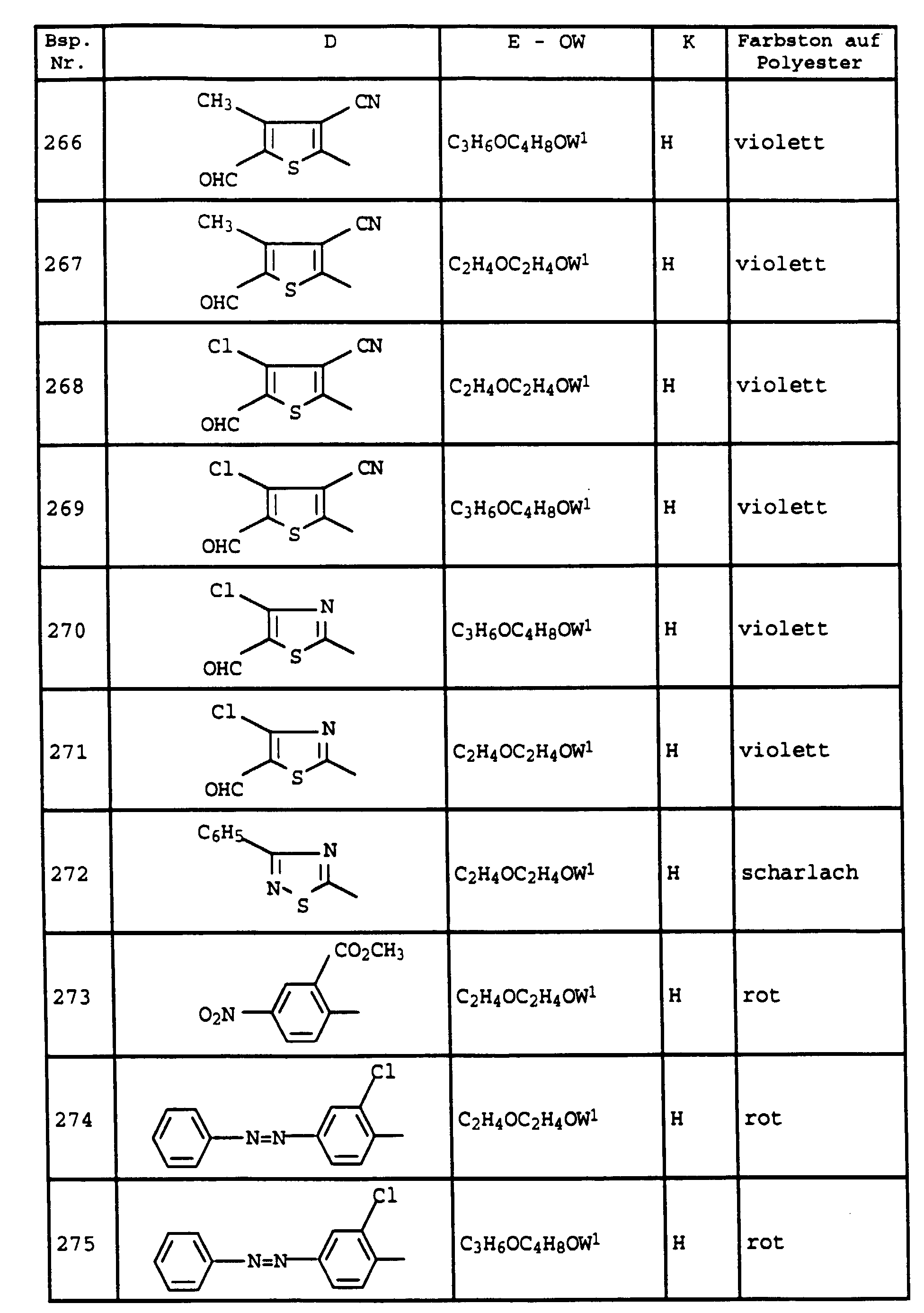

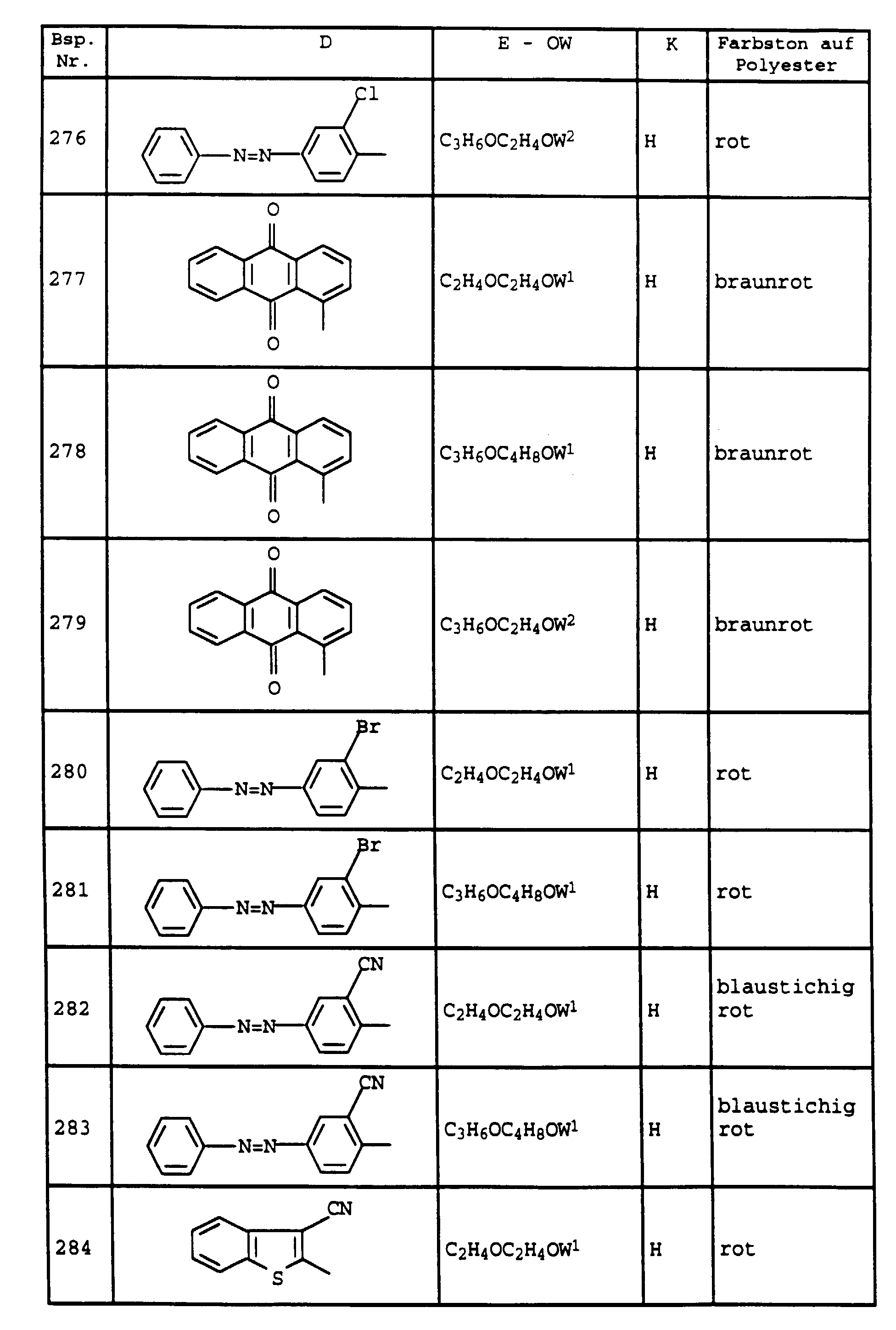

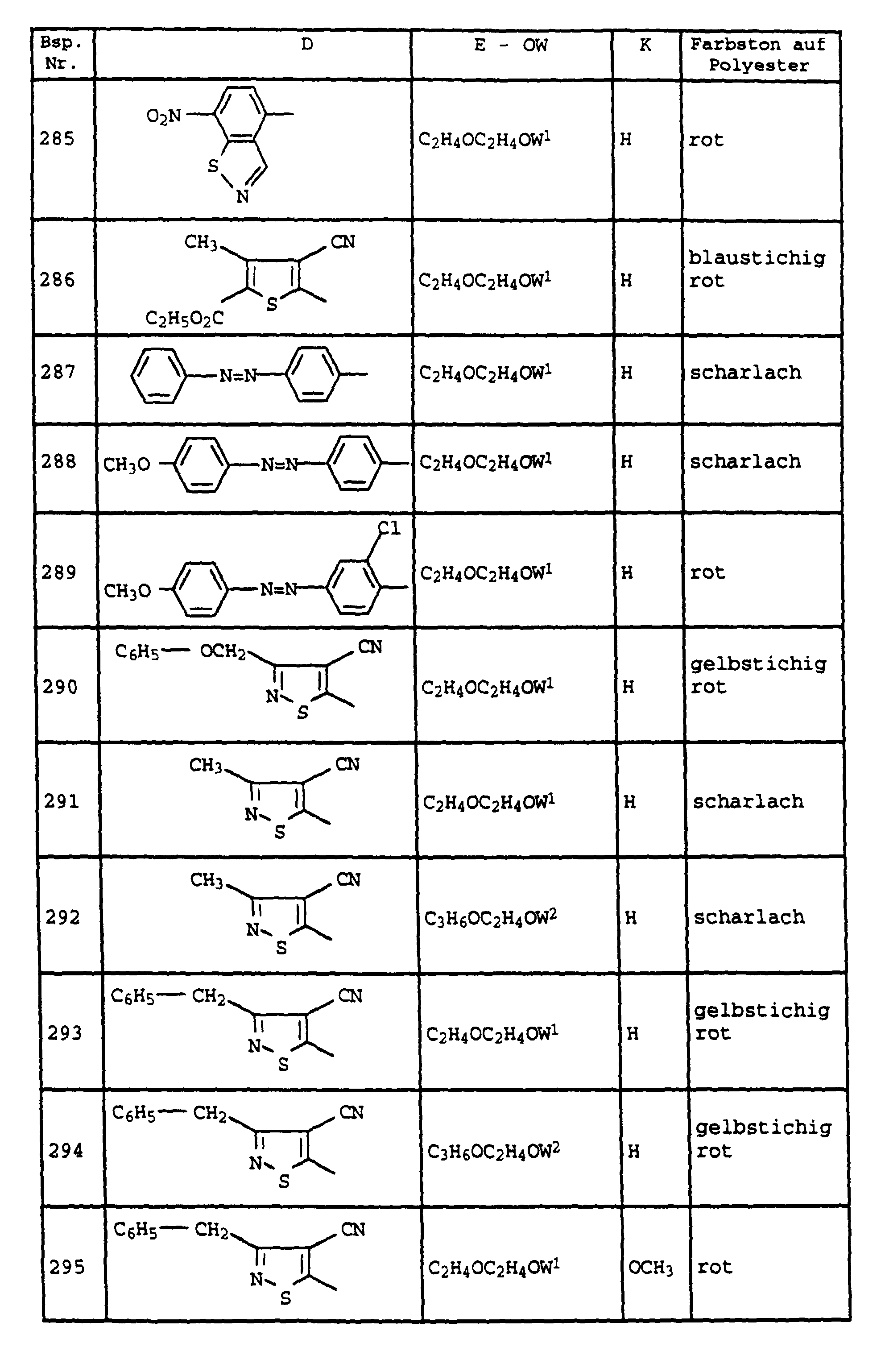

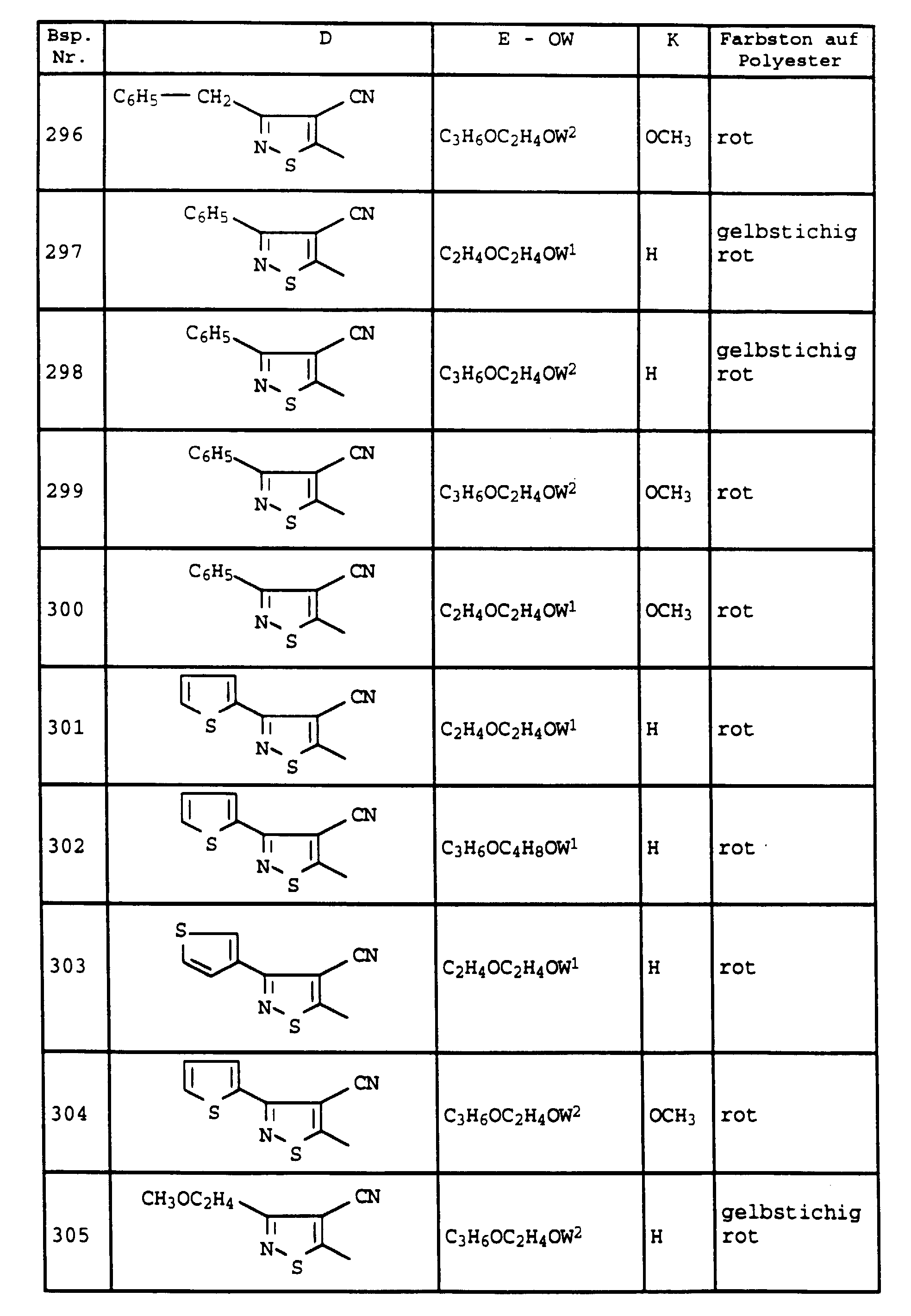

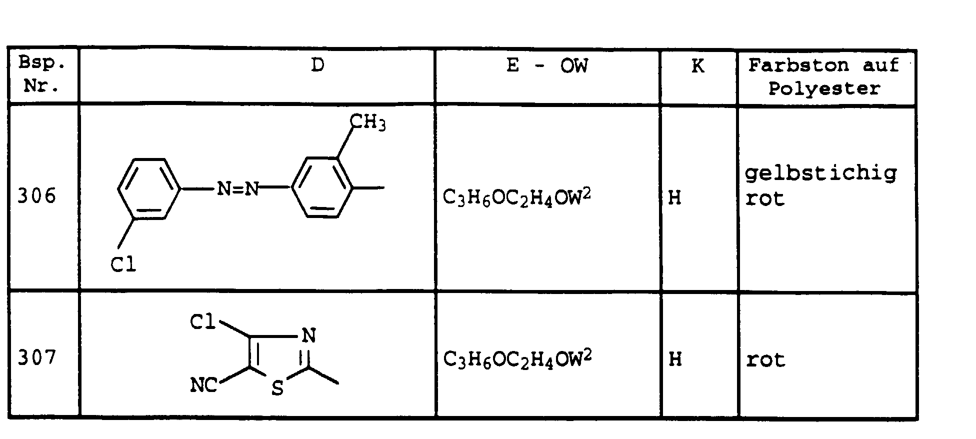

Ähnlich günstige Ergebnisse werden erzielt, wenn man die in Tabelle 6 aufgeführten Mischungen verwendet, die die Farbstoffe A und B im Gewichtsverhaltnis von 30:70 und 40:60 aufweisen.

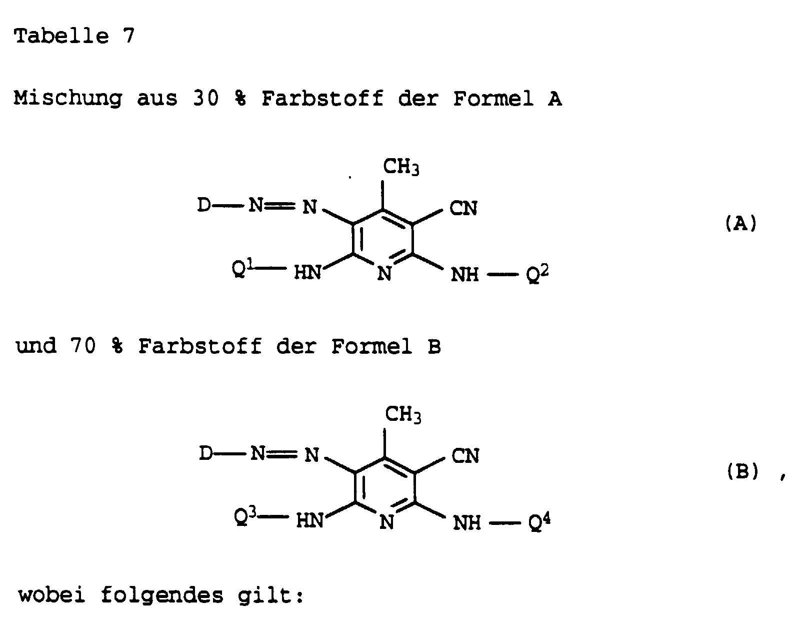

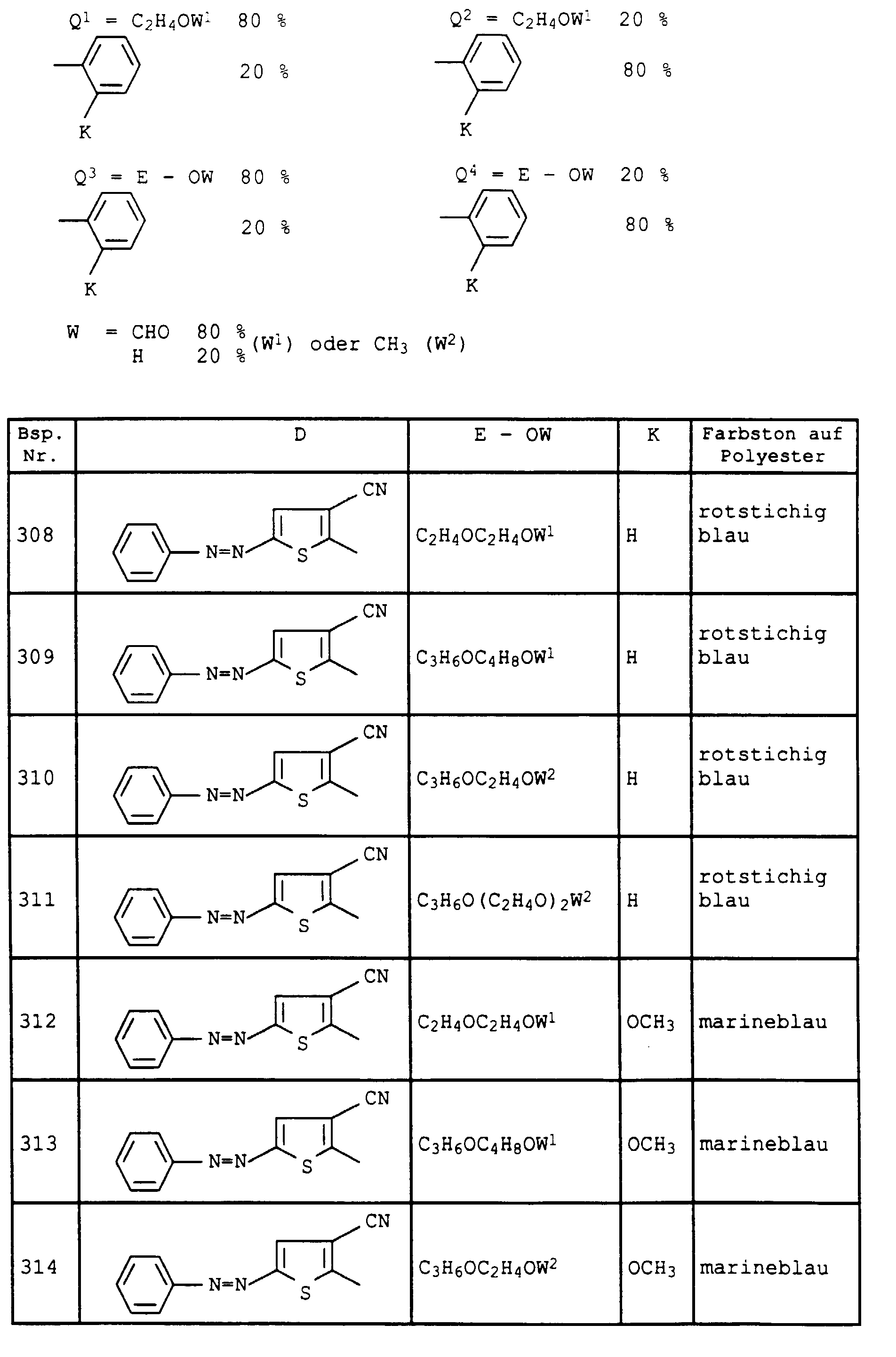

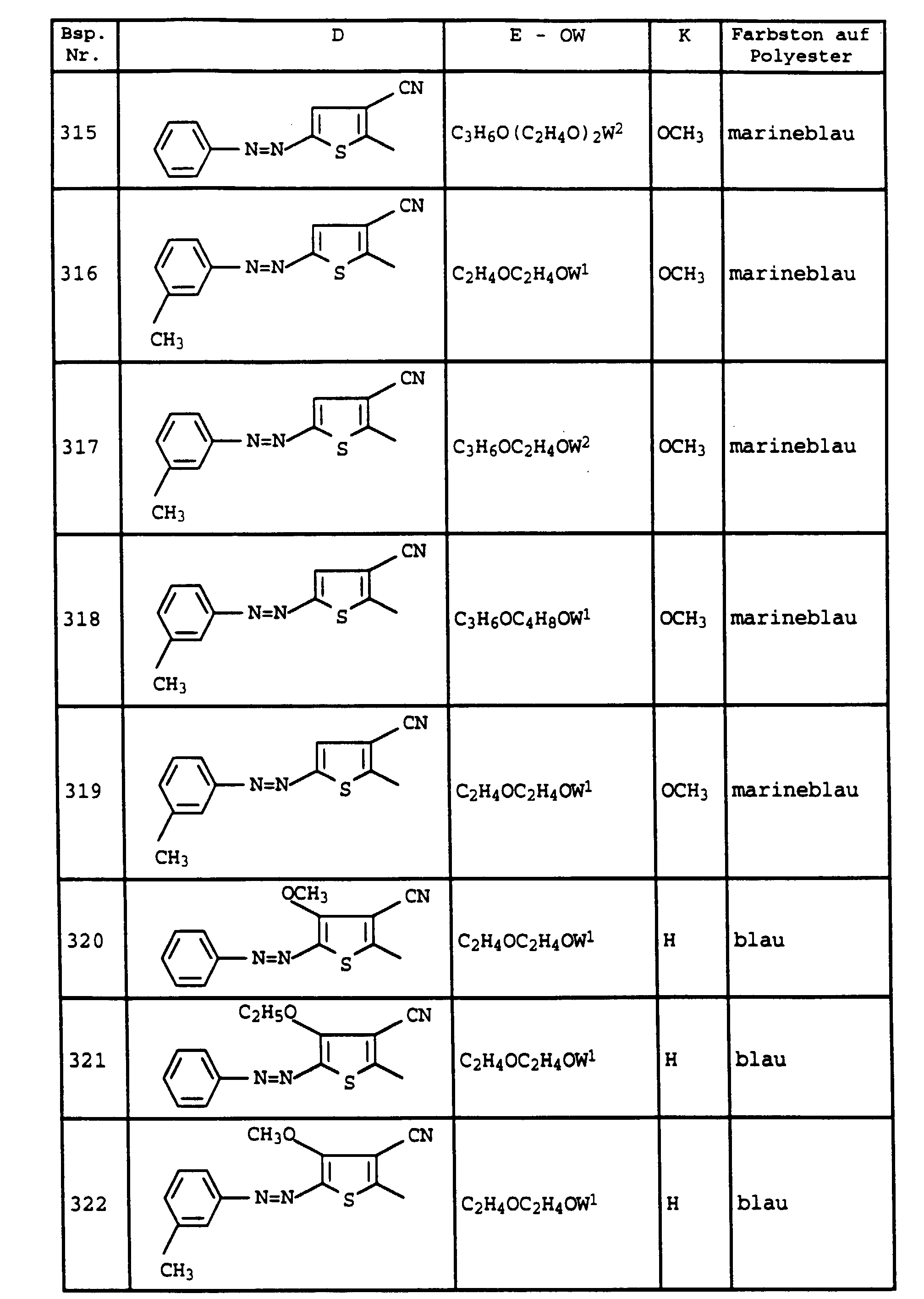

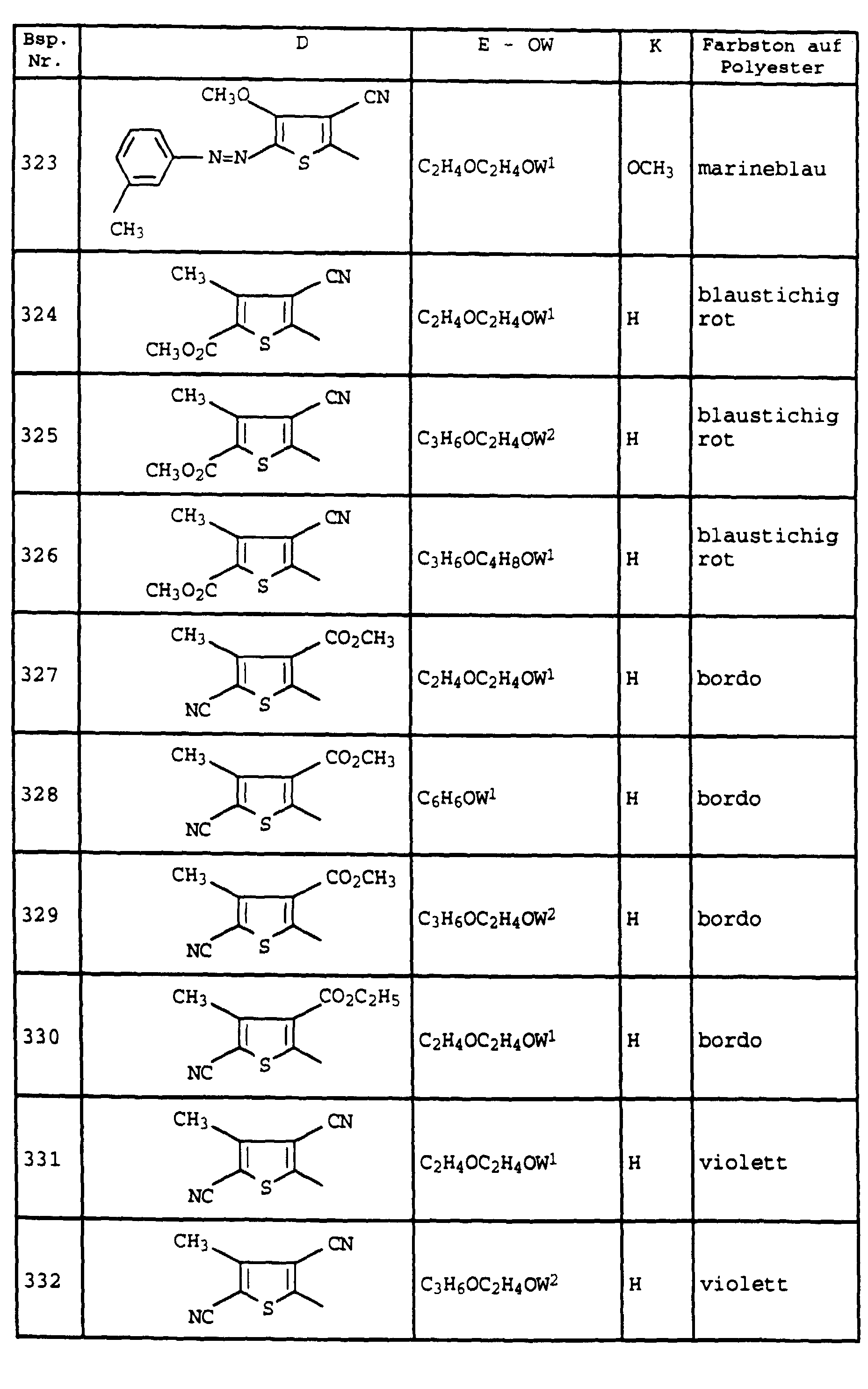

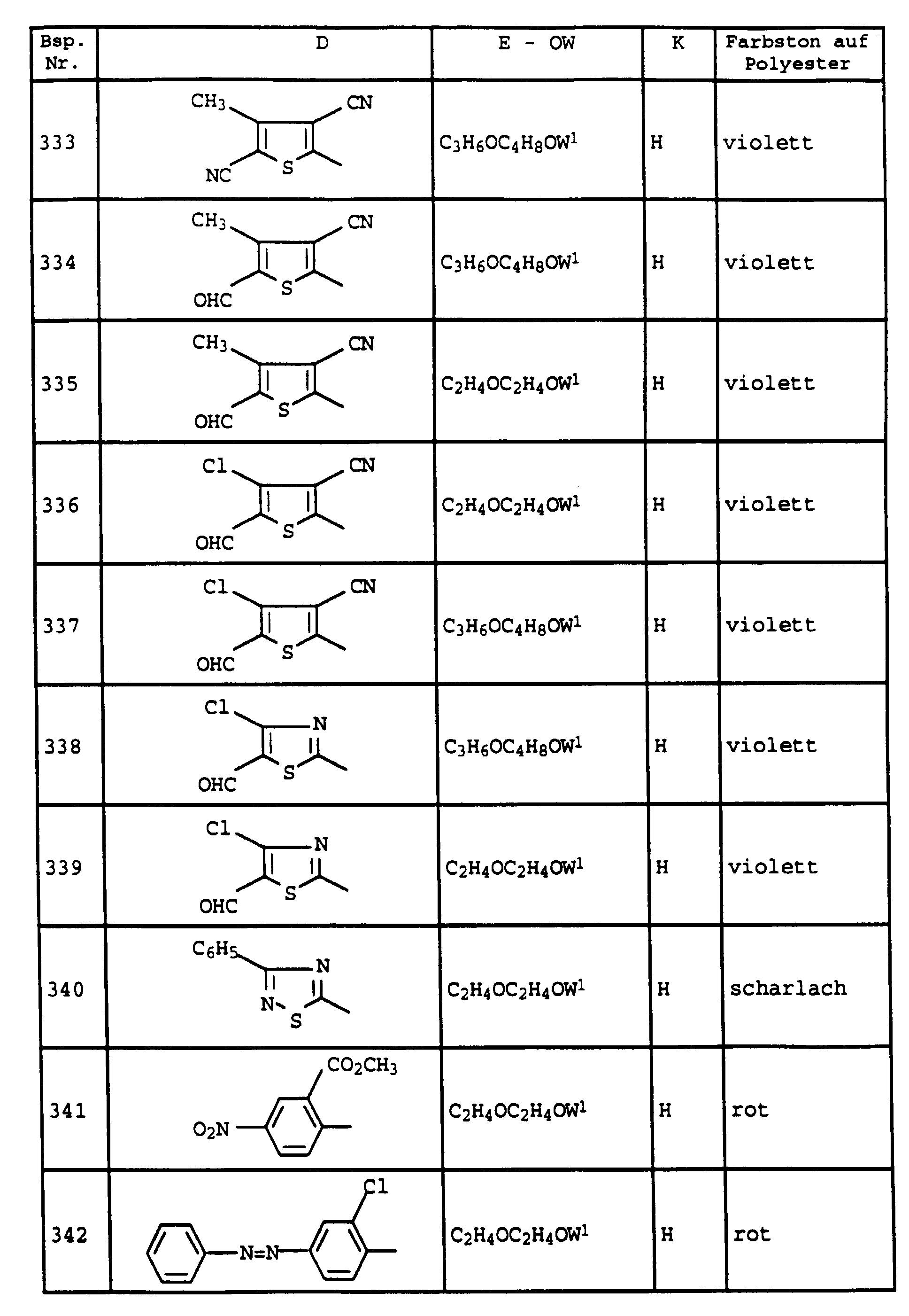

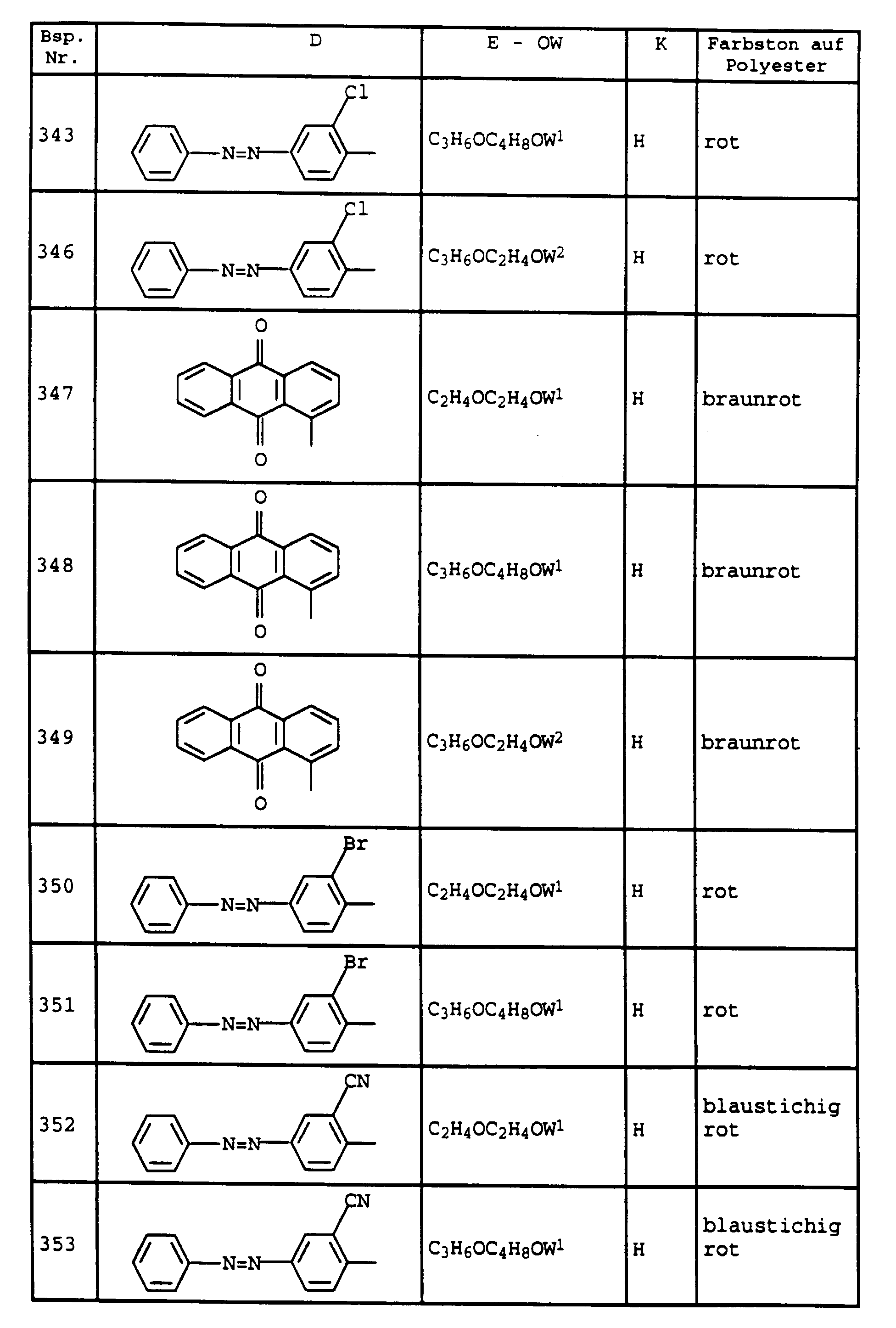

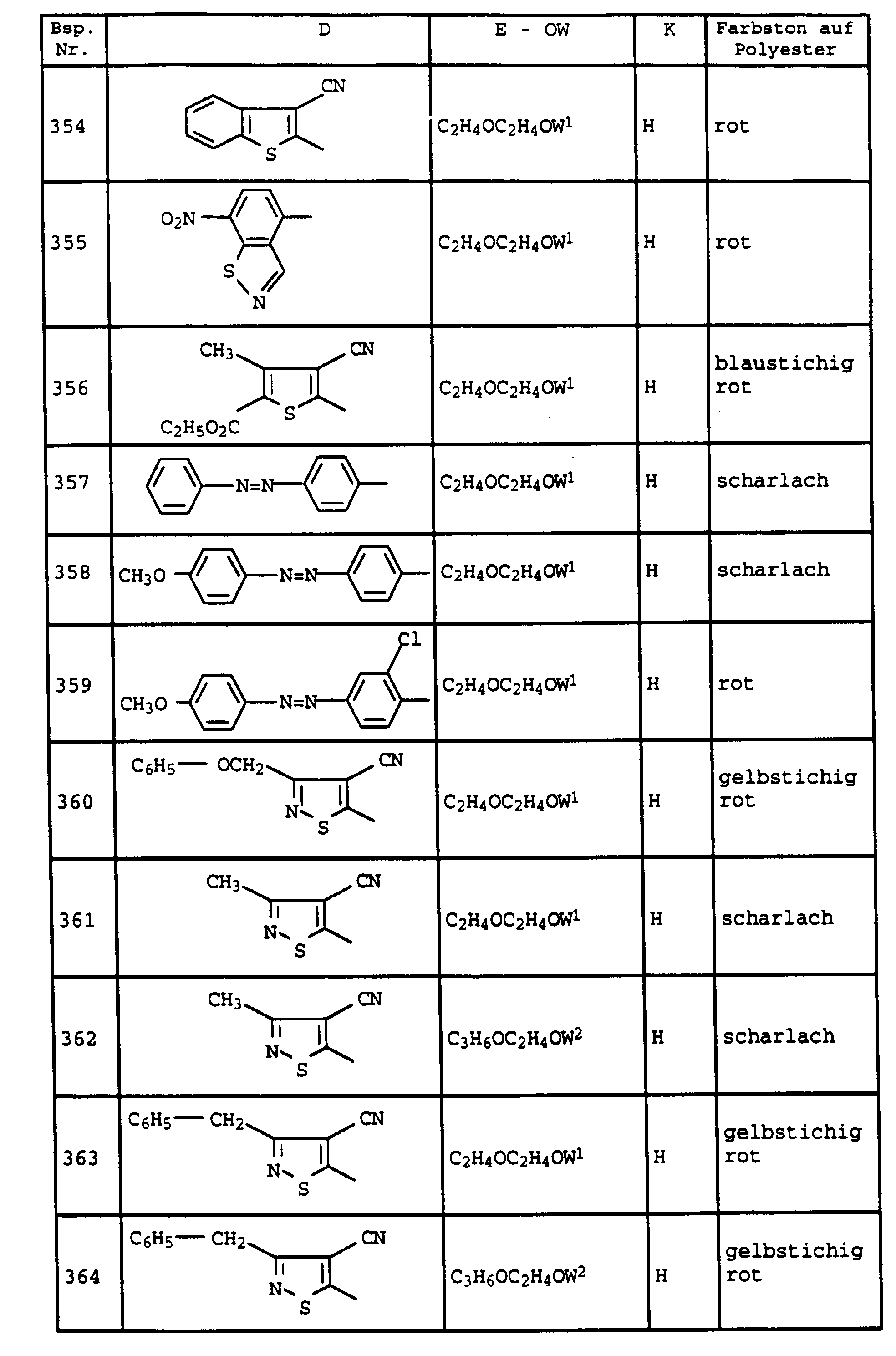

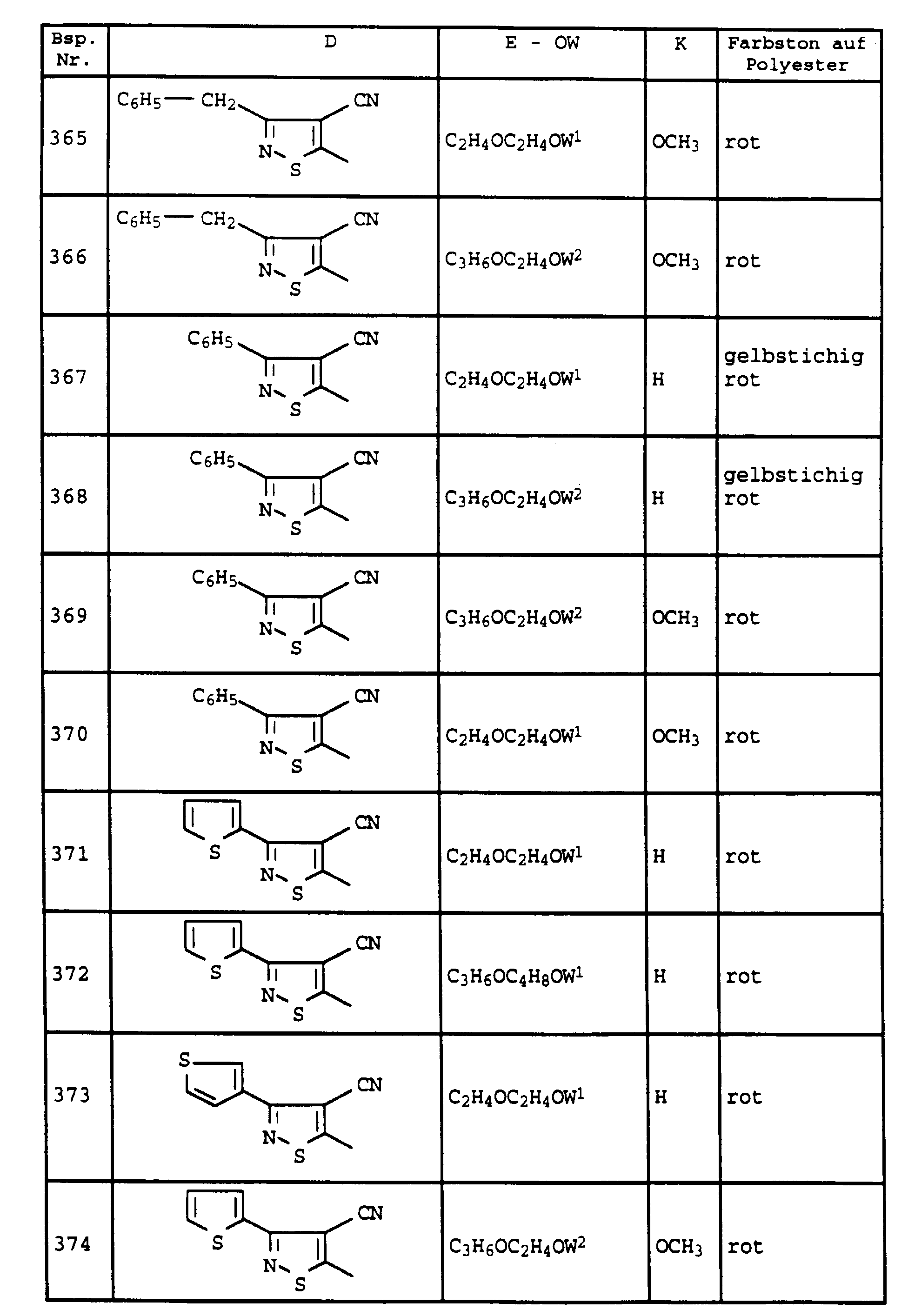

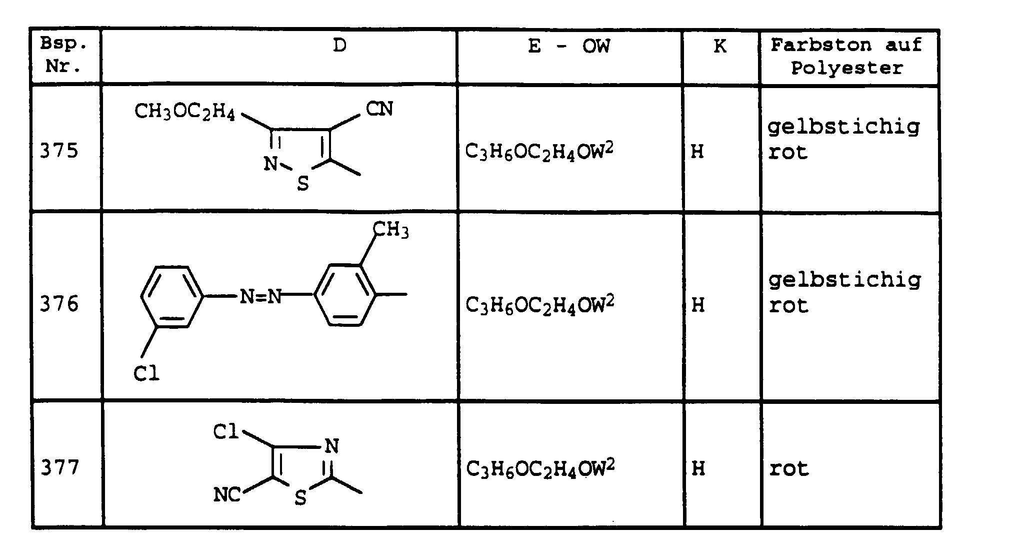

Ähnlich günstige Ergebnisse werden erzielt, wenn man die in Tabelle 7 aufgeführten Mischungen verwendet, die die Farbstoffe A und B im Gewichtsverhhltnis von 35:65 und 40:60 aufweisen.

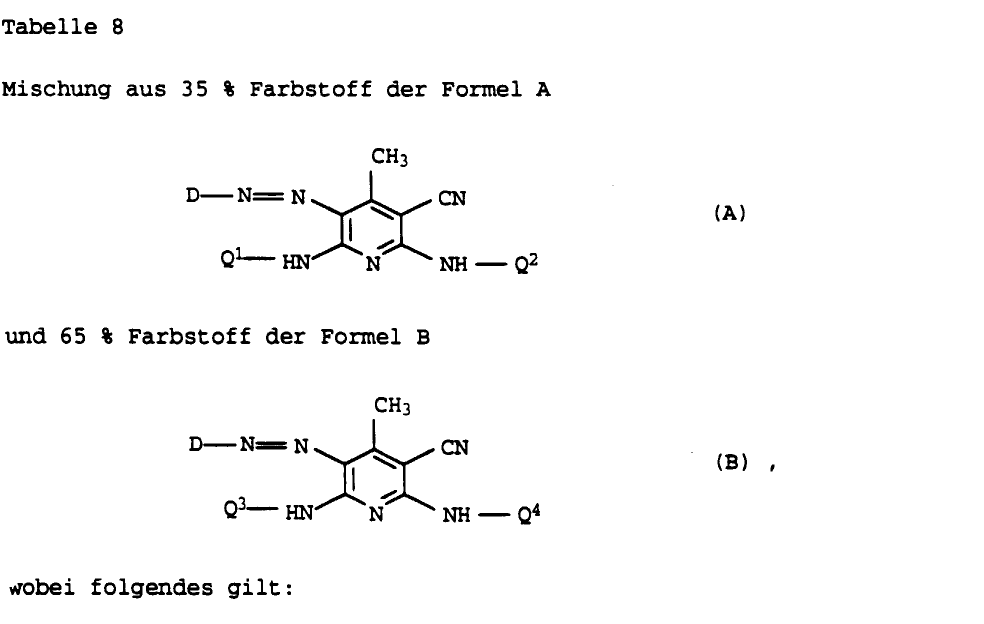

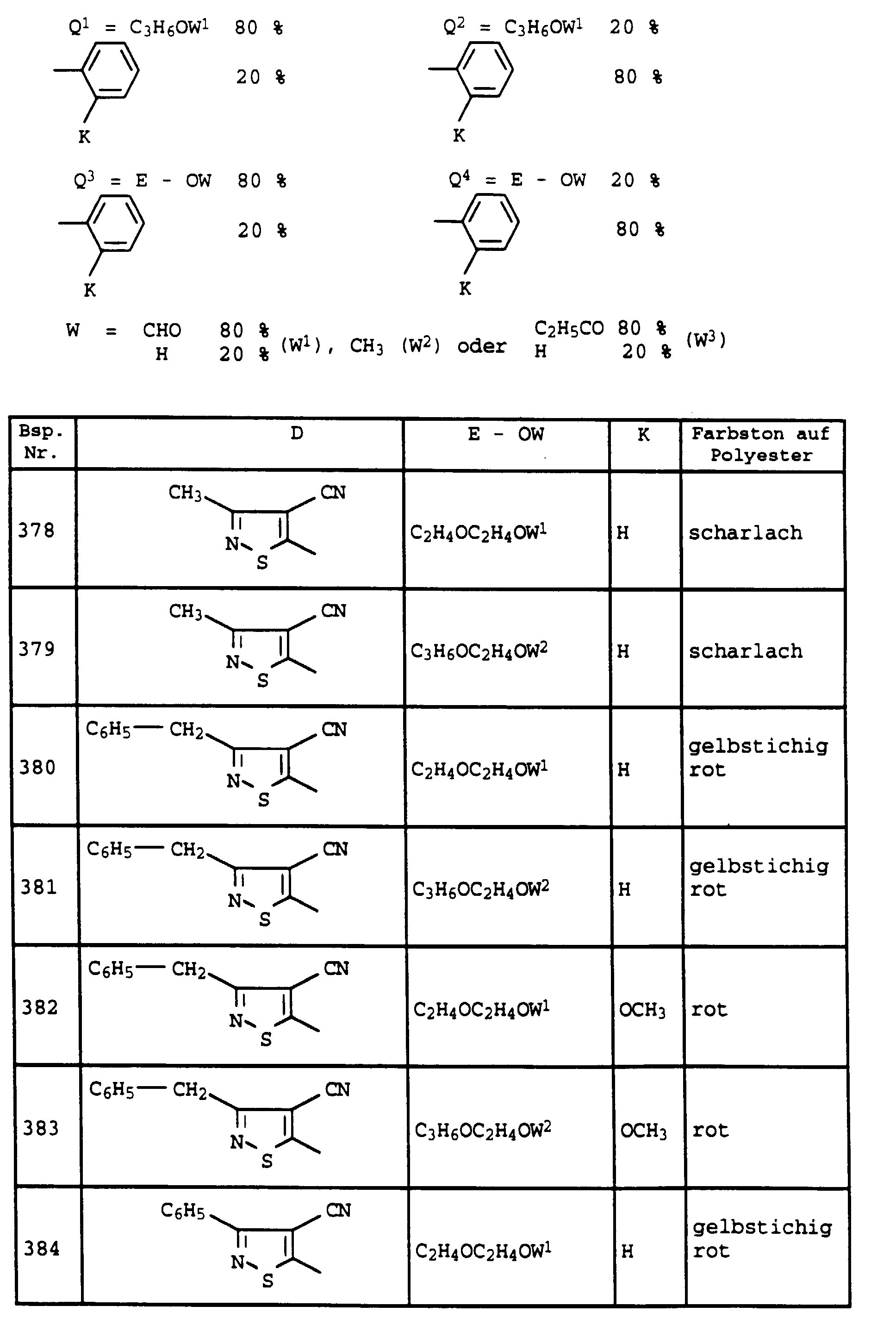

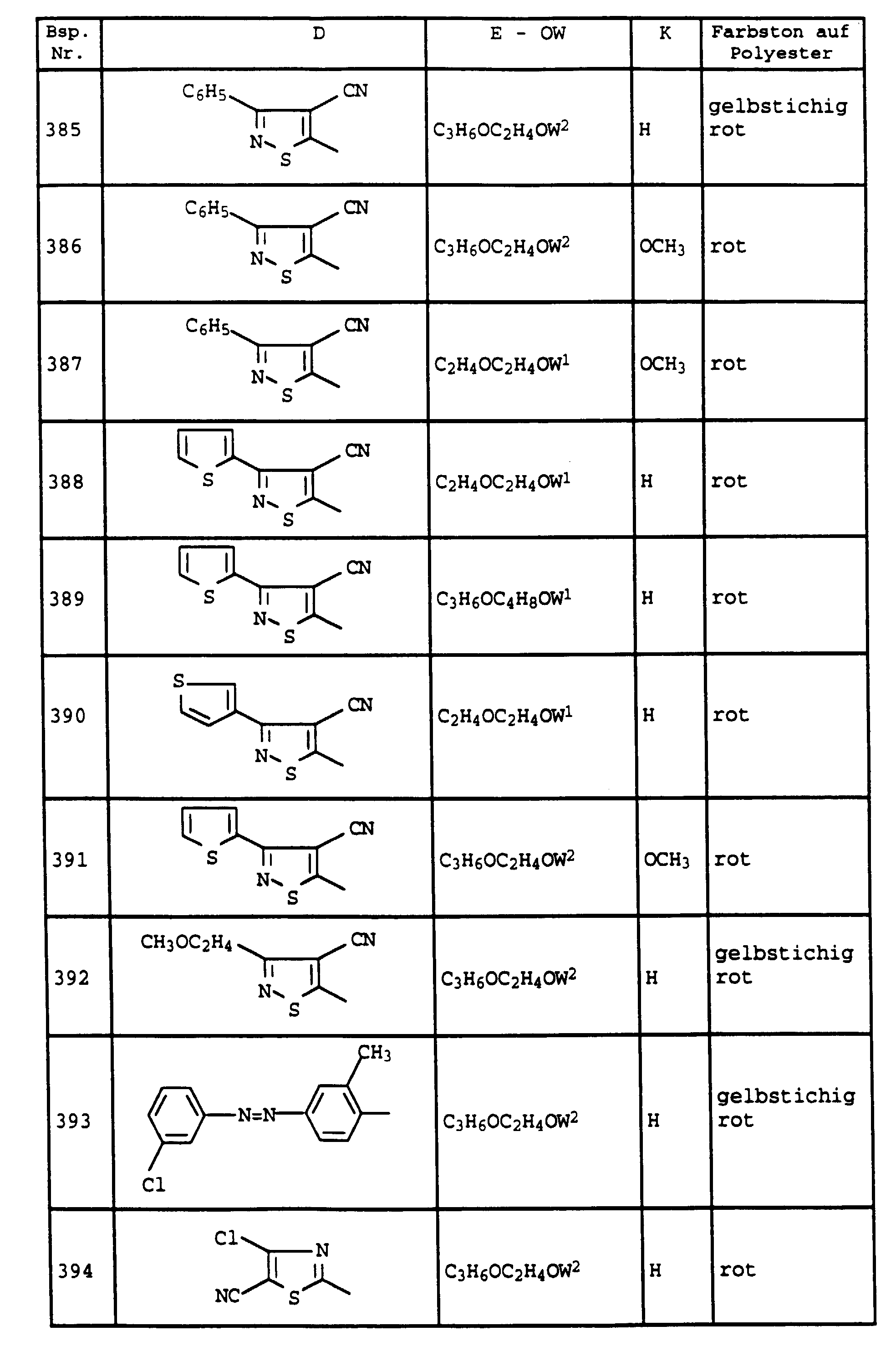

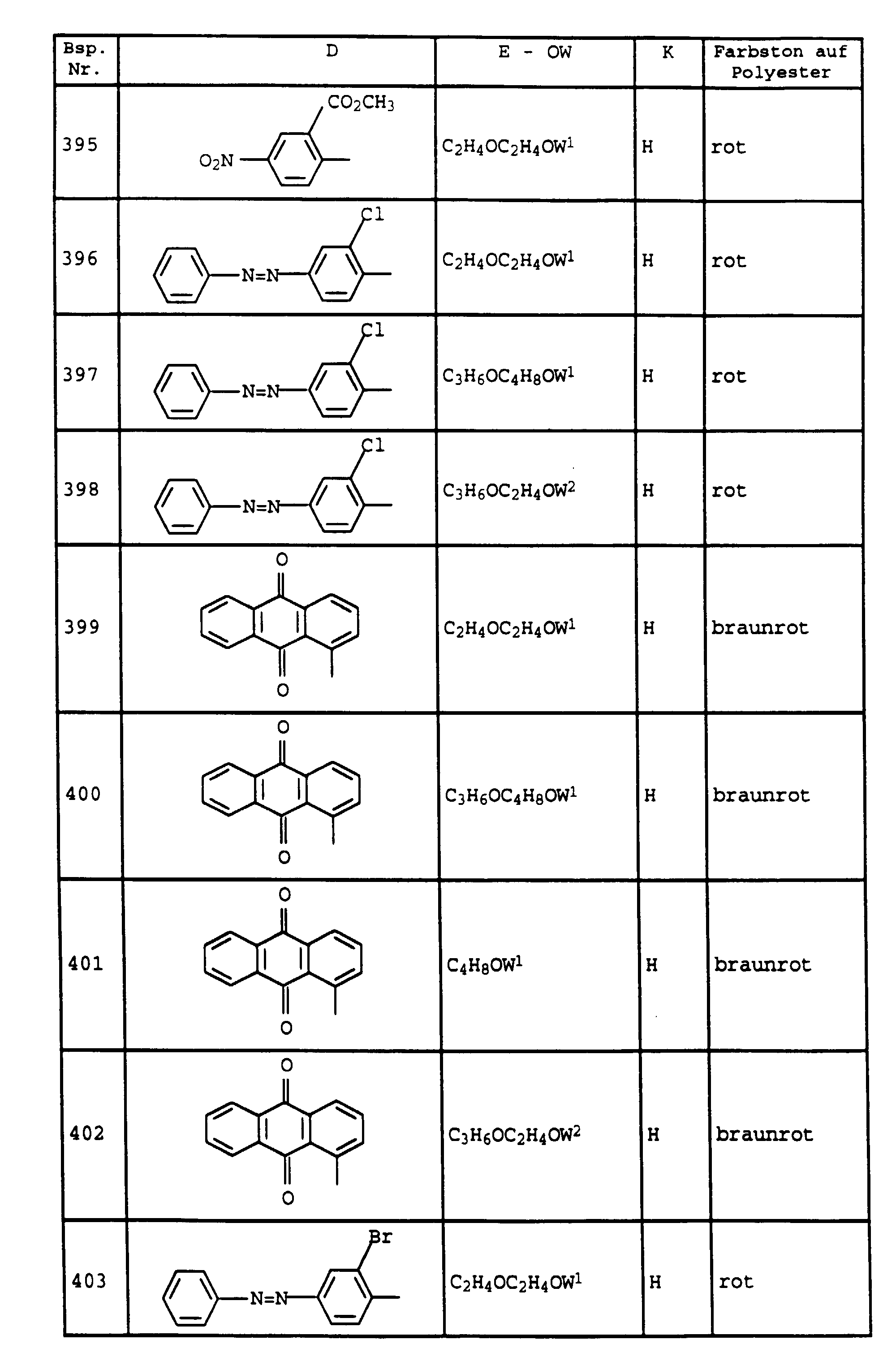

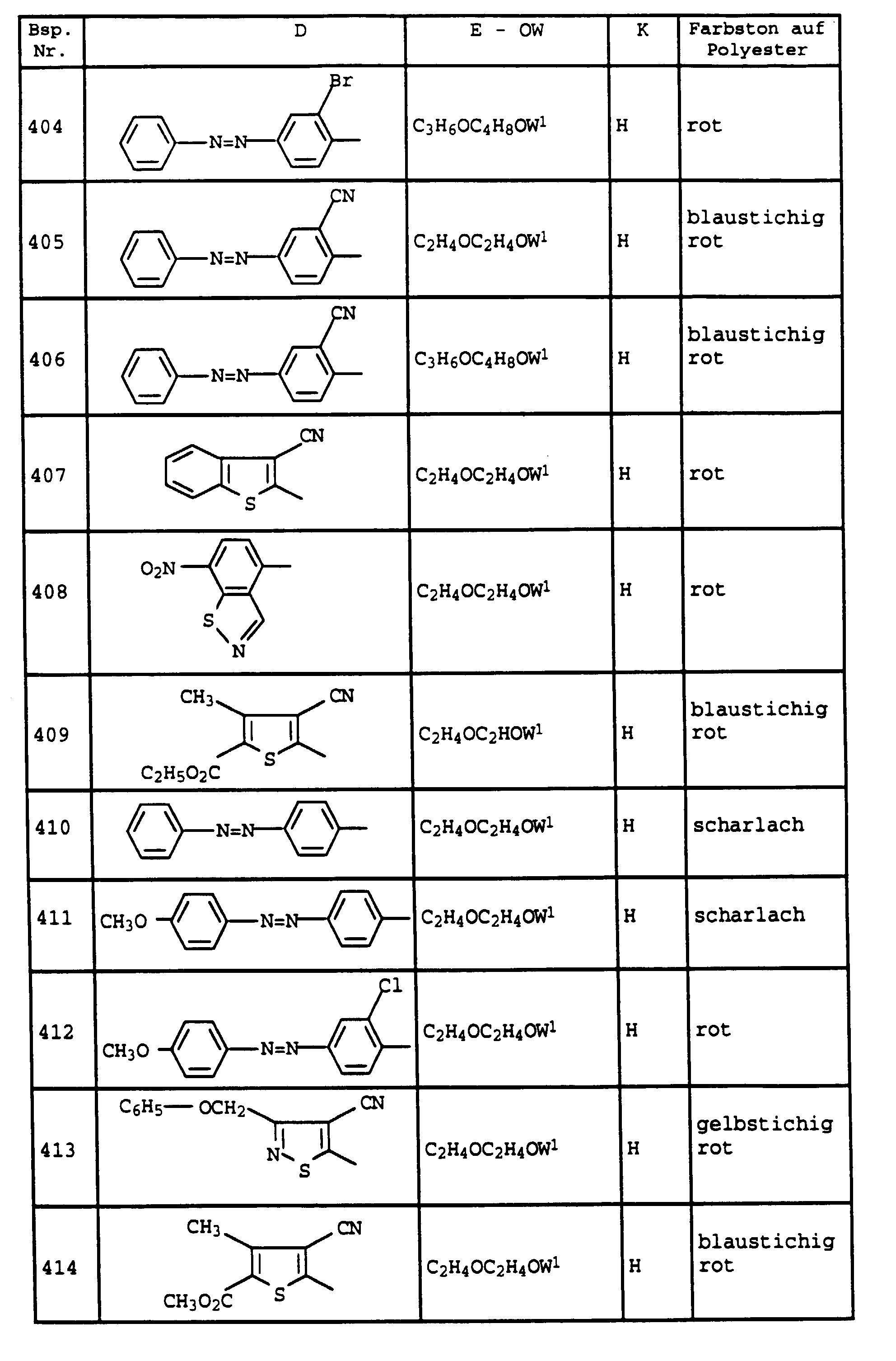

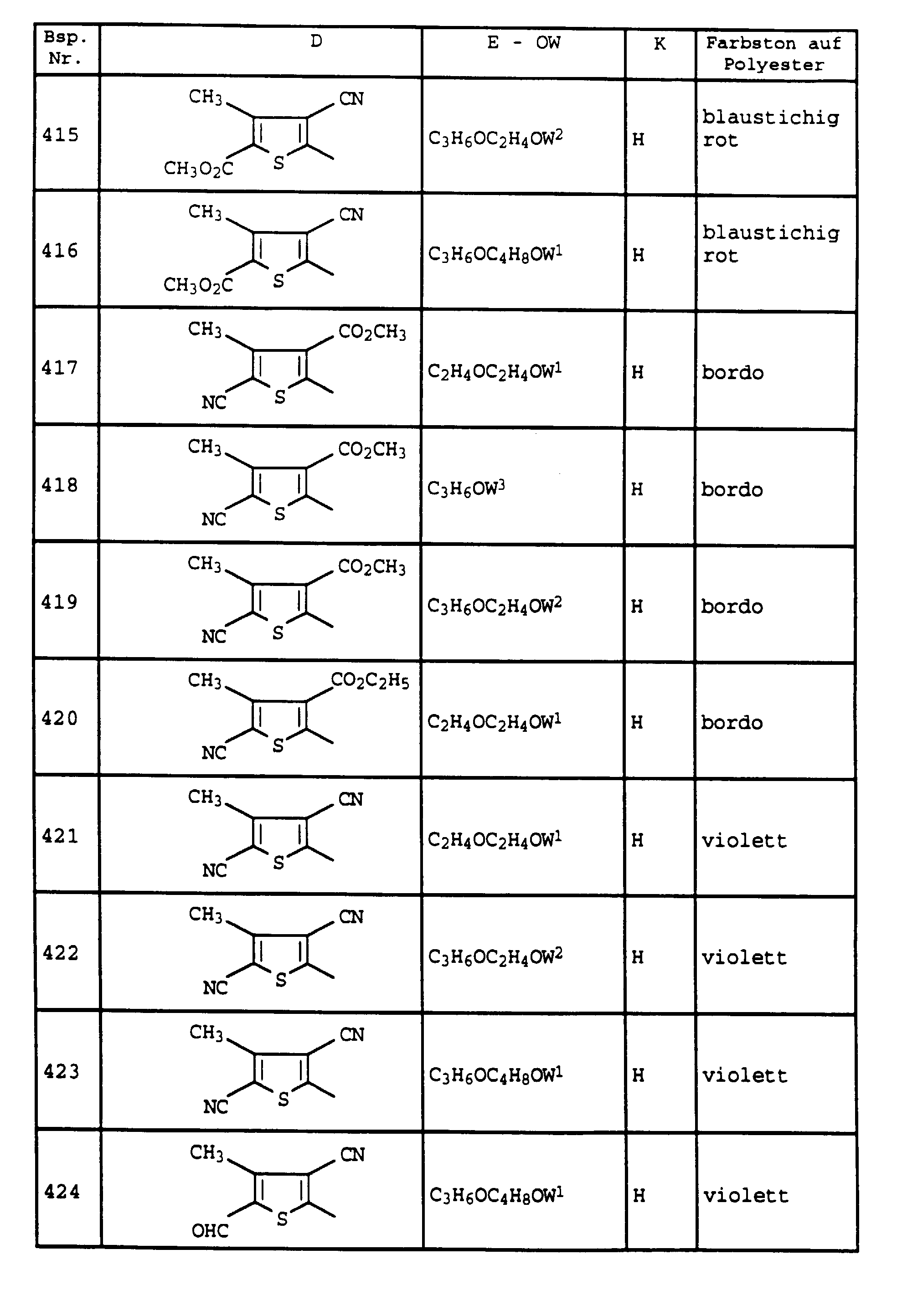

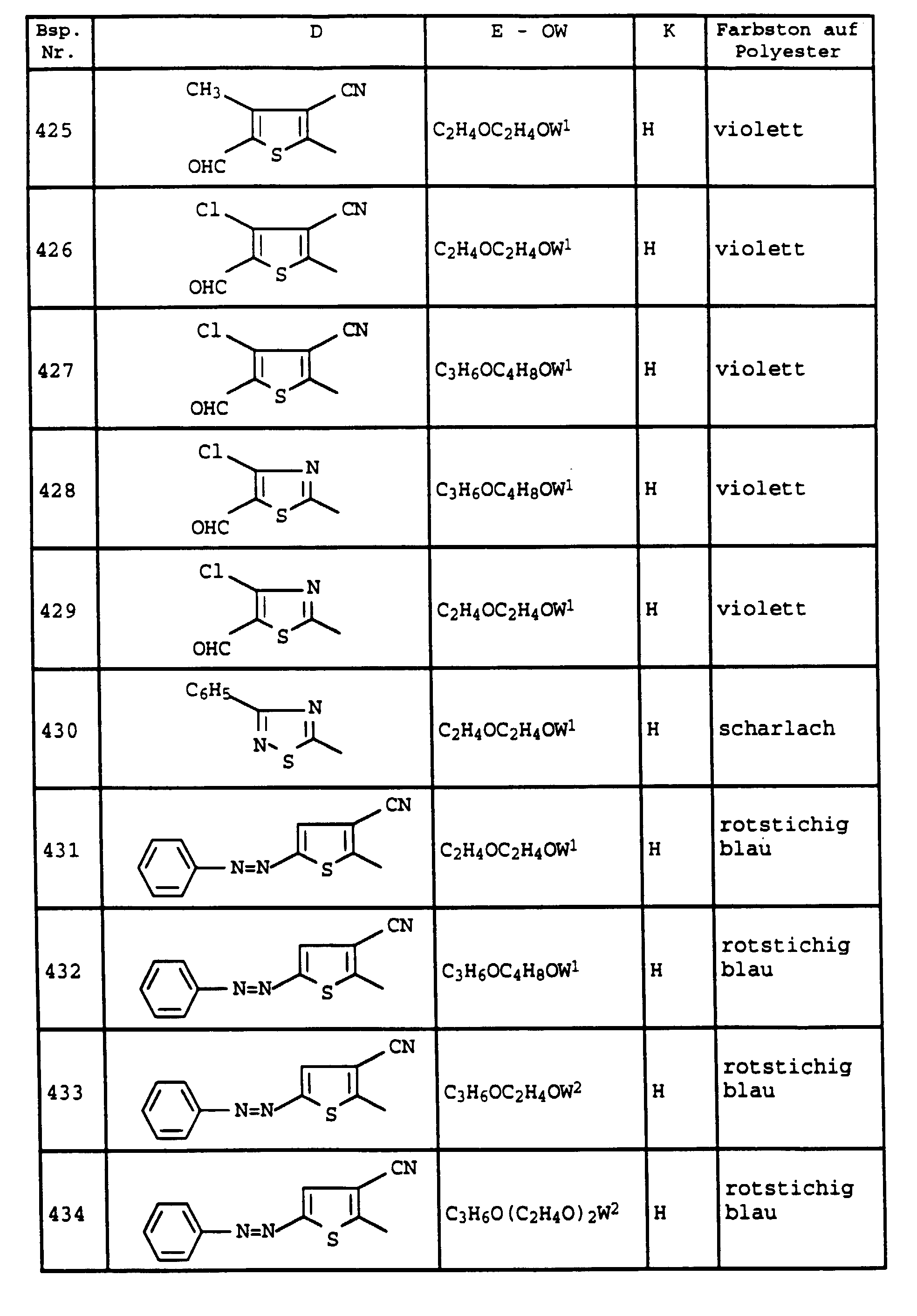

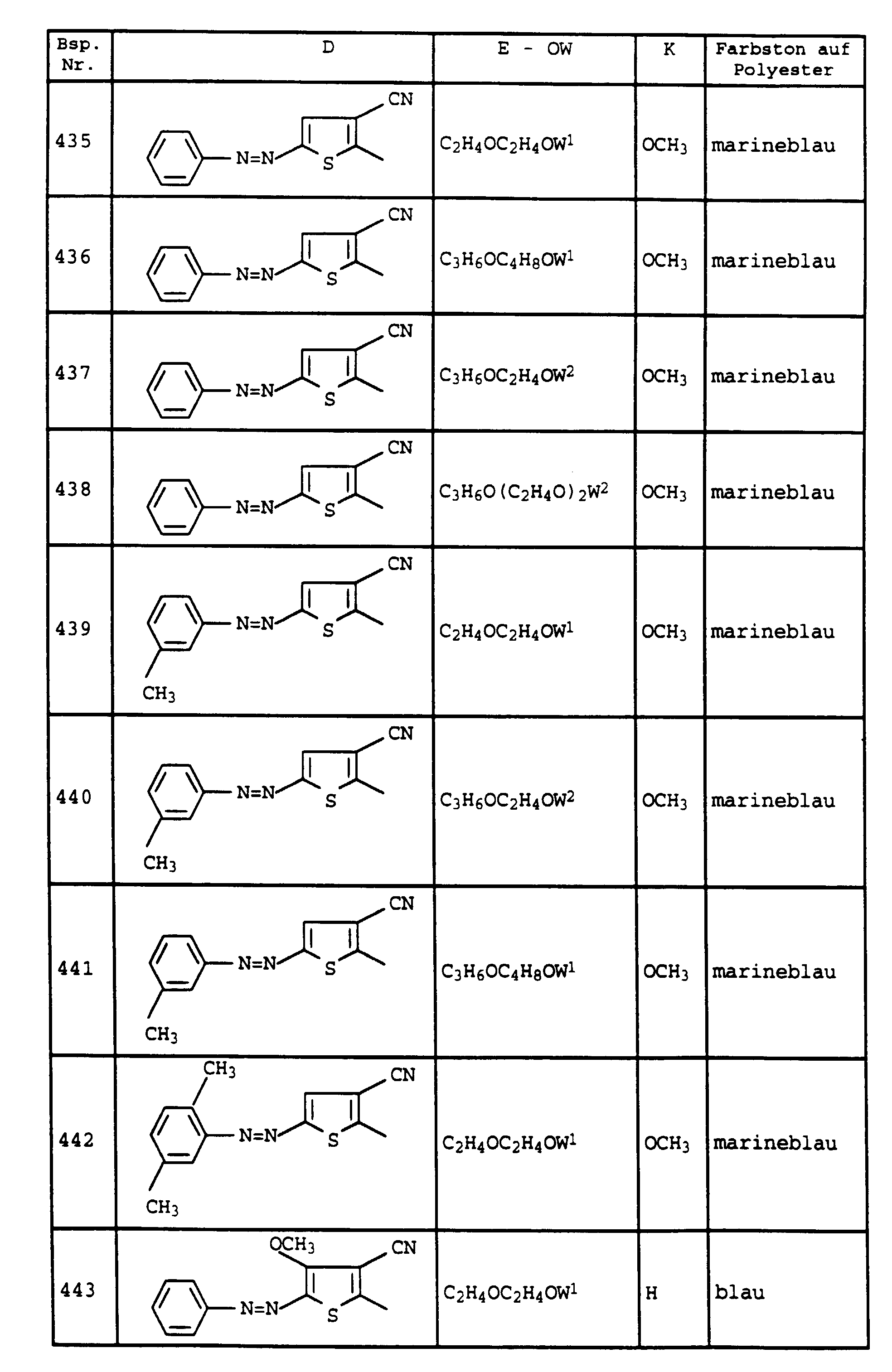

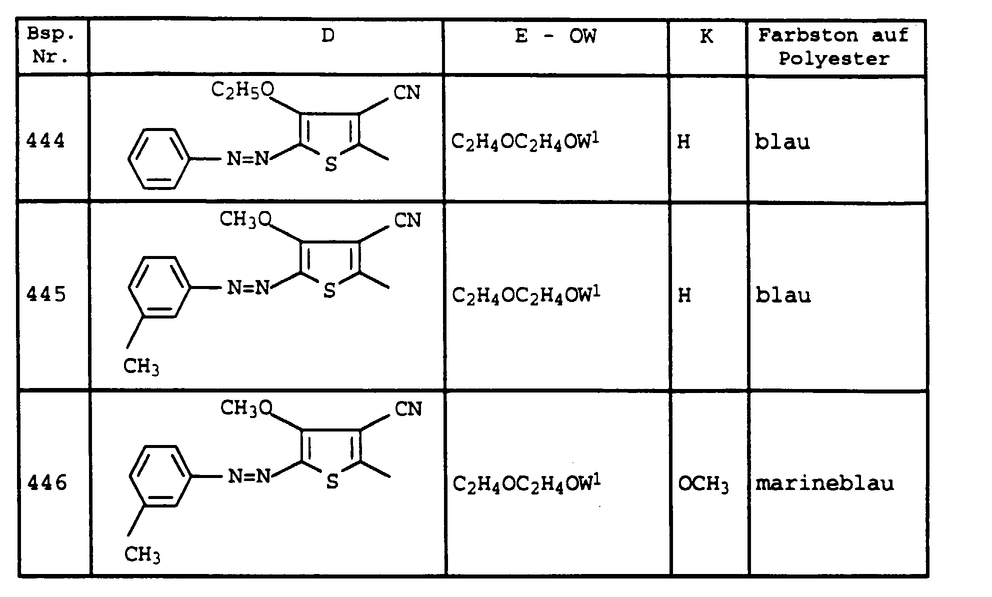

Ähnlich günstige Ergebnisse werden erzielt, wenn man die in Tabelle 8 aufgeführten Mischungen verwendet, die die Farbstoffe A und B im Gewichtsverhaltnis von 30:70, 40:60 und 45:55 aufweisen.

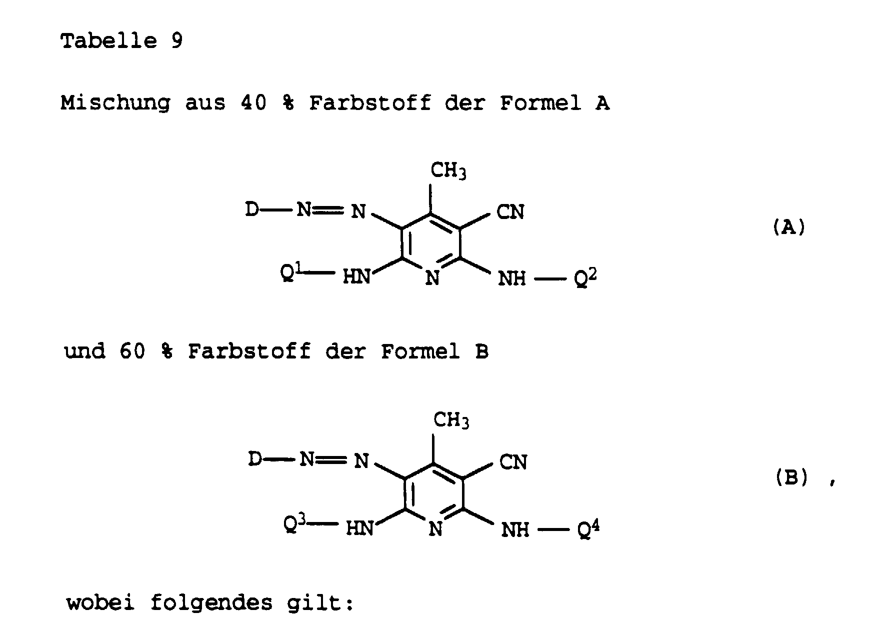

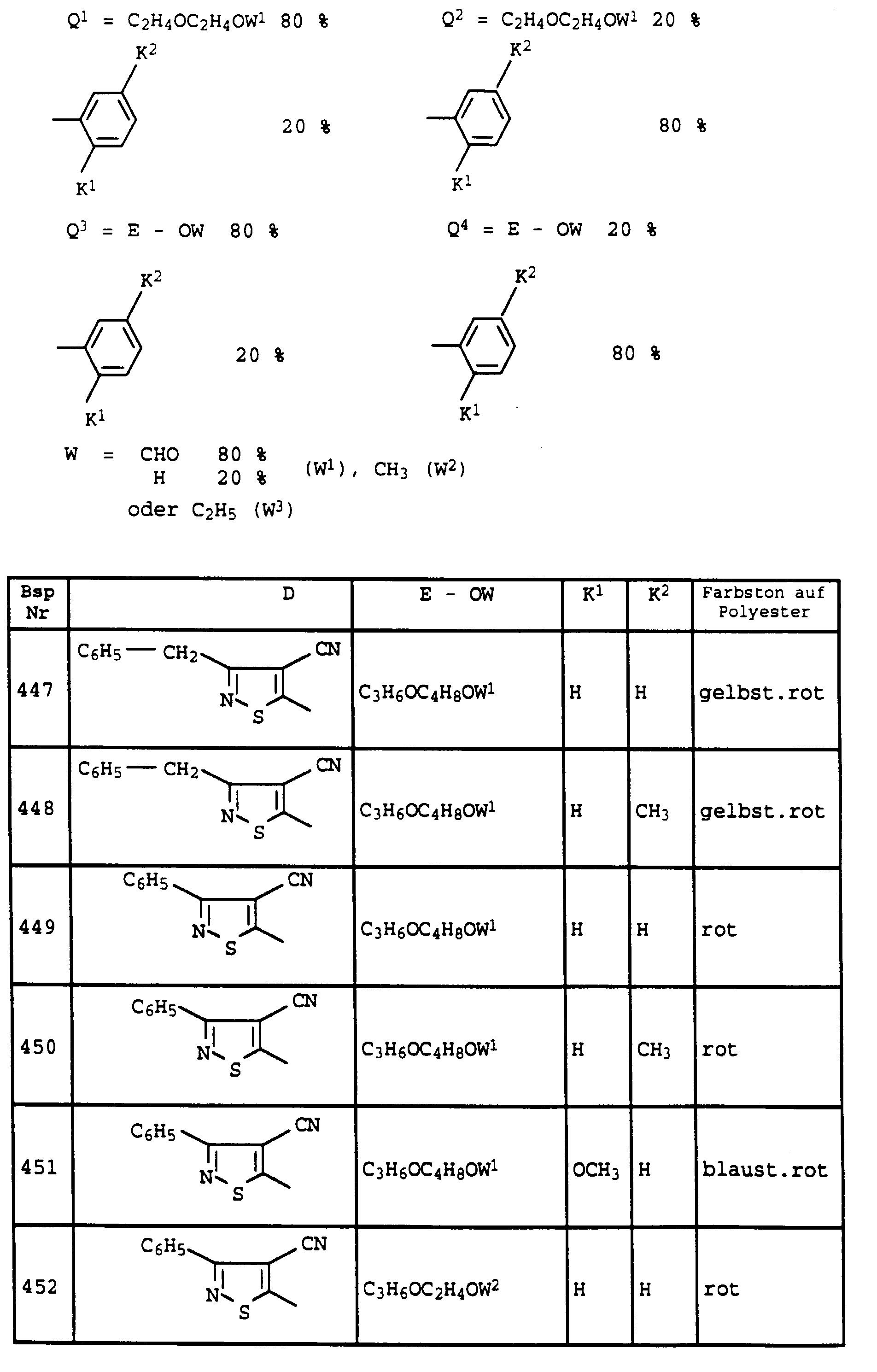

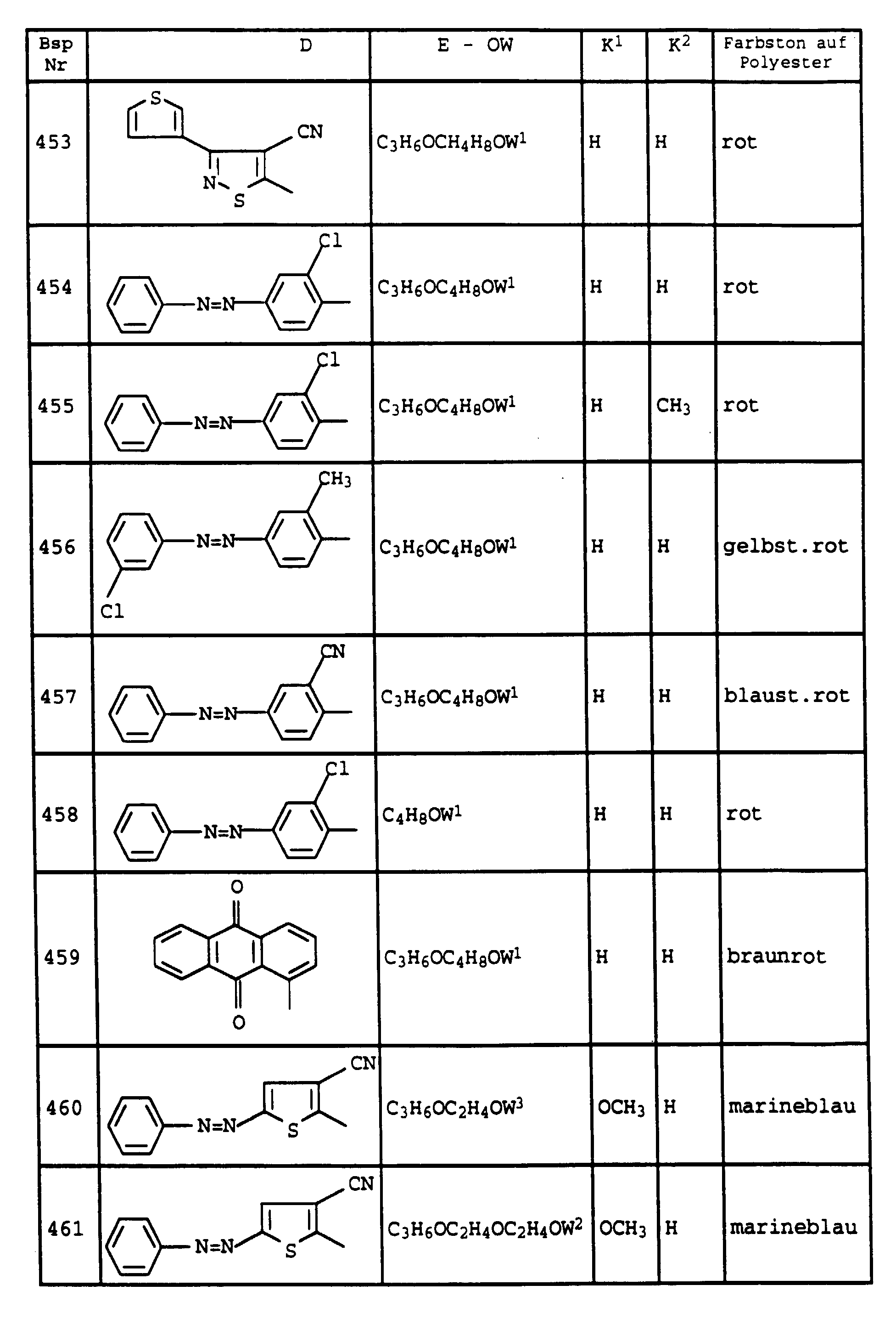

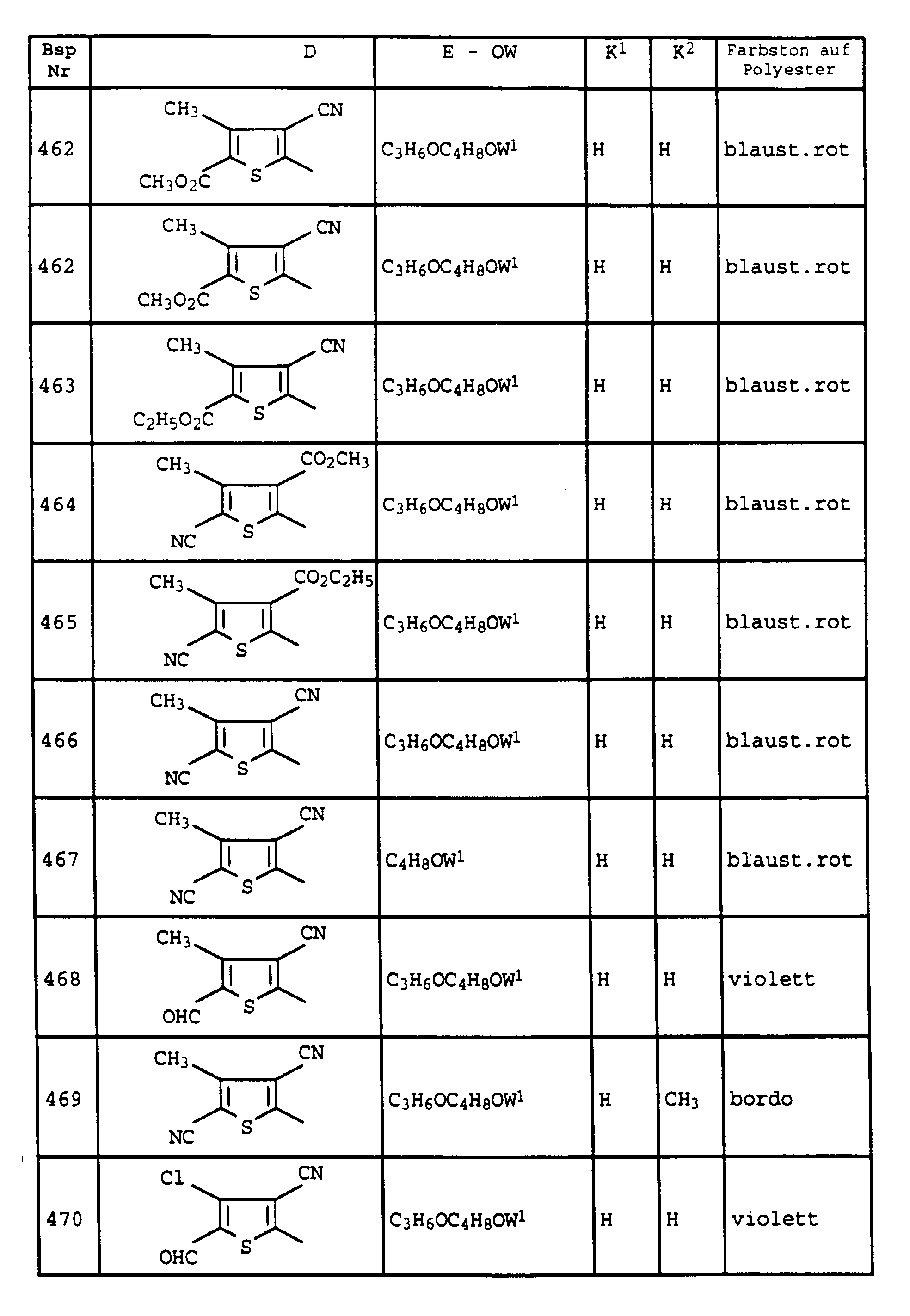

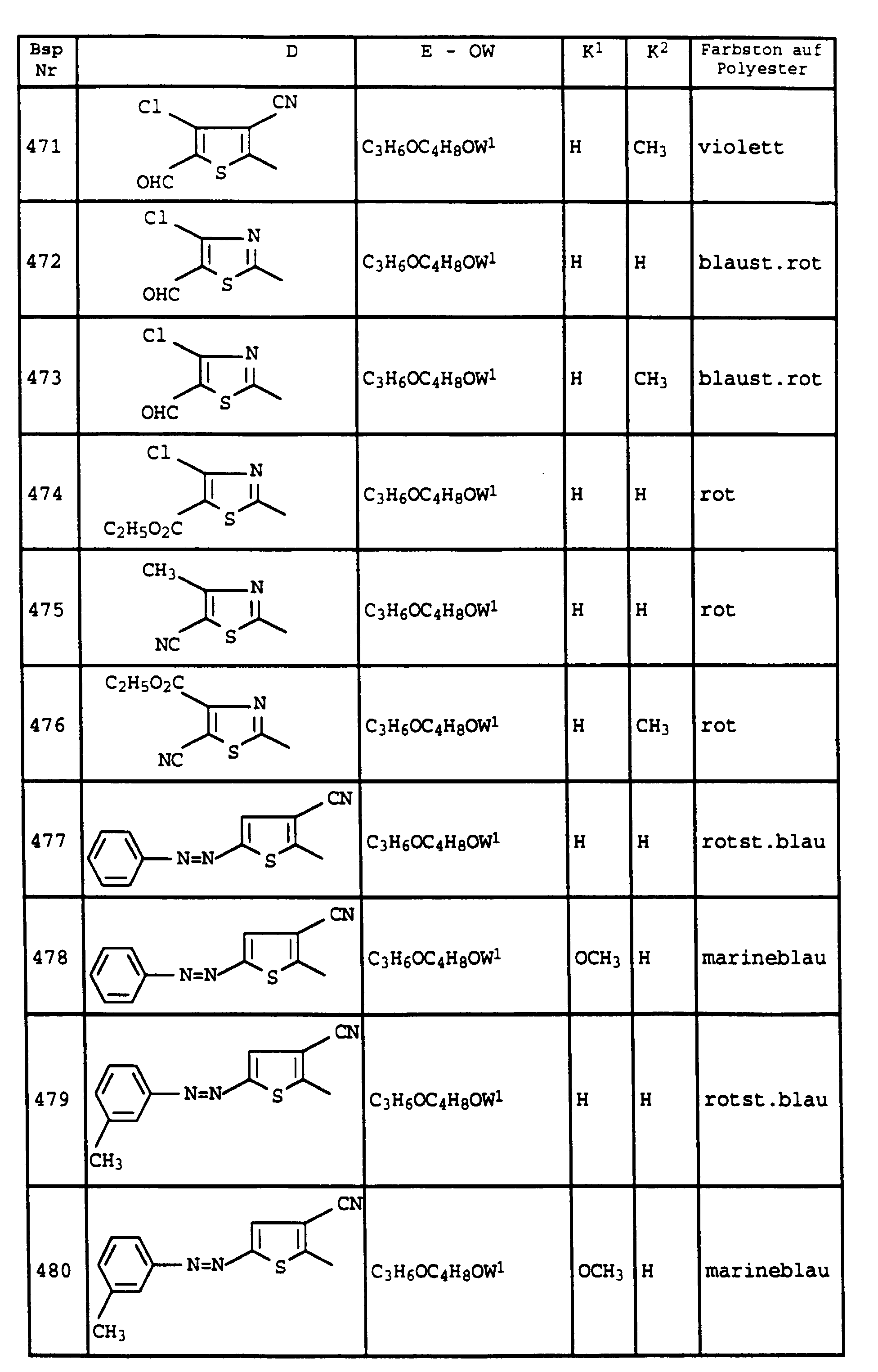

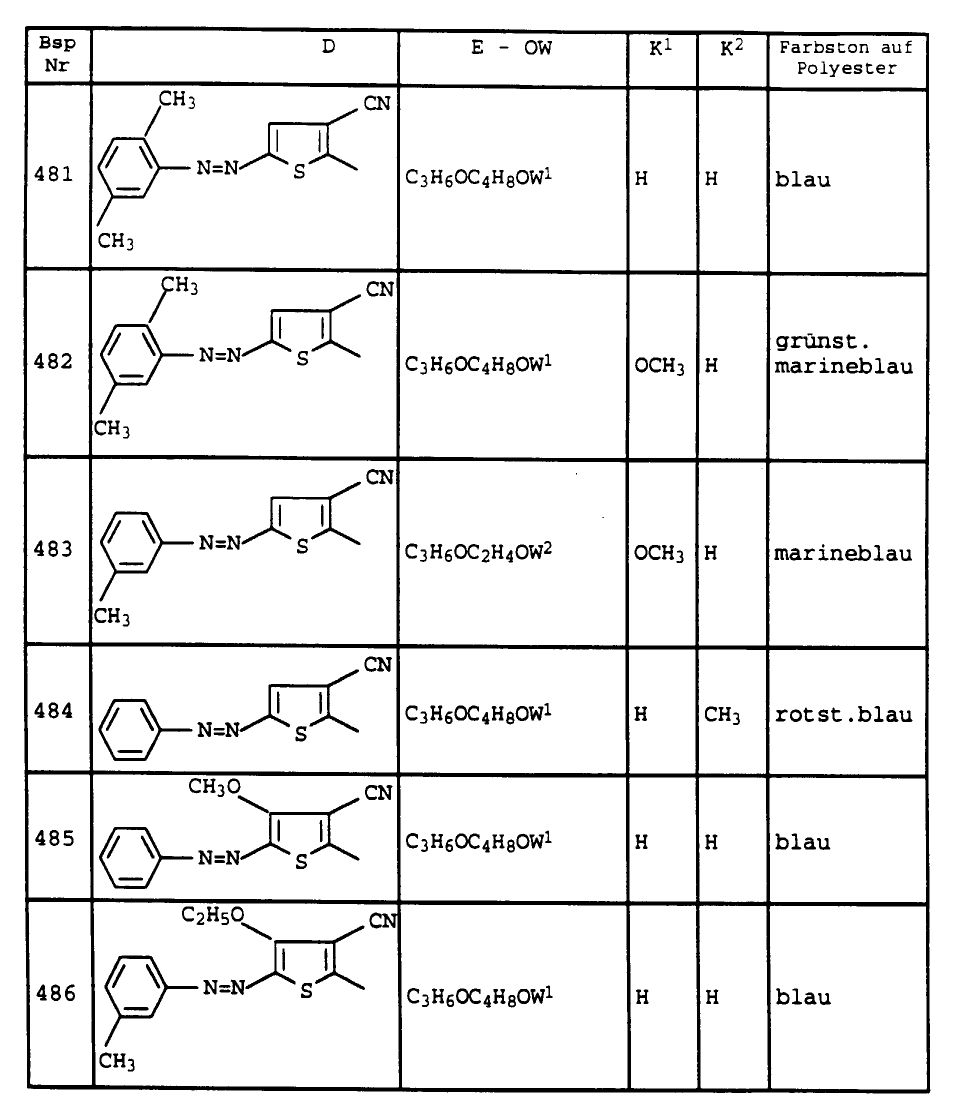

Ähnlich günstige Ergebnisse werden erzielt, wenn man die in Tabelle 9 aufgeführten Mischungen verwendet, die die Farbstoffe A und B im Gewichtsverhältnis von 30:70 aufweisen.

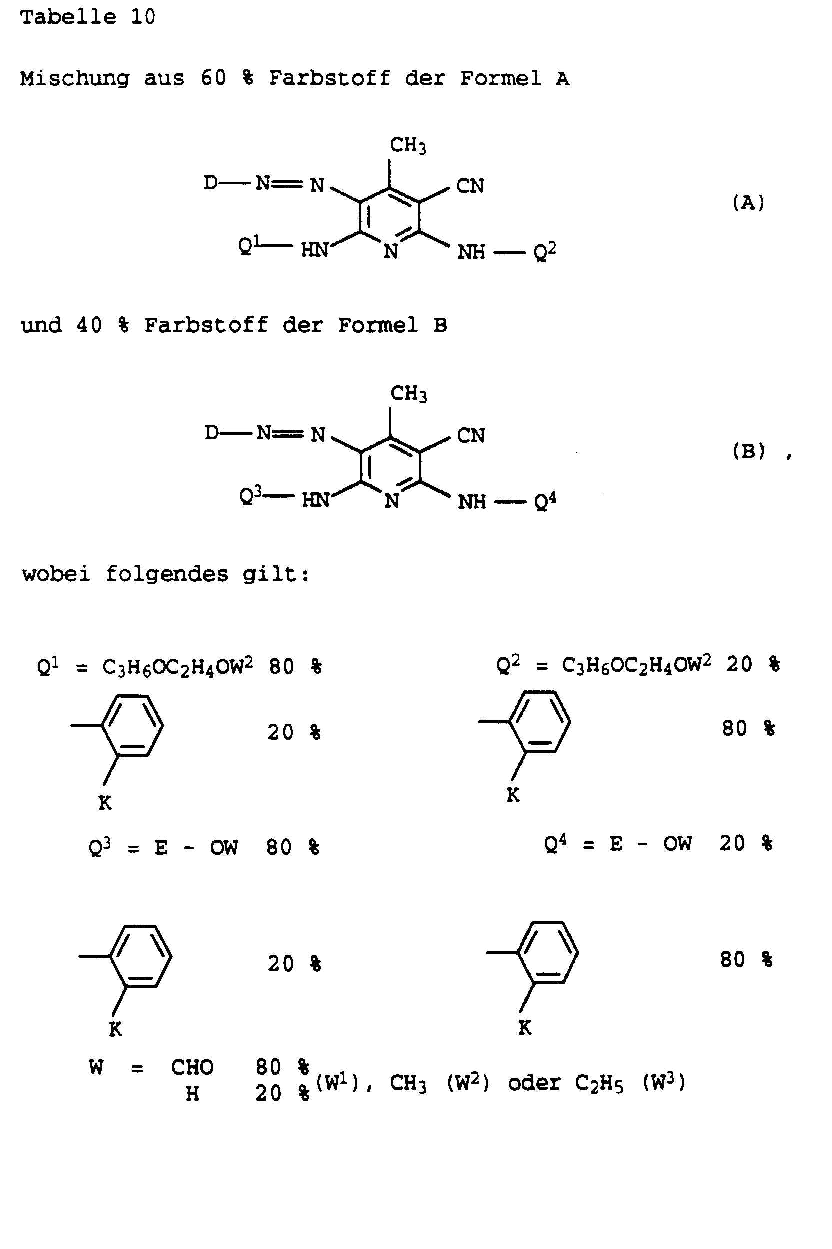

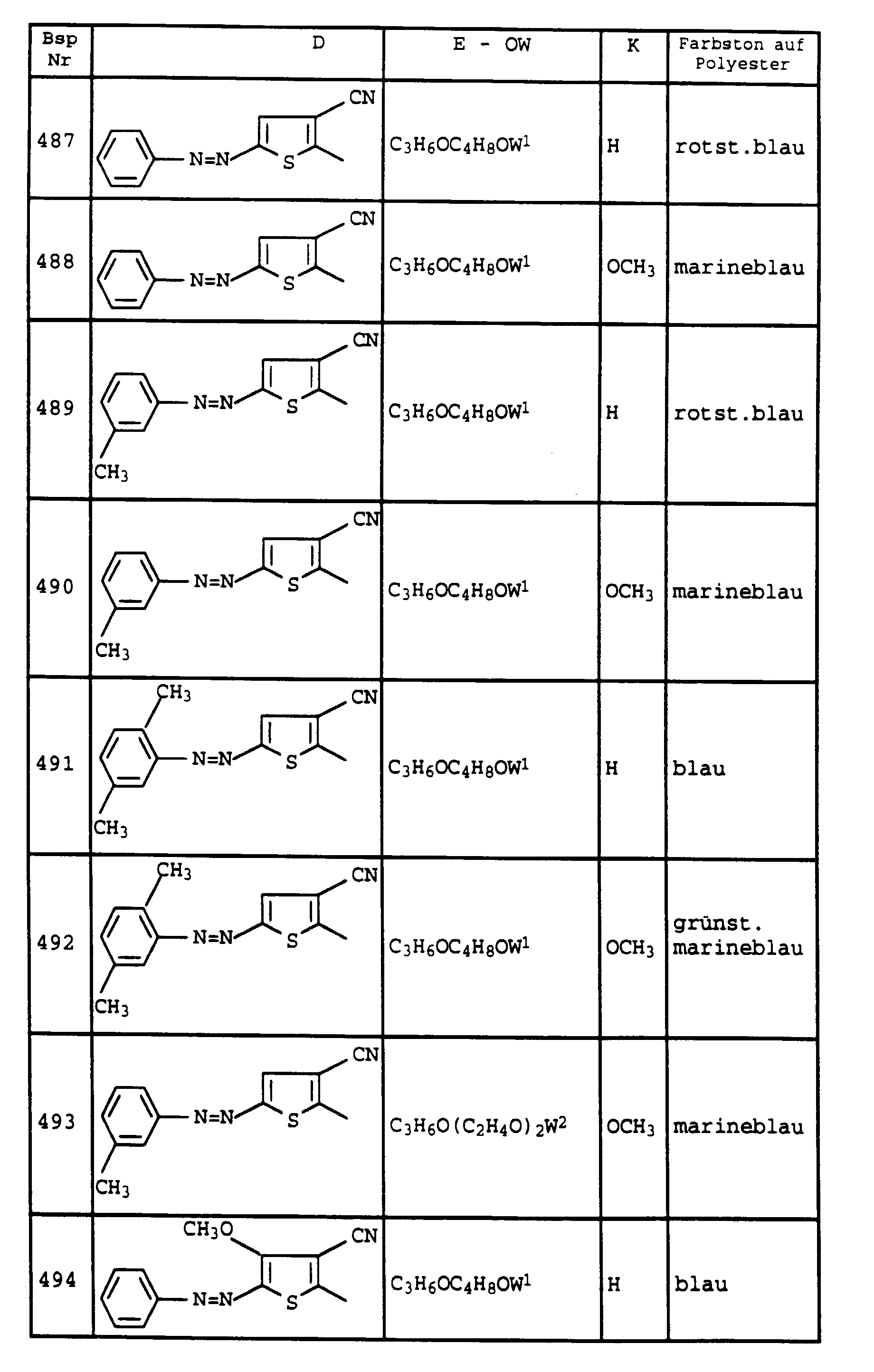

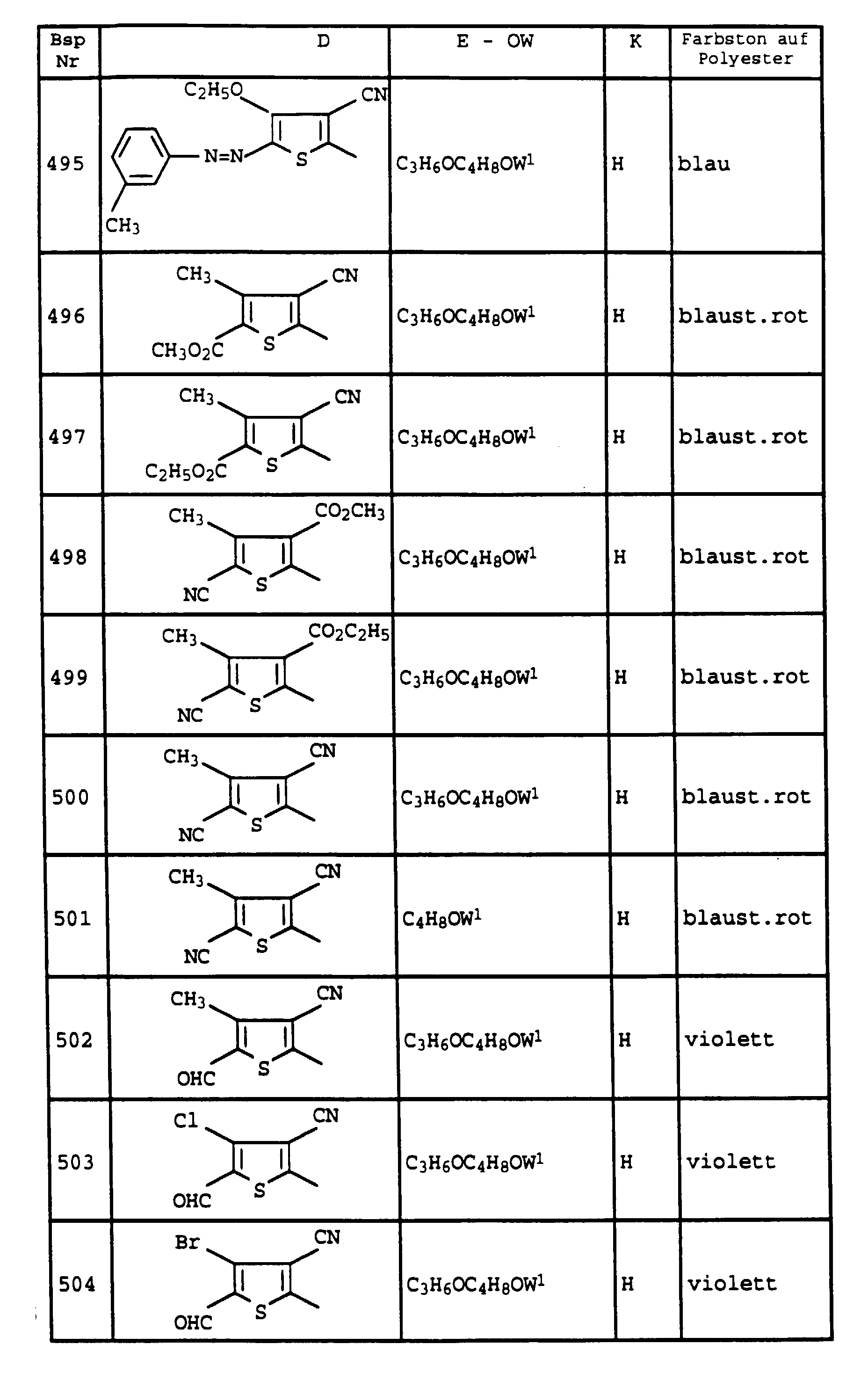

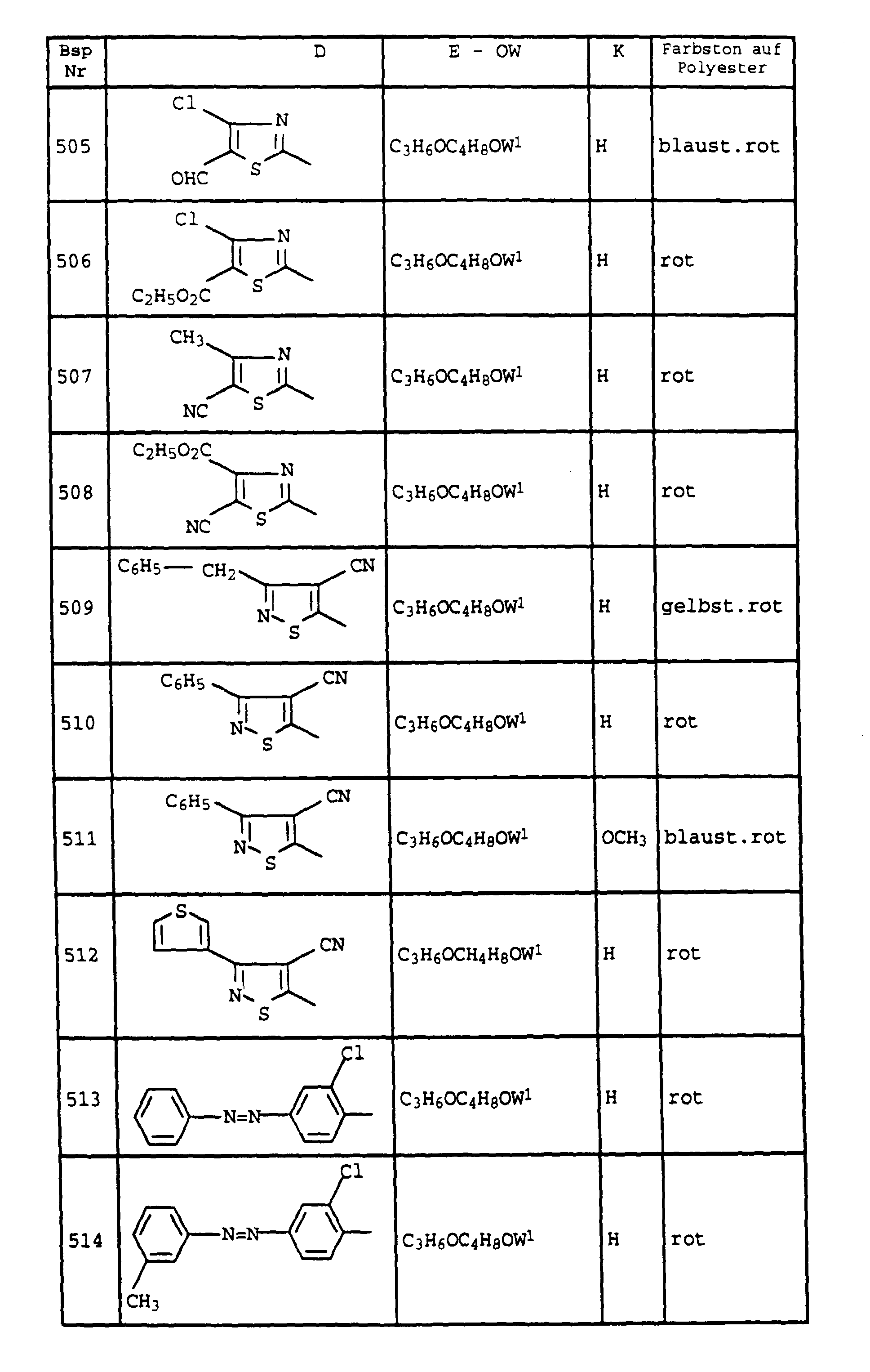

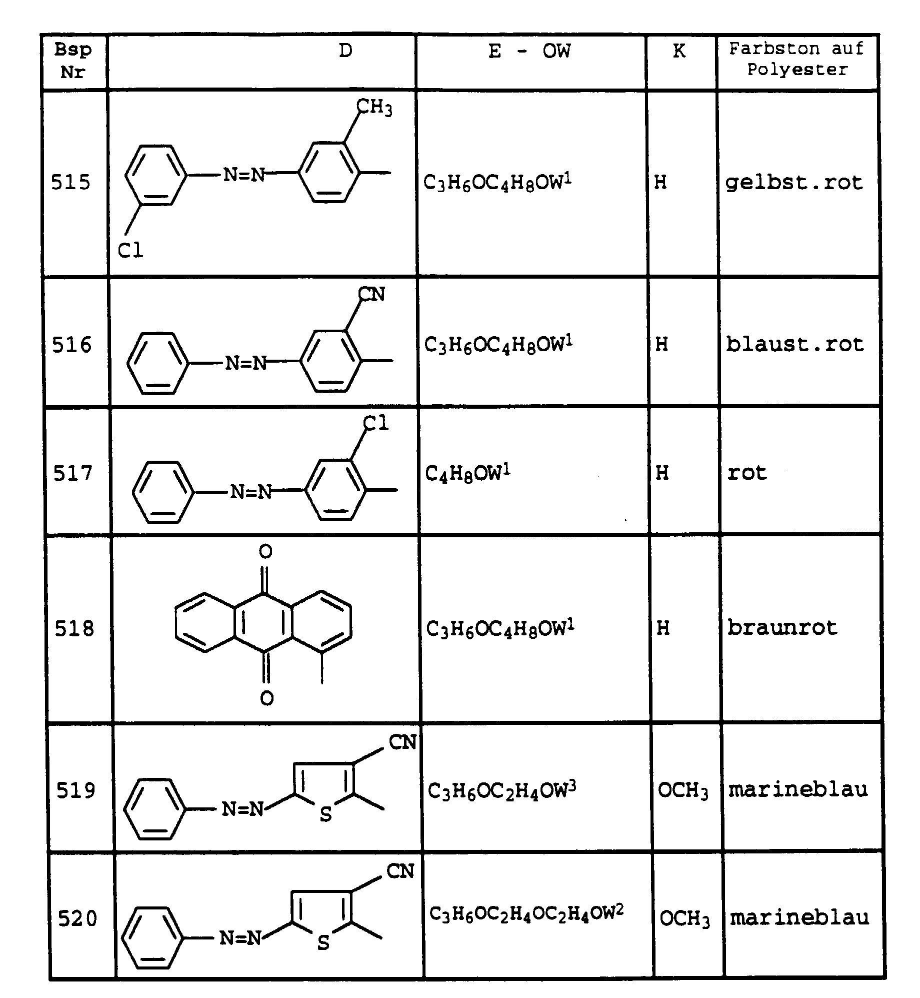

Ähnlich günstige Ergebnisse werden erzielt, wenn man die in Tabelle 10 aufgeführten Mischungen verwendet, die die Farbstoffe A und B im Gewichtsverhaltnis von 70:30 und 65:35 aufweisen.

Ähnlich günstige Ergebnisse werden auch mit den folgenden Farbstoffmischungen erzielt.

### Beispiel 521

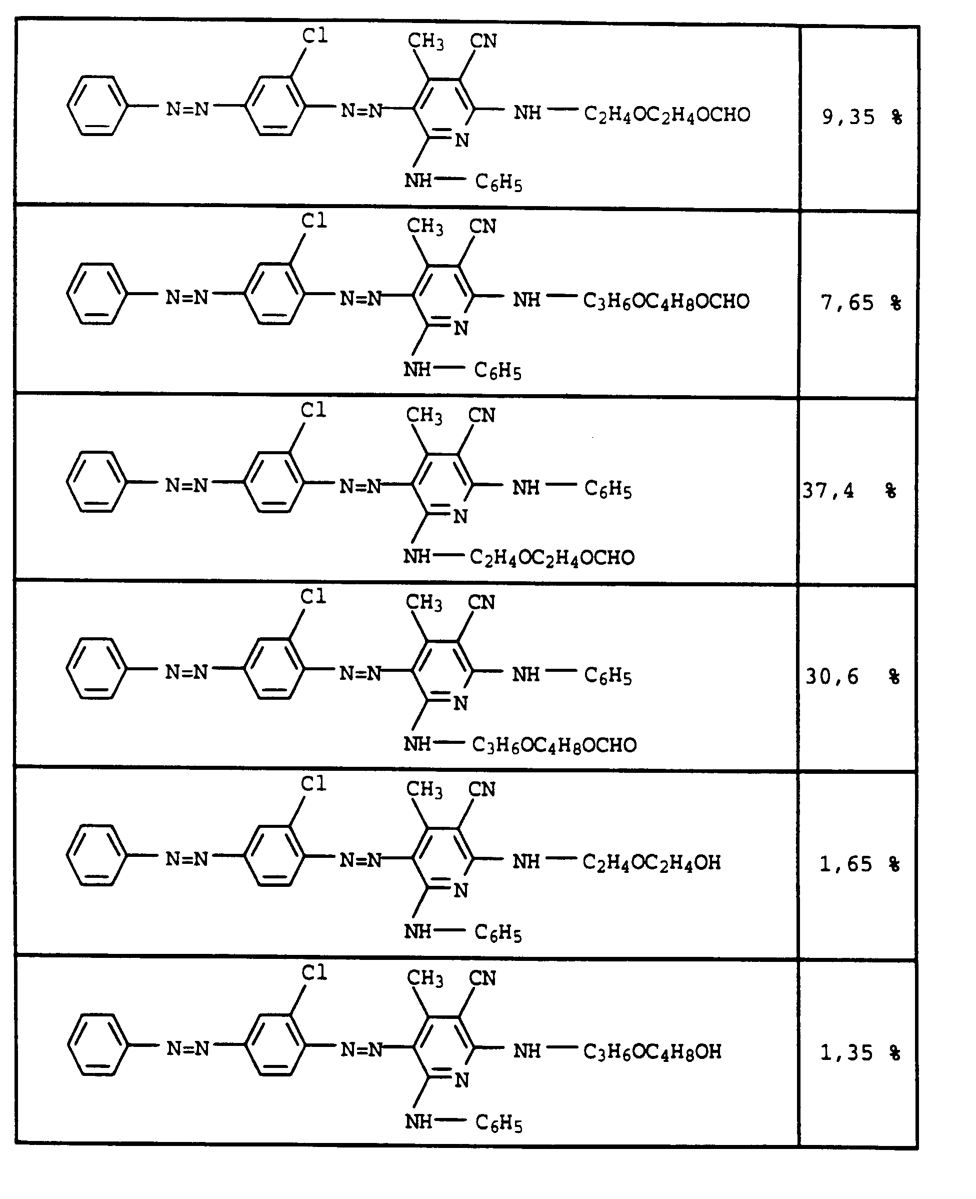

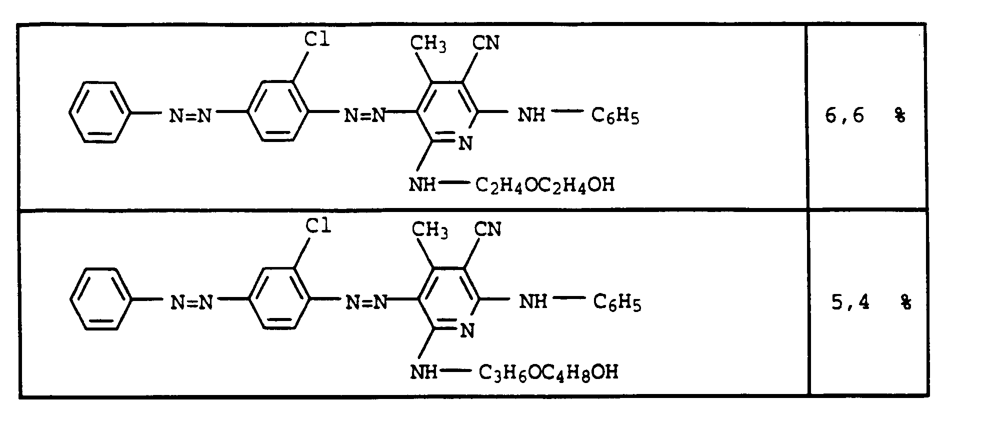

Farbton auf Polyester: rot

### Beispiel 522

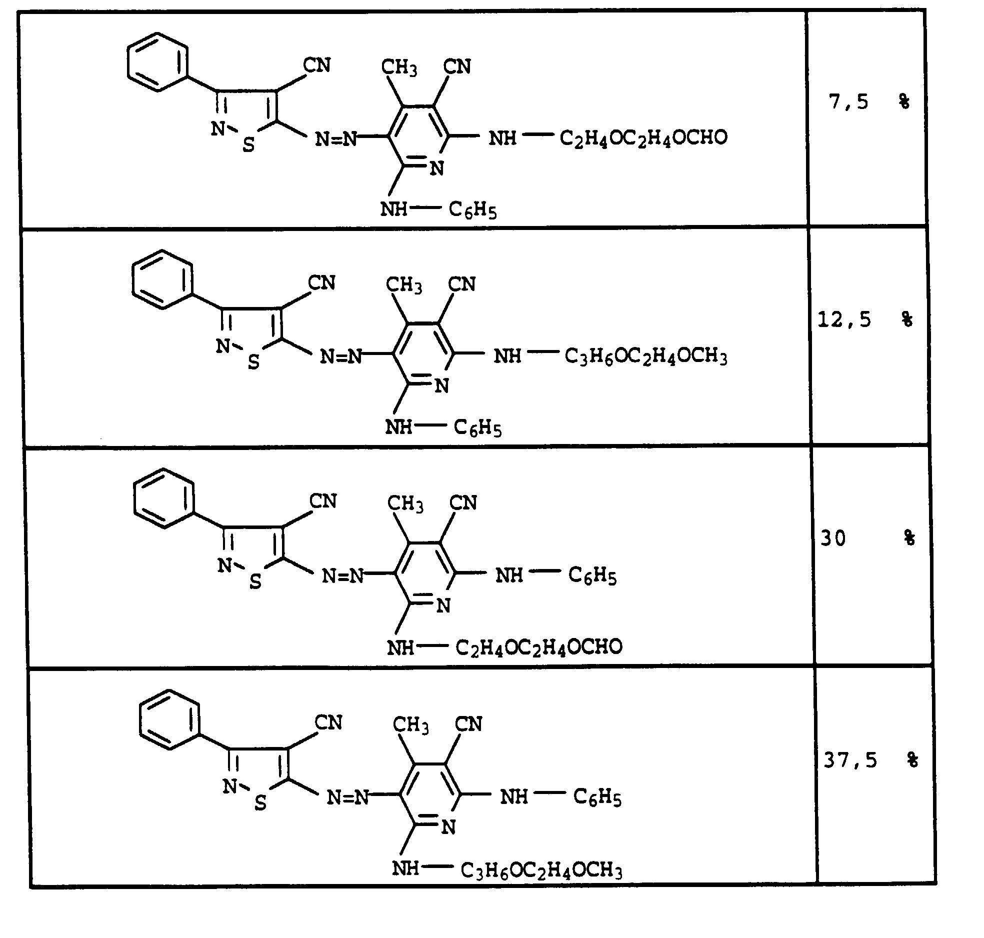

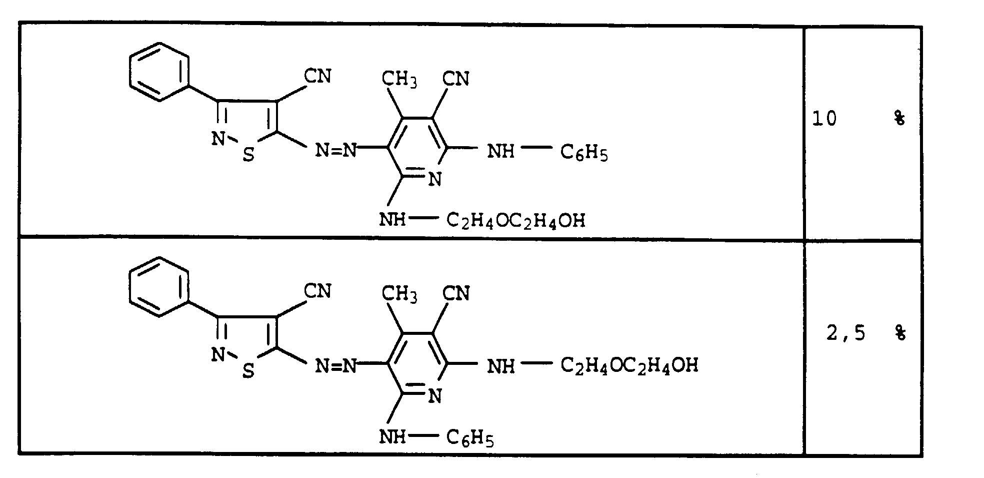

Farbton auf Polyester: rot

### Beispiel 523

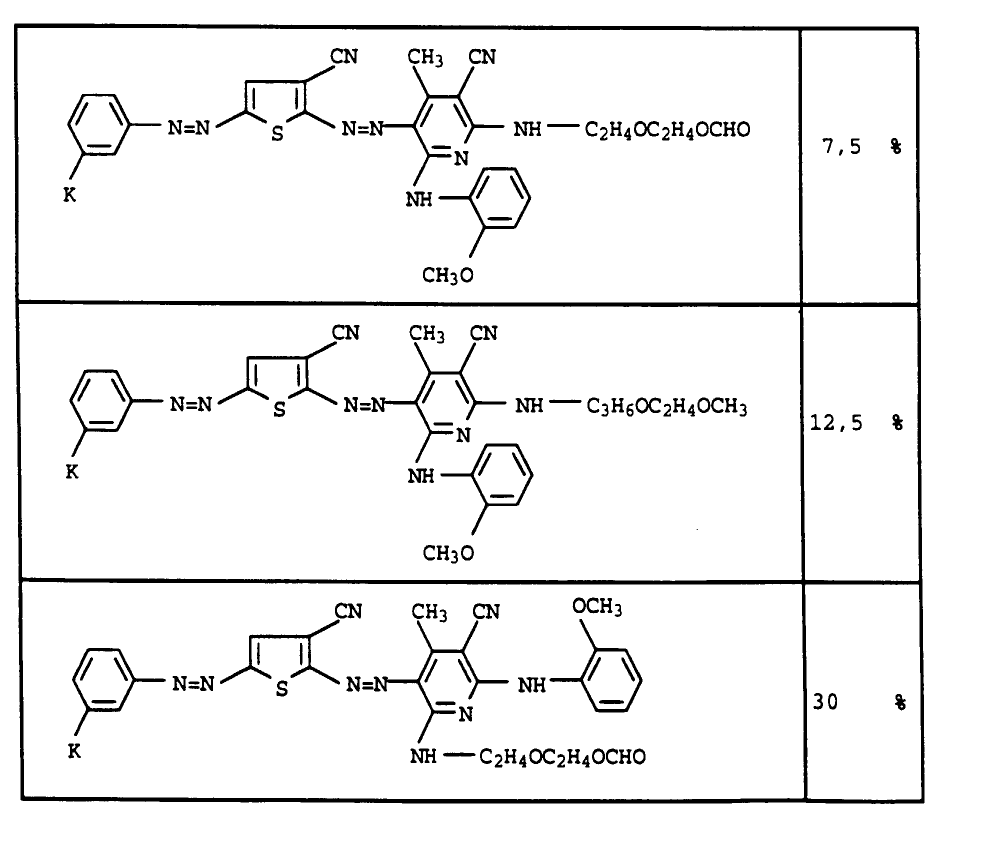

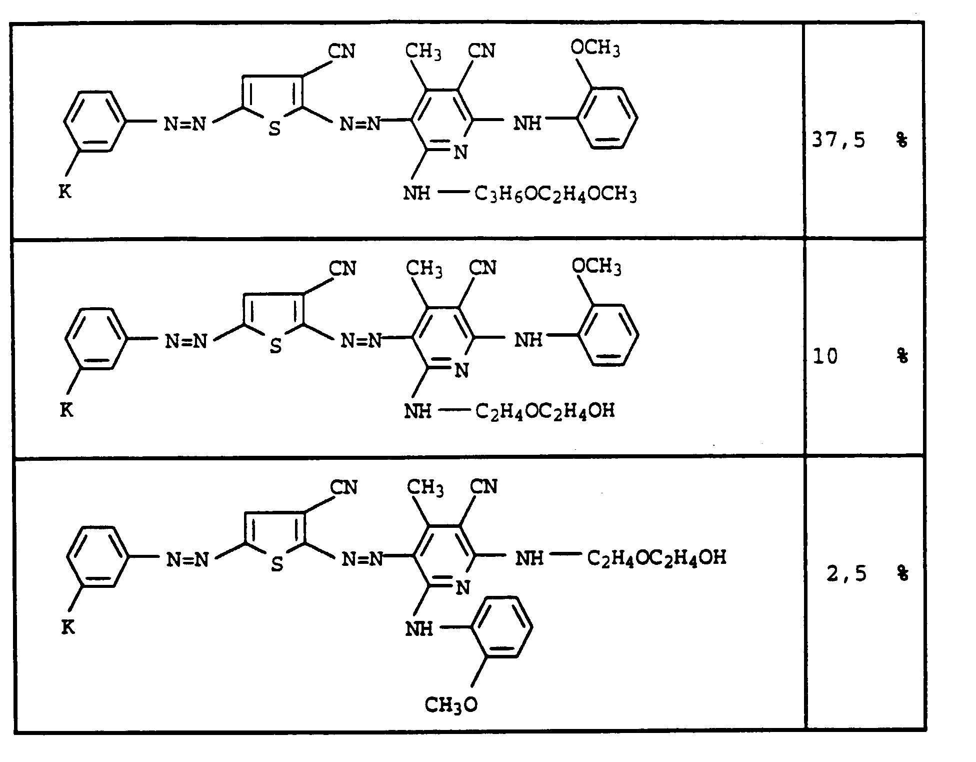

a) K = H
   Farbton auf Polyester: marineblau
b) K = CH₃
   Farbton auf Polyester: marineblau

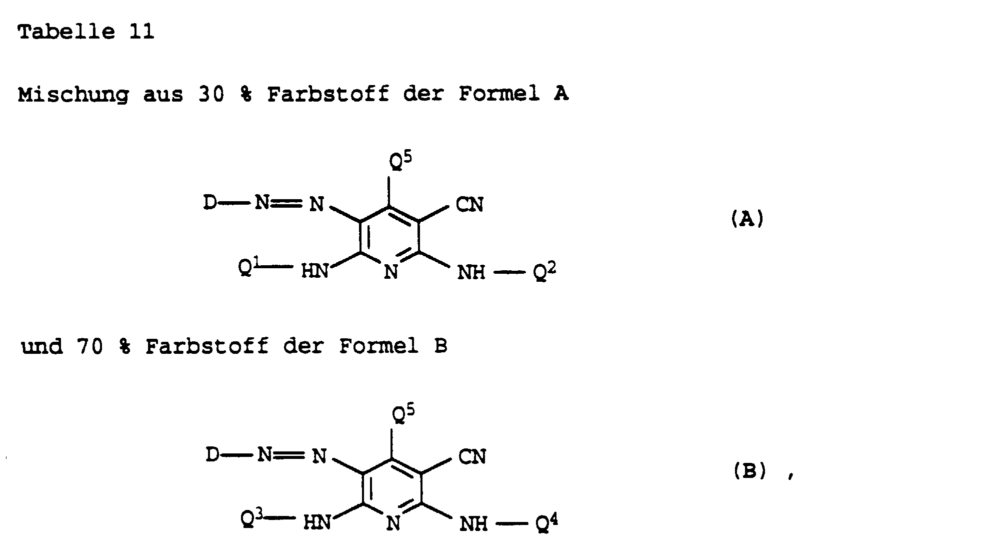

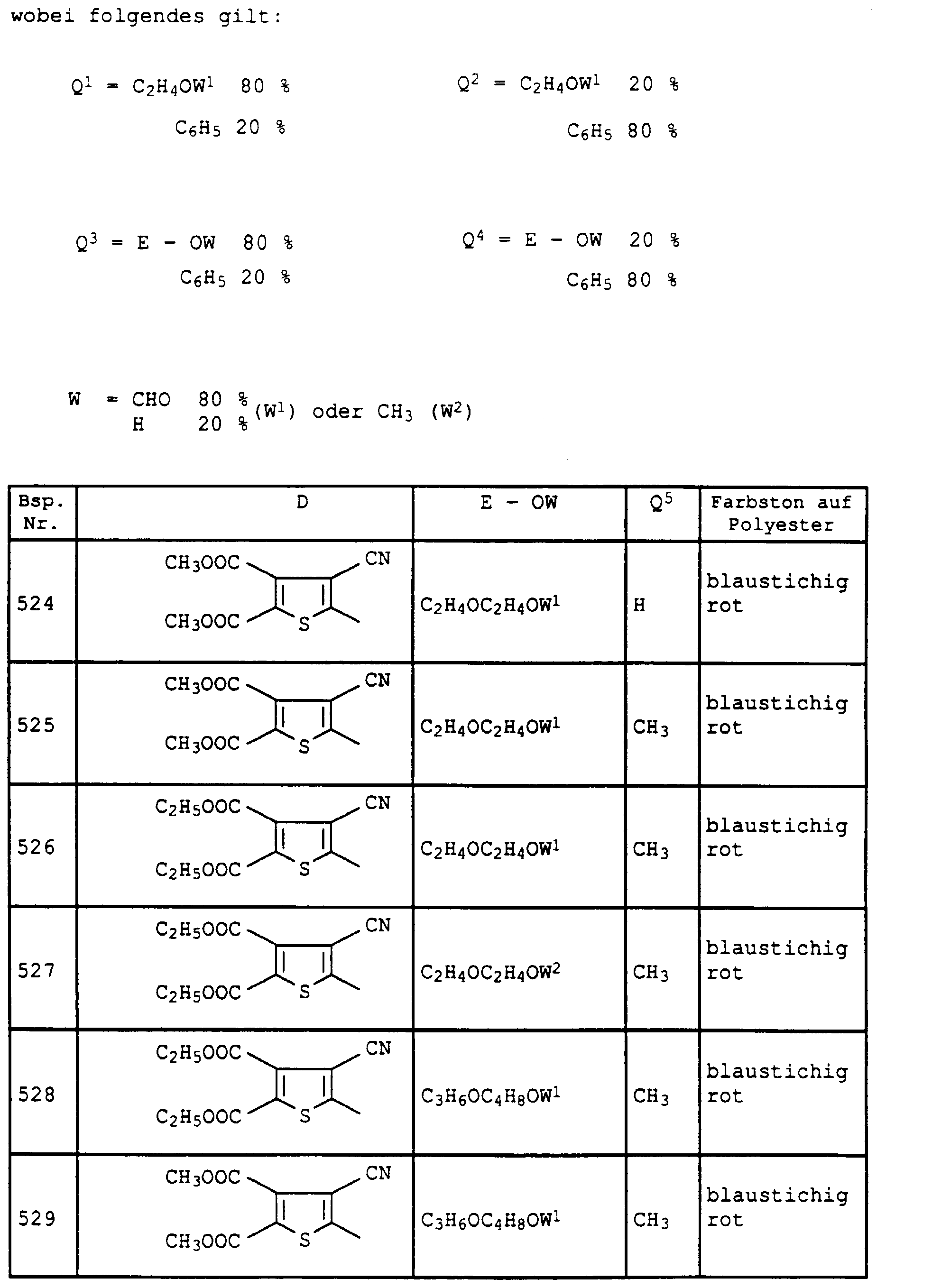

### Beispiel 530

23,4 g der Verbindung der Formel 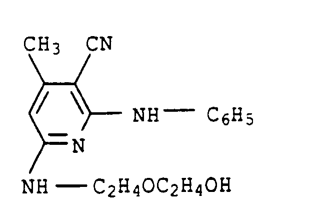 und 7,8 g der Verbindung der Formel 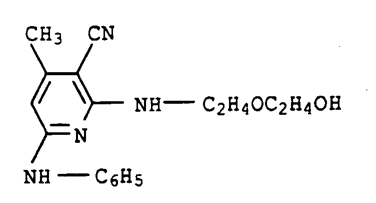 wurden in 100 g Eisessig und 0,5 g Schwefelsäure 3 h unter Siedekühlung gerührt. Danach destillierte man unter vermindertem Druck Essigsäure ab und setzte bei ca. 50°C 75 ml 85 gew.-%ige Ameisensäure hinzu. Dann kühlte man ab, gab 0,8 g 50 gew.-%ige Natronlauge hinzu und verwendete die entstehende Lösung nach Zusatz von 0,3 g eines sauer wirksamen Dispergiermittels direkt zur Kupplung.

Nach der umsetzung mit auf üblicher Weise diazotierter Diazokomponente (2,2 g) der Formel 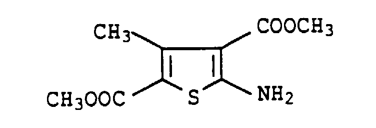 bei pH ≤ 2 erhielt man ein Gemisch aus folgenden Farbstoffen, das Polyestergewebe in echtem, roten Ton färbt:

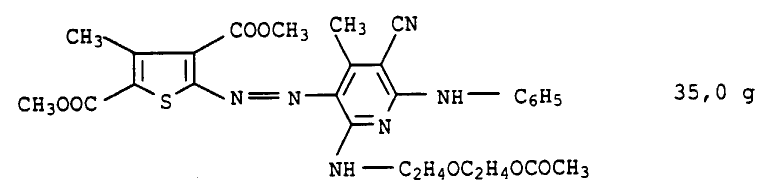

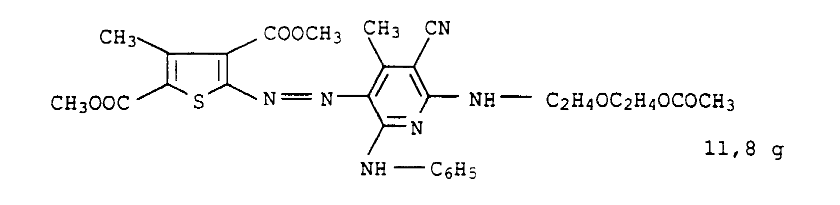

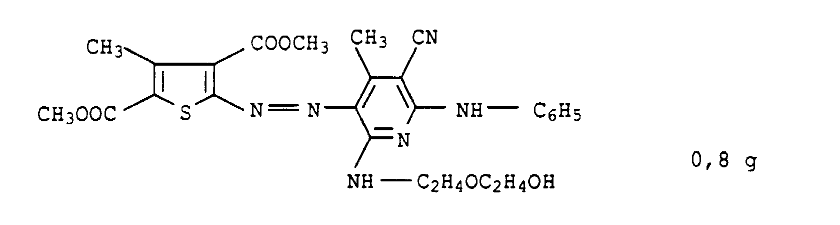

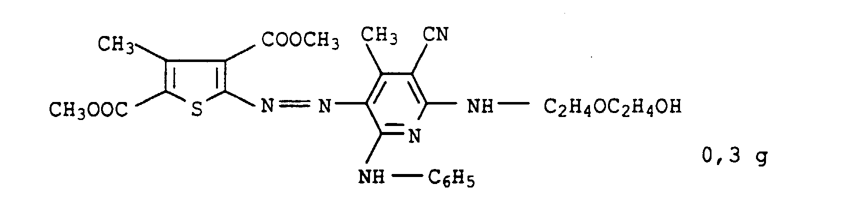

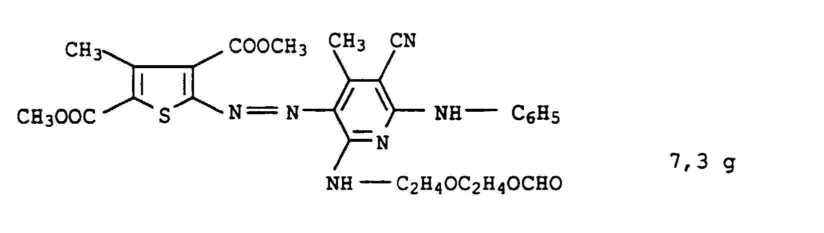

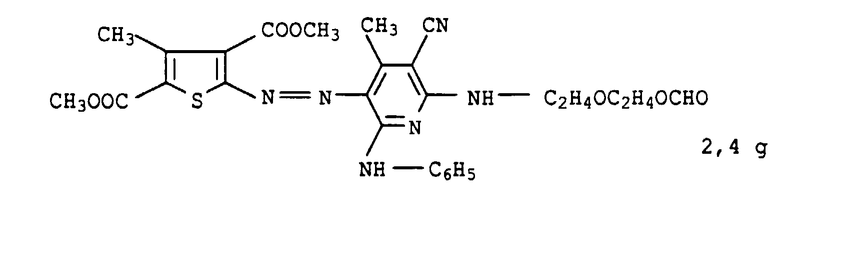

## Patentansprüche

1. Farbstoffmischungen, enthaltend mindestens 4 gleichfarbige Farbstoffe der Formeln Ia und Ib 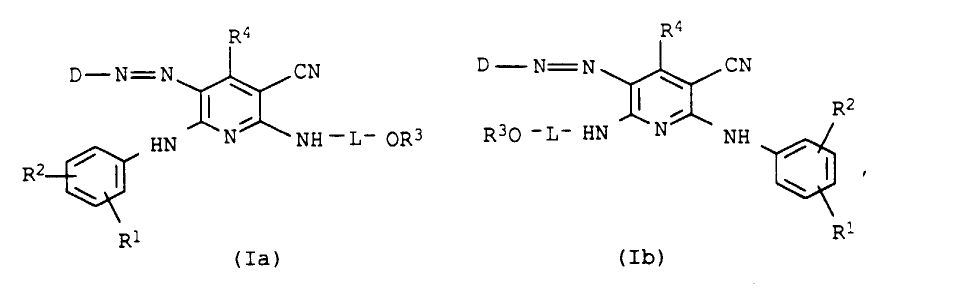 worin
D für den Rest einer Diazokomponente aus der Aminoanthrachinon-, Anilin-, Aminothiophen-, Aminothiazol-, Aminoisothiazol-, Aminothiadiazol- oder Aminobenzisothiazolreihe,
L für C₂-C₈-Alkylen, das gegebenenfalls durch 1 oder 2 Sauerstoffatome in Etherfunktion unterbrochen ist,
R¹ und R² unabhängig voneinander jeweils für Wasserstoff, C₁-C₄-Alkyl, C₁-C₄-Alkoxy oder Halogen,
R³ für Wasserstoff, C₁-C₄-Alkyl oder C₁-C₃-Alkanoyl und
R⁴ für Wasserstoff oder C₁-C₄-Alkyl
stehen.

2. Farbstoffmischungen nach Anspruch 1, dadurch gekennzeichnet, daß
D für Anthrachinon-1-yl oder einen Rest der Formel 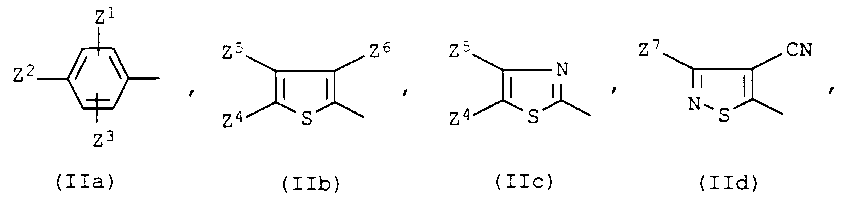 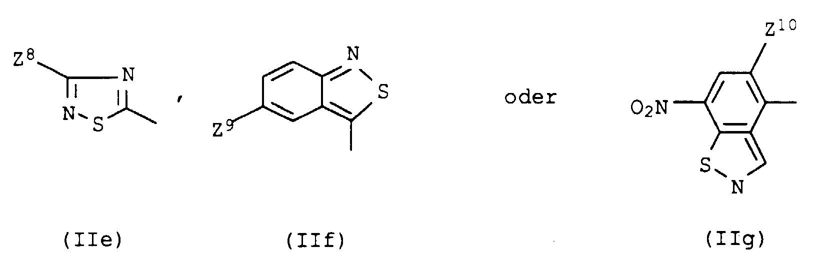 steht, worin
Z¹ Wasserstoff, Nitro, Cyano, Chlor, Brom, C₁-C₄-Alkoxycarbonyl, Phenylsulfonyl, Phenoxysulfonyl oder C₁-C₄-Dialkylsulfamoyl
Z² Wasserstoff, Nitro oder gegebenenfalls durch C₁-C₄-Alkyl, C₁-C₄-Alkoxy oder Chlor substituiertes Phenylazo,
Z³ Wasserstoff, Cyano, Chlor, Brom, C₁-C₄-Alkoxycarbonyl, Phenylsulfonyl, Phenoxysulfonyl oder C₁-C₄-Dialkylsulfamoyl
Z⁴ Cyano, Formyl, C₁-C₄-Alkoxycarbonyl, Phenylcarbamoyl, gegebenenfalls durch C₁-C₄-Alkyl substituiertes Phenylazo oder einen Rest der Formel 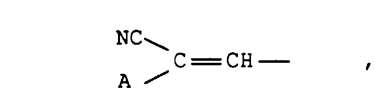 worin A die Bedeutung
von Cyano oder C₁-C₄-Alkoxycarbonyl besitzt,
Z⁵ Wasserstoff, C₁-C₄-Alkyl, C₁-C₄-Alkoxy, Phenyl, das gegebenenfalls durch Methyl, Methoxy, Chlor oder C₁-C₄-Alkoxycarbonyl substituiert ist, Chlor, Brom, C₁-C₄-Alkoxycarbonyl oder Z⁴ und Z⁵ zusammen einen gegebenenfalls durch Methoxy, Thiocyanato oder C₁-C₄-Alkylsulfonyl substituierten Benzorest,
Z⁶ Cyano oder C₁-C₄-Alkoxycarbonyl,
Z⁷ C₁-C₄-Alkyl, das gegebenenfalls durch C₁-C₄-Alkoxy oder Phenoxy substituiert ist, Phenyl, das gegebenenfalls durch Methyl, Methoxy oder Chlor substituiert ist, Benzyl, das gegebenenfalls durch Methyl, Methoxy oder Chlor substituiert ist,Thienyl oder Cyano,
Z⁸ Phenyl oder durch Cyano oder C₁-C₄-Alkoxycarbonyl substituiertes Ethylthio,
Z⁹ Wasserstoff, Nitro oder Cyano und
Z¹⁰ Wasserstoff, Chlor, Brom, Nitro oder Cyano
bedeuten.

3. Farbstoffmischungen nach Anspruch 1, dadurch gekennzeichnet, daß sie 4 bis 8 gleichfarbige Farbstoffe der Formeln Ia und Ib enthalten.

4. Farbstoffmischungen nach Anspruch 1, dadurch gekennzeichnet, daß in den Mischungen stets Farbstoffe der Formeln Ia und Ib vorliegen, worin R³ in beiden Formeln gleichzeitig für Wasserstoff und C₁-C₃-Alkanoyl steht.

5. Farbstoffmischungen nach Anspruch 1, dadurch gekennzeichnet, daß R⁴ für Methyl steht.

6. Farbstoffmischungen nach Anspruch 1, dadurch gekennzeichnet, daß R³ für Wasserstoff, C₁-C₄-Alkyl oder C₁-C₂-Alkanoyl und L für C₃-C₈-Alkylen, das durch 1 oder 2 Sauerstoffatome in Etherfunktion unterbrochen ist, stehen.

7. Farbstoffmischungen nach Anspruch 1, dadurch gekennzeichnet, daß R³ für Wasserstoff, C₁-C₂-Alkyl oder Formyl steht.

8. Farbstoffmischungen nach Anspruch 1, dadurch gekennzeichnet, daß R³ für Formyl oder ein Gemisch aus Formyl und Acetyl im Molverhältnis 1:9 bis 9:1 steht.

9. Farbstoffmischungen nach Anspruch 2, dadurch gekennzeichnet, daß D Anthrachinon-1-yl oder einen Rest der Formel IIa, IIb, IIc oder IId bedeutet.

10. Verfahren zur Herstellung der Farbstoffmischungen gemaß Anspruch 1, dadurch gekennzeichnet, daß man eine Mischung der Kupplungskomponenten der Formeln IIIa und IIIb 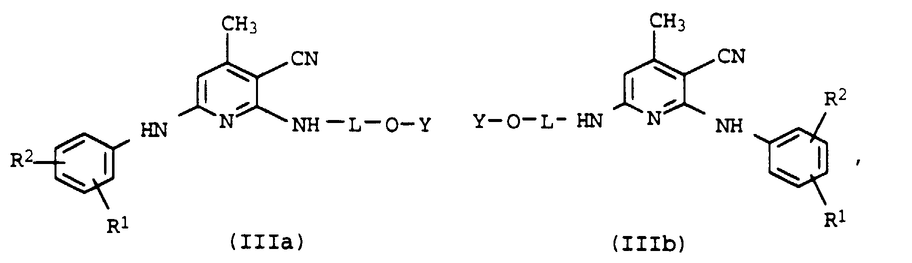 worin L, R¹ und R² jeweils die in Anspruch 1 genannte Bedeutung besitzen und Y jeweils Wasserstoff oder C₁-C₄-Alkyl bedeutet, in gegebenenfalls jeweils Wasser enthaltender Ameisensäure, Essigsäure, Propionsäure oder deren Mischung löst und dieses Gemisch mit einem Diazoniumsalz behandelt, das sich von einem Amin der Formel IV
D - NH₂ (IV)
ableitet, worin D die in Anspruch 1 genannte Bedeutung besitzt.

11. Verwendung der Farbstoffmischungen gemaß Anspruch 1 zum Farben oder Bedrucken von textilen Materialien.

## Claims

1. Dye mixtures comprising at least 4 dyes of the same color having the formulae Ia and Ib 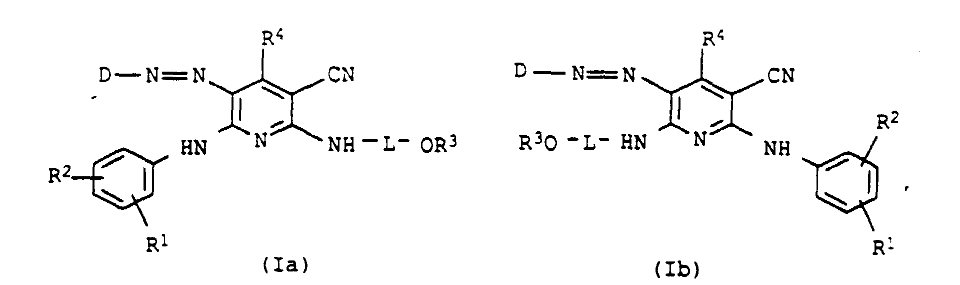 where
D is the radical of a diazo component of the aminoanthraquinone, aniline, aminothiophene, aminothiazole, aminoisothiazole, aminothiadiazole or aminobenzisothiazole series,
L is C₂-C₈-alkylene, which may be interrupted by 1 or 2 oxygen atoms in ether function,
R¹ and R² are independently of each other hydrogen, C₁-C₄-alkyl, C₁-C₄-alkoxy or halogen,
R³ is hydrogen, C₁-C₄-alkyl or C₁-C₃-alkanoyl, and
R⁴ is hydrogen or C₁-C₄-alkyl.

2. Dye mixtures as claimed in claim 1 wherein
D is 1-anthraquinonyl or a radical of the formula 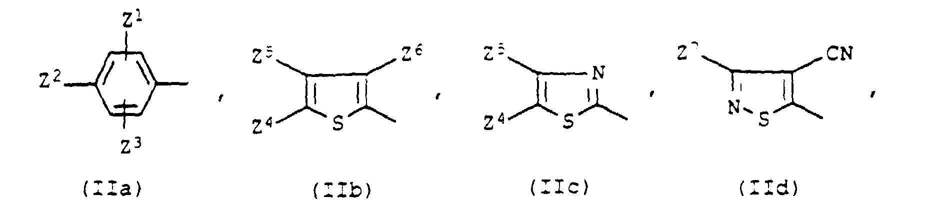 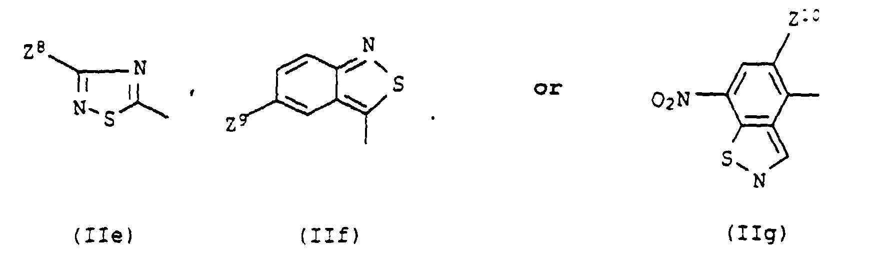 where
Z¹ is hydrogen, nitro, cyano, chlorine, bromine, C₁-C₄-alkoxycarbonyl, phenylsulfonyl, phenoxysulfonyl or C₁-C₄-dialkylsulfamyl,
Z² is hydrogen, nitro or unsubstituted or C₁-C₄-alkyl-, C₁-C₄-alkoxy- or chlorine-substituted phenylazo,
Z³ is hydrogen, cyano, chlorine, bromine, C₁-C₄-alkoxycarbonyl, phenylsulfonyl, phenoxysulfonyl or C₁-C₄-dialkylsulfamyl,
Z⁴ is cyano, formyl, C₁-C₄-alkoxycarbonyl, phenylcarbamoyl, unsubstituted or C₁-C₄-alkyl-substituted phenylazo or a radical of the formula 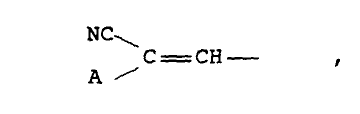 where A
is cyano or C₁-C₄-alkoxycarbonyl,
Z⁵ is hydrogen, C₁-C₄-alkyl, C₁-C₄-alkoxy, phenyl which may be methyl-, methoxy-, chlorine- or C₁-C₄-alkoxycarbonyl-substituted, chlorine, bromine, C₁-C₄-alkoxycarbonyl or Z⁴ and Z⁵ together are an unsubstituted or methoxy-, thiocyanato- or C₁-C₄-alkylsulfonyl-substituted benzo radical,
Z⁶ is cyano or C₁-C₄-alkoxycarbonyl),
Z⁷ is C₁-C₄-alkyl which may be C₁-C₄-alkoxy- or phenoxy-substituted, phenyl which may be methyl-, methoxy- or chlorine-substituted, benzyl which may be methyl-, methoxy-or chlorine-substituted, thienyl or cyano,
Z⁸ is phenyl or cyano- or C₁-C₄-alkoxycarbonyl-substituted ethylthio,
Z⁹ is hydrogen, nitro or cyano, and
Z¹⁰ is hydrogen, chlorine, bromine or cyano.

3. Dye mixtures as claimed in claim 1 comprising from 4 to 8 dyes of the same color which have the formulae Ia and Ib.

4. Dye mixtures as claimed in claim 1 wherein there are always present dyes of the formulae Ia and Ib where R³ in both the formulae is at one and the same time hydrogen and C₁-C₃-alkanoyl.

5. Dye mixtures as claimed in claim 1 wherein R⁴ is methyl.

6. Dye mixtures as claimed in claim 1 wherein R³ is hydrogen, C₁-C₄-alkyl or C₁-C₂-alkanoyl and L is C₃-C₈-alkylene which is interrupted by 1 or 2 oxygen atoms in ether function.

7. Dye mixtures as claimed in claim 1 wherein R³ is hydrogen, C₁-C₂-alkyl or formyl.

8. Dye mixtures as claimed in claim 1 wherein R³ is formyl or a mixture of formyl and acetyl in a molar ratio of from 1:9 to 9:1.

9. Dye mixtures as claimed in claim 2 wherein D is 1-anthraquinonyl or a radical of the formula IIa, IIb, IIc or IId.

10. A process for preparing the dye mixtures of claim 1, which comprises dissolving a mixture of the coupling components of the formulae IIIa and IIIb 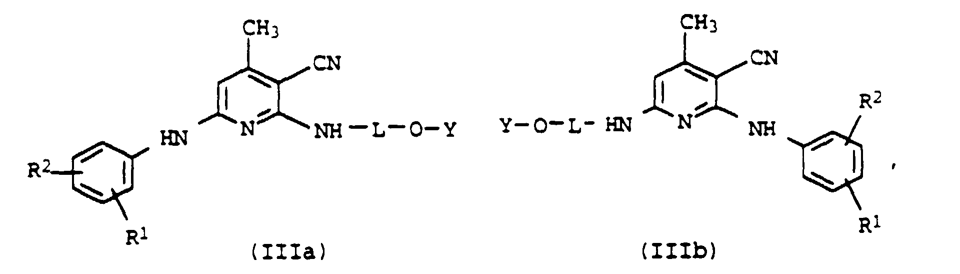 where L, R¹ and R² are each as defined in claim 1 and Y is in each case hydrogen or C₁-C₄-alkyl, in water-free or water-containing formic acid, acetic acid, propionic acid or a mixture thereof and treating this mixture with a diazonium salt derived from an amine of the formula IV
D - NH₂ (IV)
where D is as defined in claim 1.

11. The use of the dye mixtures of claim 1 for dyeing or printing textile materials.

## Revendications

1. Mélanges de colorants, contenant au moins 4 colorants de même couleur de formules Ia et Ib 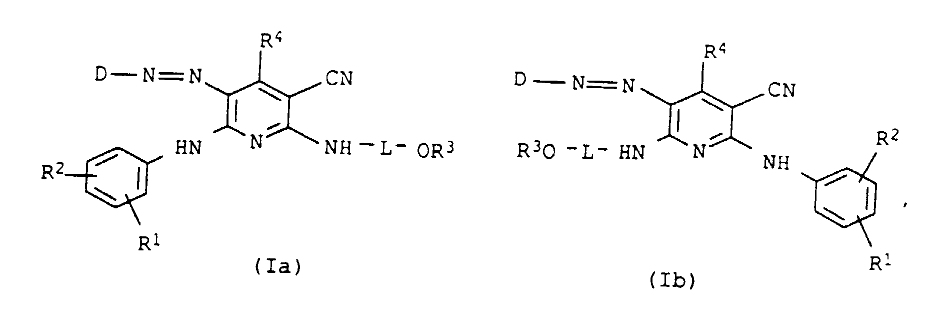 dans lesquelles
D est mis pour le reste d'un composant de diazoïque de la série de l'aminoanthraquinone, de l'aniline, de l'aminothiophène, de l'aminothiazole, de l'aminoisothiazole, de l'aminothiadiazole ou de l'aminobenzo-isothiazole,
L est mis pour un reste alkylène en C₂-C₈ qui est éventuellement interrompu par 1 ou 2 atomes d'oxygène en fonction éther,
R¹ et R² sont mis chacun, indépendamment l'un de l'autre, pour un atome d'hydrogène, pour un reste alkyle en C₁-C₄, alcoxy en C₁-C₄ ou pour un atome d'halogène,
R³ est mis pour un atome d'hydrogène ou pour un reste alkyle en C₁-C₄ ou alcanoyle en C₁-C₃ et
R⁴ est mis pour un atome d'hydrogène ou pour un reste alkyle en C₁-C₄.

2. Mélanges de colorants selon la revendication 1, caractérisés en ce que
D est mis pour un radical anthraquinon-1-yle ou pour un reste de formule 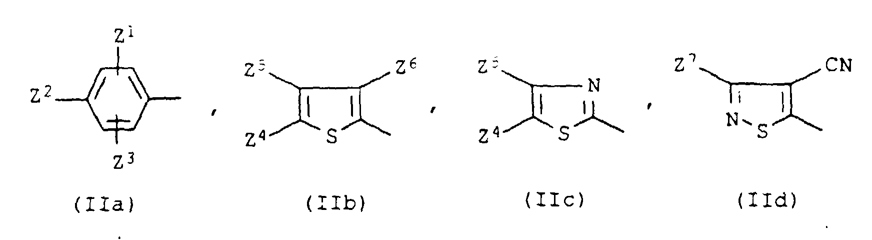 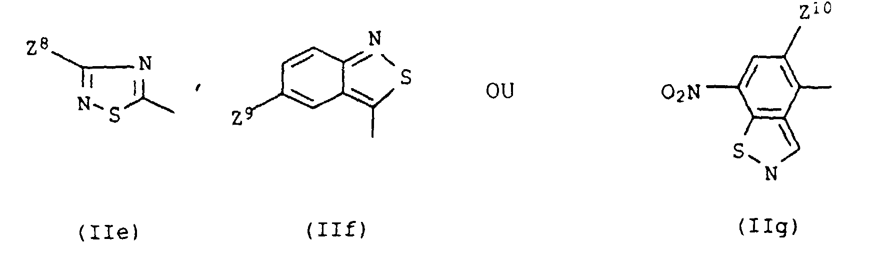 dans laquelle
Z¹ représente un atome d'hydrogène, un groupement nitro, cyano, un atome de chlore, de brome, un reste (alcoxy en C₁-C₄)carbonyle, phénylsulfonyle, phénoxysulfonyle ou di(alkyl en C₁-C₄)sulfamoyle,
Z² représente un atome d'hydrogène ou un reste nitro ou phénylazo éventuellement substitué par un groupement alkyle en C₁-C₄, alcoxy en C₁-C₄ ou par un atome de chlore,
Z³ représente un atome d'hydrogène, un groupement cyano, un atome de chlore, de brome, un reste (alcoxy en C₁-C₄)carbonyle, phénylsulfonyle, phénoxysulfonyle ou di(alkyl en C₁-C₄)sulfamoyle,
Z⁴ représente un reste cyano, formyle, (alcoxy en C₁-C₄)carbonyle, phénylcarbamoyle, phénylazo éventuellement substitué par un groupement alkyle en C₁-C₄, ou un reste de formule 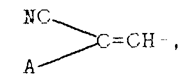 dans laquelle A est mis pour un reste
cyano ou (alcoxy en C₁-C₄)carbonyle,
Z⁵ représente un atome d'hydrogène ou un reste alkyle en C₁-C₄, alcoxy en C₁-C_{4,} phényle qui est éventuellement substitué par un groupement méthyle, méthoxy, par un atome de chlore ou par un groupement (alcoxy en C₁-C₄)carbonyle, un atome de chlore, de brome ou un reste (alcoxy en C₁-C₄)carbonyle, ou Z⁴ et Z⁵ forment ensemble un reste benzo éventuellement substitué par un groupement methoxy, thiocyanato ou alkylsulfonyle en C₁-C₄,
Z⁶ représente un reste cyano ou (alcoxy en C₁-C₄)carbonyle,
Z⁷ représente un reste alkyle en C₁-C₄ qui est éventuellement substitué par un groupement alcoxy en C₁-C₄ ou phénoxy, un reste phényle qui est éventuellement substitué par un groupement méthyle, méthoxy ou par un atome de chlore, un reste benzyle qui est éventuellement substitué par un groupements méthyle, méthoxy ou par un atome de chlore, un reste thiényle ou cyano,
Z⁸ représente un reste phényle ou éthylthio substitué par un groupement cyano ou (alcoxy en C₁-C₄)carbonyle,
Z⁹ représente un atome d'hydrogène ou un reste nitro ou cyano et
Z¹⁰ représente un atome d'hydrogène, de chlore, de brome ou un reste nitro ou cyano.

3. Mélanges de colorants selon la revendication 1, caractérisés en ce qu'ils contiennent 4 à 8 colorants de formules Ia et Ib de même couleur.

4. Mélanges de colorants selon la revendication 1, caractérisés en ce qu'il est toujours présent, dans les mélanges, des colorants de formules Ia et Ib dans l'une et l'autre desquelles R³ est mis en même temps pour un atome d'hydrogène et un reste alcanoyle en C₁-C₃.

5. Mélanges de colorants selon la revendication 1, caractérisés en ce que R⁴ est mis pour un reste méthyle.

6. Mélanges de colorants selon la revendication 1, caractérisés en ce que R³ est mis pour un atome d'hydrogène, un reste alkyle en C₁-C₄ ou alcanoyle en C₁-C₂ et L est mis pour un reste alkylène en C₃-C₈ qui est interrompu par 1 ou 2 atomes d'oxygène en fonction éther.

7. Mélanges de colorants selon la revendication 1, caractérisés en ce que R³ est mis pour un atome d'hydrogène, un reste alkyle en C₁-C₂ ou un reste formyle.

8. Mélanges de colorants selon la revendication 1, caractérisés en ce que R³ est mis pour un reste formyle ou un mélange de restes formyle et acétyle dans un rapport molaire de 1:9 à 9:1.

9. Mélanges de colorants selon la revendication 2, caractérisés en ce que D représente un reste anthraquinon-1-yle ou un reste de formule IIa, IIb, IIc ou IId.

10. Procédé de préparation des mélanges de colorants selon la revendication 1, caractérisé en ce que l'on dissout un mélange des composants de copulation de formules IIIa et IIIb 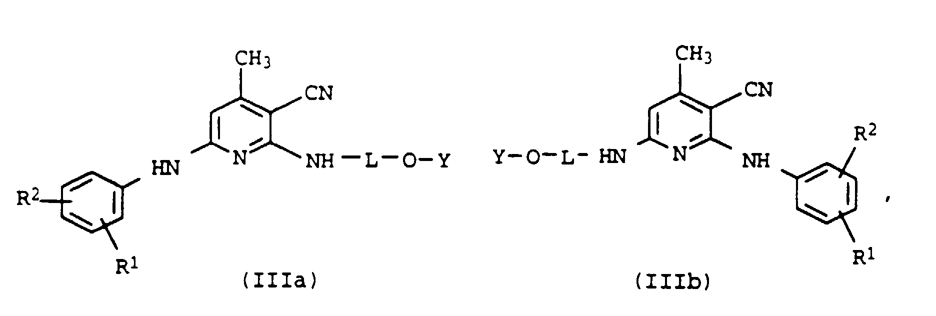 dans lesquelles L, R¹ et R² ont chacun la signification donnée dans la revendication 1 et Y représente chaque fois un atome d'hydrogène ou un reste alkyle en C₁-C₄, dans de l'acide formique, de l'acide acétique, de l'acide propionique contenant chacun éventuellement de l'eau ou dans un mélange de ces acides, et on traite ce mélange par un sel de diazonium qui dérive d'une amine de formule IV
D - NH₂ (IV)
dans laquelle D a la signification donnée dans la revendication 1.

11. Utilisation des mélanges de colorants selon la revendication 1 pour la teinture ou l'impression de matières textiles.
